(19) Europäisches Patentamt
European Patent Office
Office européen des brevets

(11) **EP 3 528 443 B1**

(12) **FASCICULE DE BREVET EUROPEEN**

(45) Date de publication et mention
de la délivrance du brevet:
**09.09.2020   Bulletin 2020/37**

(51) Int Cl.:
***H04L 25/03*** *(2006.01)*   ***H04L 25/06*** *(2006.01)*

(21) Numéro de dépôt: **19156763.5**

(22) Date de dépôt: **12.02.2019**

(54) **PROCÉDÉ POUR CALCULER UNE ESTIMATION D'UN SIGNAL NUMÉRIQUE MODULE ET DE SA FIABILITÉ**

VERFAHREN ZUM BERECHNEN EINES SCHÄTZWERTS EINES MODULIERTEN DIGITALEN SIGNALS UND SEINER ZUVERLÄSSIGKEIT

METHOD FOR CALCULATING AN ESTIMATE OF A MODULATED DIGITAL SIGNAL AND ITS RELIABILITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.02.2018   FR 1800146**

(43) Date de publication de la demande:
**21.08.2019   Bulletin 2019/34**

(73) Titulaires:
  • **Thales**
    **92400 Courbevoie (FR)**
  • **Institut National Polytechnique de Toulouse (INPT)**
    **31029 Toulouse Cedex 4 (FR)**
  • **CENTRE NATIONAL DE LA RECHERCHE SCIENTIFIQUE**
    **75016 Paris (FR)**

(72) Inventeurs:
  • **SAHIN, Serdar**
    **92622 GENNEVILLIERS CEDEX (FR)**
  • **CIPRIANO, Antonio**
    **92622 GENNEVILLIERS CEDEX (FR)**
  • **POULLIAT, Charly**
    **31071 TOULOUSE CEDEX 7 (FR)**
  • **BOUCHERET, Marie-Laure**
    **31071 TOULOUSE CEDEX 7 (FR)**

(74) Mandataire: **Dudouit, Isabelle et al**
    **Marks & Clerk France**
    **Conseils en Propriété Industrielle**
    **Immeuble " Visium "**
    **22, avenue Aristide Briand**
    **94117 Arcueil Cedex (FR)**

(56) Documents cités:
  • **WU KUN ET AL: "Spectral-Efficient Band Allocation Scheme for Frequency-Domain Pulse-Shaping-Based SC-FDMA Systems", IEEE TRANSACTIONS ON VEHICULAR TECHNOLOGY, IEEE SERVICE CENTER, PISCATAWAY, NJ, US, vol. 66, no. 9, 1 septembre 2017 (2017-09-01), pages 8249-8262, XP011660834, ISSN: 0018-9545, DOI: 10.1109/TVT.2017.2683802 [extrait le 2017-09-19]**
  • **SANTOS IRENE ET AL: "Block expectation propagation equalization for ISI channels", 2015 23RD EUROPEAN SIGNAL PROCESSING CONFERENCE (EUSIPCO), EURASIP, 31 août 2015 (2015-08-31), pages 379-383, XP032836367, DOI: 10.1109/EUSIPCO.2015.7362409**

**Description**

L'invention concerne un procédé pour améliorer le calcul de l'estimation des symboles d'un signal numérique modulé et de leur fiabilité, pour toute tâche qui nécessite une telle estimation. Dans le cadre des communications numériques, elle peut être utilisée pour des récepteurs de communication sans fil, ou pour des récepteurs de communications filaires. Par exemple, l'estimation des symboles présentée ici peut être utilisée pour dériver une estimation du canal (ou de certains de ses paramètres) entre l'émetteur et le récepteur. Elle peut être utilisée pour dériver une estimation des paramètres du signal ou du récepteur comme, par exemple, le décalage d'horloge, ou l'instant de réception du signal. Elle peut être utilisée aussi pour dériver des métriques de qualité du lien, comme par exemple l'information mutuelle entre les symboles émis et ceux reçus, la fiabilité de l'estimée du signal envoyé, le rapport signal sur bruit ou signal sur bruit plus interférence. Ces métriques sont utilisées avec différentes finalités, comme l'adaptation du lien, par exemple l'adaptation des paramètres d'une chaine de transmission, ou alors à la réception pour optimiser le point de fonctionnement du récepteur ou d'un ou plusieurs de ses blocs fonctionnels internes, en choisissant les bons algorithmiques et les paramétrages les plus adaptés, en fonction de la flexibilité du récepteur même.

L'invention concerne aussi un procédé pour supprimer des interférences au sein d'un signal reçu sur un récepteur. Elle s'applique notamment à de l'égalisation avec un récepteur adaptatif de type égaliseur à retour de décision ou DFE (Digital Feedback Equalizer) permettant une égalisation des symboles reçus.

Le domaine de l'invention est celui des systèmes de communications numériques par voie radio et entre autres les émetteurs et les récepteurs de communications multivoies, c'est-à-dire comprenant plusieurs antennes.

L'invention concerne également les systèmes multi-utilisateurs dans lesquels les ressources de communications sont partagées entre plusieurs utilisateurs qui peuvent communiquer simultanément par un partage de bandes fréquentielles ou de créneaux ou slots temporels.

Plus généralement, l'invention concerne tous les systèmes de communication multi-utilisateurs dans lesquels de forts niveaux d'interférences sont générés à la fois entre des émetteurs associés à des utilisateurs différents mais également entre les symboles véhiculés par un signal transmis par un utilisateur du fait des perturbations inhérentes au canal de propagation.

Afin de supprimer ou au moins limiter l'interférence générée sur le signal reçu, il est connu de mettre en œuvre un procédé de suppression d'interférence au sein du récepteur. Cette fonctionnalité a pour but de nettoyer le signal reçu des diverses sources d'interférences avant son décodage.

Dans ce contexte, l'invention concerne précisément le domaine de la suppression d'interférence dans un contexte multi-utilisateurs dans le cadre des récepteurs itératifs, qui consiste en l'itération des fonctions de suppression d'interférence et de décodage dans l'objectif final d'améliorer le taux d'erreur bit ou le taux d'erreur paquet sur les symboles décodés.

L'invention trouve entre autres son application dans les systèmes de communication cellulaires tels que le système 3GPP LTE.

L'invention vise également une méthode d'égalisation dans le domaine fréquentiel et qui soit flexible, adaptée à un contexte soit mono-utilisateur, soit multi-utilisateurs et avec un récepteur mettant en œuvre un traitement soit non-itératif, soit itératif.

Un transfert d'information d'une source à une destination implique la propagation par un canal qui peut être, par exemple, un canal radio, un canal filaire (tel qu'un câble coaxial), etc. Certains moyens de propagation génèrent une interférence dite inter-symbole sur le signal reçu. Autrement dit, le signal reçu échantillonné à un instant donné, après compensation des retards de propagation et de traitement, et ayant une synchronisation correcte, ne contient pas seulement le symbole envoyé (éventuellement amplifié et avec une perturbation de phase) plus du bruit, mais un mélange ou combinaison linéaire de symboles envoyés.

Il est usuel dans ce cas d'utiliser des algorithmes d'égalisation pour réduire l'effet parasite de l'interférence inter-symbole (ISI). De nombreuses méthodes d'égalisation sont décrites dans l'art antérieur. L'objectif est d'atteindre des performances optimales données par la borne du filtre adapté (qui est une borne inférieure sur le taux d'erreur paquet) tout en étant facile d'utilisation. Les algorithmes doivent donc avoir une complexité de calcul, une occupation de mémoire et une latence de traitement compatibles, à la fois aux applications qui utilisent les récepteurs en question et aux contraintes des plateformes matérielles sur lesquelles ils sont implémentés. Le problème technique posé est donc de trouver des algorithmes qui trouvent un bon compromis performances/complexité d'implémentation par rapport aux applications visées.

Il existe plusieurs classes d'égaliseurs : les égaliseurs linéaires, les égaliseurs à retour de décision (DFE ou Decision Feedback Equalizers), les égaliseurs à effacement d'interférences (Interference Cancellation) et les détecteurs du maximum a posteriori (Maximum A Posteriori - MAP), ou des détecteurs qui estiment une séquence au maximum de vraisemblance (Maximum Likelihood Sequence Estimation - MLSE). Ces égaliseurs peuvent être déclinés en forme itérative. Des récepteurs itératifs particuliers sont les récepteurs dits « turbo », où il existe un échange réitéré d'information probabiliste extrinsèque entre blocs de traitements, par exemple entre le bloc d'égalisation et le bloc de décodage.

Dans le domaine des égaliseurs itératifs, les égaliseurs de l'état de l'art peuvent se distinguer en fonction du type de signal de retour :

- Retour dur (DFE conventionnel) ou souple à partir du démodulateur ou du décodeur de canal [13],
- Retour extrinsèque du décodeur de canal [2],
- Retour a posteriori du décodeur de canal [14].

Ces types de récepteurs élémentaires ont été étendus à des cas de signaux soumis à interférences inter-symboles, inter-antennes ou inter-utilisateurs [12].

Plus en détail, la structure de l'égaliseur DFE fréquentiel classique a été présentée dans la référence [13] et étendue au cas d'égaliseur fractionnel dans [8]. Ces articles présentent des égaliseurs sans boucle turbo, où le signal de retour est soit de type classique dur, soit souple et calculé avec la probabilité a posteriori sur le signal égalisé. Les égaliseurs de type fréquentiel ont été ensuite étendus pour prendre en compte un signal de retour calculé à partir de probabilités extrinsèques fournies par le décodeur, il s'agit des égaliseurs de type « turbo », voir par exemple [2]. Dans l'article [14] les auteurs montrent sur un cas de détecteur linéaire pour des systèmes multi-antennaires (on traite ici l'interférence entre antennes) qu'un signal de retour calculé à partir de probabilités a posteriori fournies par le décodeur peut améliorer les performances du système par rapport à un signal de retour calculé sur les probabilités extrinsèque. Les auteurs de l'article [12] appliquent les retours extrinsèques en provenance du décodeur à un cas de transmissions sans fil multiutilisateurs où les émetteurs sont dotés d'antennes multiples et appliquent un code espace-temps. Thomas Minka propose dans son rapport technique [3] la propagation d'espérance (Expectation Propagation - EP - en anglais), une technique de l'inférence bayésienne, qui est un algorithme itératif pour l'estimation de densité de probabilité a posteriori. Cette méthode mathématique générique peut être utilisée pour approximer la solution d'un problème de maximisation de la probabilité a posteriori ou MAP de façon itérative. La propagation d'espérance EP peut aussi être vue comme un algorithme de passage de messages connu sous l'expression anglo-saxonne « message passing », en particulier comme une généralisation de l'algorithme de propagation de croyance (Belief Propagation - BP - en anglais) aux cas de distributions de probabilité non-catégoriques mais appartenant à la famille exponentielle. En particulier, ce concept permet d'effectuer un meilleur « message passing » avec des estimateurs à erreur quadratique moyenne minimum (Minimum Mean Square Error - MMSE). Dans le domaine des communications numériques et en particulier des récepteurs turbo, le concept « d'expectation propagation » permet de calculer un type de retour souple différent. En particulier, la référence [6] utilise ce nouveau retour souple dans le cadre d'un récepteur à entrées multiples sorties multiples, (Multiple-Input Multiple-Output - MIMO), ce qui permet de mieux approcher les performances MAP. Dans le cadre de l'égalisation simple, la référence [17] étudie un signal de retour basé sur le concept de l'EP à partir du démodulateur souple, pour les égaliseurs linéaires par bloc dans le domaine temporel. La solution décrite dans [17] nécessite l'inversion de matrices qui ont potentiellement une grande taille et donc avec une complexité computationnelle et mémorielle non négligeable. Dans le cadre de la turbo-égalisation la référence [15] est une extension de la référence [17], avec ses défauts en termes de complexité. Les auteurs de [15] proposent une structure avec une double boucle (égaliseur/démodulateur, démodulateur/décodeur), qui a des performances sous-optimales puisque les auteurs négligent dans le démodulateur souple la combinaison de l'information en provenance du décodeur avec celle en provenance de l'égaliseur.

La référence [16] traite de l'égalisation fréquentielle avec EP dans le cas multi-utilisateurs où les émetteurs mobiles sont équipés d'une seule antenne de transmission. Dans une des approches proposées, le retour EP est calculé sur une distribution Gaussienne coloré, c'est-à-dire, en laissant chaque symbole estimé au démodulateur avoir une mesure de fiabilité propre à lui. Cela contraint le récepteur fréquentiel à avoir une structure très complexe, nécessitant l'inversion d'une matrice pleine à chaque bloc de données. Un récepteur alternatif moins complexe est aussi dérivé, avec une hypothèse de moindres carrés, mais l'égaliseur devient alors inutilisable dès lors que le canal de propagation présente des zéros spectraux.

Les méthodes connues de l'art antérieur ne permettent pas de prendre en compte un ou plusieurs des problèmes listés ci-après, ou encore conjointement, les aspects suivants :

- La mise en œuvre d'une chaîne de réception numérique itérative qui inclut un récepteur adaptatif à suppression d'interférence qui transforme le canal de propagation en un canal équivalent à bruit additif Gaussien,
- Le récepteur adaptatif à suppression d'interférence est auto-itéré avec un démodulateur qui lui fournit un retour qui est une estimation du signal transmis,
- Le calcul d'un retour de type propagation d'espérance au sein du démodulateur souple, sur une distribution gaussienne blanche, c'est-à-dire où l'ensemble des symboles estimés du bloc de données est caractérisé par une seule mesure de fiabilité,
- L'utilisation d'un procédé de lissage adaptatif sur les symboles estimés par le retour EP, et sur la variance caractérisant la fiabilité ce retour. Ce procédé permet de choisir un compromis entre la robustesse des estimations et la vitesse de convergence du procédé itératif,

- L'utilisation éventuelle d'une technique de protection supplémentaire contre des estimations erronées, en remplaçant le retour EP par un retour a posteriori, suivant la valeur de la fiabilité des estimés EP.

La prise en considération conjointe de ces points permet alors l'utilisation d'un démodulateur souple à retour EP blanchi pour adresser directement les problématiques suivantes (entre autres) :

- La mise en œuvre d'un récepteur traitant l'interférence entre symboles dans le domaine fréquentiel,
- La mise en œuvre d'un récepteur fractionnaire qui traite de l'égalisation fréquentielle du canal avec un facteur de sur-échantillonnage,
- La mise en œuvre d'un récepteur fréquentiel avec recouvrement de blocs de données, où le retour EP est par ailleurs utilisé pour la réduction de l'interférence entre blocs,
- L'utilisation des retours EP au sein d'un détecteur multi-utilisateur et où les utilisateurs peuvent être équipés d'un nombre variable (une ou plusieurs) d'antennes de transmission. Le retour EP blanchi est alors utilisé pour traiter l'interférence entre utilisateurs et l'interférence multi-antennaire, en plus de l'interférence entre symboles.

La suite de la description fait appel aux notations suivantes :

x dénote un scalaire;

**x** dénote un vecteur;

**X** dénote une matrice;

$[X_i]_{i=1..N}$ est le vecteur contenant les coefficients $x_i$;

$\left[\mathbf{X}_{i,j}\right]_{\substack{i=1\ldots R \\ j=1\ldots M}}$ est une matrice par bloc qui contient les matrices $\mathbf{X}_{i,j}$;

$\mathbf{x}^T$ est le vecteur transposé de **x** (pareil pour les matrices);

$\mathbf{x}^*$ est le vecteur conjugué de **x** (pareil pour les matrices);

$\mathbf{x}^H$ est le vecteur hermitien, c'est-à-dire le vecteur transposé et conjugué, de **x** (pareil pour les matrices);

$\bar{\mathbf{x}}$ dénote la représentation en domaine fréquentielle du vecteur **x** ;

$\bar{\mathbf{X}}$ dénote la représentation en domaine fréquentielle de la matrice **X** ;

$tr(\mathbf{X})$ est la trace de la matrice **X;**

$\otimes$ dénote le produit de Kronecker;

$\odot$ dénote le produit terme à terme entre deux vecteurs ($c = a \odot b$ est tel que $c_n = a_n b_n$), aussi appelé produit matriciel de Hadamard, ou produit de Schur ;

$circ(\mathbf{x})$ est une matrice circulante avec première colonne égale à **x**;

$diag(\mathbf{x})$ est une matrice diagonale avec les coefficients **x** sur sa diagonale;

**b** : vecteur des bits d'information ;

**d** : vecteur des bits codés et entrelacés ;

$$E_{\mathcal{P}}[x]:$$

: espérance de x selon la distribution de probabilités $\mathcal{P}$,

$$E_{\mathcal{P}}[x] =$$

$$\sum_{\alpha \in \chi} \alpha \mathcal{P}(\alpha) \ ;$$

$F_M$: la matrice de transformée de Fourier de taille $M \times M$, l'entrée $k, l$ de la matrice est

$$[\boldsymbol{F}_M]_{k,l} = \frac{1}{\sqrt{M}} exp\left(-\frac{2j\pi kl}{M}\right),$$

$k = 0, ...,M - 1$ et $l = 0, ...,M - 1$. L'inverse de la matrice de transformée de Fourier coïncide avec sa transposée conjugué : $\boldsymbol{F}_M^H$ ;

$I_N$ : matrice identité de taille $NxN$ ;

$M$ : taille d'un vecteur de données à égaliser, correspondant aussi à la taille de FFT dans un émetteur de type SC-

FDMA ;

$\mathcal{M}_1$ : fonction d'étiquetage binaire d'un symbole de la constellation ;

$N$ : taille de la IFFT dans un émetteur de type SC-FDMA, correspondant au nombre total de sous-porteuses du modulateur/démodulateur. Cela aussi est équivalent au nombre d'échantillons temporels ;

$R$ : nombre d'antennes de réception ;

$s$ : identifiant entier de l'auto-itération (entre 0 et $\mathcal{S}_\tau$) ;

$\mathcal{S}_\tau$ : nombre d'auto-itérations du récepteur (nombre entier égal ou supérieur à zéro) pour la $\tau$-ième turbo-itération ;

$\tau$ : identifiant entier de la turbo-itération (entre 0 et $\mathcal{T}$) ;

$\mathcal{T}$ : nombre de turbo-itérations du récepteur (nombre entier égal ou supérieur à zéro) ;

$T_u$ : nombre d'antenne de transmission de l'utilisateur $u$ ;

$U$ : nombre d'utilisateurs (notamment d'émetteurs) ;

$\bar{v}$ : fiabilité globale de l'estimation $\bar{x}$ ;

$$Var_{\mathcal{P}}[x] :$$

: variance de $x$ selon la distribution de probabilité $\mathcal{P}$,

$$Var_{\mathcal{P}}[x] =$$

$$E_{\mathcal{P}}[|x - E_{\mathcal{P}}[x]|^2] ;$$

$X_u$ : constellation des symboles de l'utilisateur $u$ ;

$\bar{x}$ : estimation du symbole transmis x fournie par le démodulateur ;

$\hat{x}$ : estimation du symbole transmis x fournie par le récepteur adaptatif à suppression d'interférence ;

$\underline{\Sigma}_w$ : la matrice de covariance du bruit dans le domaine fréquentiel

Dans la suite de la description l'expression « division gaussienne » fait référence à une division entre deux fonctions de densité de probabilité gaussiennes, avec une « normalisation » de la fonction résultante afin que cette dernière soit encore une fonction de densité de probabilité gaussienne. Pour décrire cette opération dans le cas gaussien, il suffit de calculer la moyenne et la variance de la densité de probabilité résultante à partir des moyennes et variances des deux densités de probabilité considérées.

L'invention concerne un procédé pour améliorer l'estimation des symboles d'un signal modulé et de la fiabilité de l'estimée, le signal comprenant un ou plusieurs blocs de données, comportant au moins les étapes suivantes exécutées au niveau d'un processeur :

- Une étape de calcul d'estimations souples du signal qui calcule les symboles estimés $\mu_m^{(\tau,s)}$ et leurs fiabilités $\gamma_m^{(\tau,s)}$ en utilisant en entrée des distributions de probabilité obtenues en normalisant les vraisemblances gaussiennes calculées en utilisant les symboles estimés $\widehat{x}^{(\tau,s)} = [\hat{x}_0^{(\tau,s)} \cdots \hat{x}_m^{(\tau,s)} \cdots \hat{x}_{M-1}^{(\tau,s)}]$ du bloc de données courant ainsi que leur fiabilité $\sigma_v^{2(\tau,s)}$, les symboles estimés $\mu_m^{(\tau,s)}$ du bloc étant caractérisés par une mesure de fiabilité moyenne $\overline{\gamma}^{(\tau,s)}$,

- Une étape de division gaussienne du signal estimé $\boldsymbol{\mu}^{(\tau,s)} = [\mu_0^{(\tau,s)} \cdots \mu_m^{(\tau,s)} \cdots \mu_{M-1}^{(\tau,s)}]$ par le signal estimé $\hat{x}^{(\tau,s)}$ pour générer une estimation souple du signal transmis $\bar{x}'^{(\tau,s+1)}_m$ et une variance extrinsèque (fiabilité) moyenne $\bar{v}'^{(\tau,s+1)}$ avec:

$$\bar{x}'^{(\tau,s+1)}_m = \frac{\mu_m^{(\tau,s)}\sigma_v^{2(\tau,s)} - \hat{x}_m^{(\tau,s)}\bar{\gamma}^{(\tau,s)}}{\sigma_v^{2(\tau,s)} - \bar{\gamma}^{(\tau,s)}}, \quad m = 0,\dots,M-1$$

$$\bar{v}'^{(\tau,s+1)} = \frac{\sigma_v^{2(\tau,s)}\bar{\gamma}^{(\tau,s)}}{\sigma_v^{2(\tau,s)} - \bar{\gamma}^{(\tau,s)}},$$

• Une étape de lissage adaptatif sur le signal estimé par la division gaussienne et sur les mesures de fiabilités, pour fournir une estimation $\bar{x}^{(\tau,s+1)}$ du signal transmis et une mesure de fiabilité $\bar{v}^{(\tau,s+1)}$ associée.

Selon une variante de réalisation, on calcule une estimation souple du signal transmis $\bar{x}'^{(\tau,s+1)}_m$ et une variance extrinsèque $\bar{v}'^{(\tau,s+1)}$:

$$\bar{x}'^{(\tau,s+1)}_m = \mu_m^{(\tau,s)} \text{ pour } \sigma_v^{2(\tau,s)} \leq \bar{\gamma}^{(\tau,s)} + \varepsilon, \quad m = 0,\dots,M-1$$

$$\bar{v}'^{(\tau,s+1)} = \bar{\gamma}^{(\tau,s)} \text{ pour } \sigma_v^{2(\tau,s)} \leq \bar{\gamma}^{(\tau,s)} + \varepsilon,$$

avec $\varepsilon \geq 0$. Selon une variante de réalisation, le procédé comporte en plus :

- Une étape de calcul de distributions a priori du signal transmis à partir d'entrées/sorties souples binaires,
- Une étape de calcul d'estimations souples du signal transmis en utilisant en entrée des distributions de probabilité a posteriori, calculées à partir des vraisemblances gaussienne du signal estimé $\hat{x}^{(\tau,s)}$ et les distributions a priori calculées à l'étape précédente, ladite estimation est caractérisée par une mesure de fiabilité moyenne $\bar{\gamma}^{(\tau,s)}$.

Le procédé peut aussi comporter :

- Une étape de décodage par un décodeur binaire à entrées/sorties souples,
- Une étape d'initialisation du démodulateur souple, en calculant une estimation a priori du signal transmis, ladite estimation étant caractérisée par une fiabilité moyenne $\bar{v}^{(\tau,0)}$,
- Lesdites valeurs d'estimation a priori et de fiabilité moyenne calculée représentant des valeurs de sortie et/ou étant utilisées pour initialiser l'étape de lissage adaptatif.

Selon une variante de réalisation, le procédé comprend en outre une étape de désentrelacement et d'entrelacement des informations souples sur le signal transmis, lors de l'échange itératif entre un démodulateur souple et un décodeur binaire à entrées/sorties souples.

Le procédé est utilisé pour la suppression d'interférence au sein d'un signal issu d'au moins un émetteur reçu sur un récepteur comprenant une ou plusieurs antennes, ledit signal comprenant un ou plusieurs blocs de données et comporte en outre les étapes suivantes :

- Une étape de calcul des paramètres du récepteur, en utilisant la connaissance du canal,
- Une étape de traitement du signal reçu par un récepteur à suppression d'interférence qui génère une autre estimation $\hat{x}^{(\tau,s)}$ du signal transmis en utilisant une estimation préalable $\bar{x}^{(\tau,s+1)}$ du signal transmis $\boldsymbol{x}$ et la connaissance du canal, l'estimation du signal étant effectuée par le récepteur à suppression d'interférence,
- Le calcul de la fiabilité $\sigma_v^{2(\tau,s)}$ de l'estimation du signal transmis $\hat{x}$ obtenue par le récepteur à suppression d'interférence, en utilisant les paramètres du récepteur,
- Une étape d'échange itératif des estimations du signal transmis, entre le récepteur à suppression d'interférence et le démodulateur souple,
- Une étape de calcul d'information souple sur les bits du signal transmis, faite à partir du signal démodulé.

Le procédé peut aussi comporter les étapes suivantes :

- Une étape de calcul des paramètres du récepteur adaptatif, en utilisant la connaissance du canal et la fiabilité des retours souples du démodulateur,
- Une étape d'échange itératif des fiabilités des estimations du signal transmis entre le bloc qui calcule les paramètres du récepteur adaptatif et le démodulateur souple.

Selon une variante de réalisation, le procédé pour supprimer l'interférence au niveau d'un signal comporte les étapes suivantes :

- Une étape d'estimation des paramètres du canal entre l'émetteur et le récepteur en utilisant le signal reçu,
- Une étape de calcul des paramètres du récepteur adaptatif ou non, en utilisant l'estimation des paramètres du canal et la fiabilité des retours souples du démodulateur,
- Une étape d'échange itératif des fiabilités des estimations du signal transmis entre le bloc qui calcule les paramètres du récepteur adaptatif et le démodulateur souple.

Le procédé peut comprendre en outre une étape itérative d'estimation des paramètres du canal, en utilisant l'estimation souple du signal transmis et sa fiabilité en provenance du démodulateur souple, conjointement avec le signal reçu.

L'étape de traitement du signal reçu par un récepteur à suppression d'interférence et l'étape de calcul de ses paramètres comprennent, par exemple:

- Une étape de conversion du signal reçu dans le domaine fréquentiel,
- Une étape de calcul des paramètres de l'égaliseur dans le domaine fréquentiel, qui réalise les fonctions du bloc,
- Une étape d'égalisation linéaire à suppression d'interférence dans le domaine fréquentiel, paramétrée selon les sorties obtenues lors du calcul des paramètres de l'égaliseur dans le domaine fréquentiel,
- Une étape de conversion du signal traité dans le domaine temporel,
- Une étape de conversion dans le domaine fréquentiel de l'estimation souple du signal transmis fournie par le démodulateur souple.

L'étape de traitement du signal reçu par un récepteur à suppression d'interférence et l'étape de calcul de ses paramètres comprennent, par exemple:

- Une étape de séparation du signal reçu $y$ en P segments $y_p$ de $N_p$ symboles chacun, avec recouvrement, $p = 1, ...,P$.
- Une étape de conversion de chacun de segments du signal reçu dans le domaine fréquentiel,
- Une étape du calcul des paramètres des P égaliseurs dans le domaine fréquentiel, qui réalise les fonctions du bloc,
- Une étape d'égalisation linéaire à suppression d'interférence dans le domaine fréquentiel de chacun des segments, paramétrée selon les sorties obtenues lors du calcul des paramètres des P égaliseurs dans le domaine fréquentiel,
- Une étape de conversion de chacun des signaux traités dans le domaine temporel, et d'extraction des symboles non recouverts pour obtenir une estimation $\hat{x}$,
- Une étape de conversion dans le domaine fréquentiel de l'estimation souple du signal transmis fournie par le démodulateur souple.

Le calcul des paramètres des P égaliseurs dans le domaine fréquentiel peut utiliser la connaissance de la statistique de l'interférence entre segments, estimée à partir de la fiabilité des retours du démodulateur souple.

L'interférence résiduelle entre segments est régénérée, par exemple, en utilisant les retours du démodulateur souple, et soustraite de chacun des P segments $y_p$, avant l'étape de conversion dans le domaine fréquentiel.

Selon un mode de réalisation l'étape de traitement du signal reçu par un récepteur à suppression d'interférence et l'étape de calcul de ses paramètres comprennent:

- Un sur-échantillonnage du signal reçu avec un facteur de sur-échantillonnage o,
- Une étape de conversion en fréquence du signal reçu suréchantillonné,
- Une étape de calcul du filtre de l'égaliseur dans le domaine fréquentiel suréchantillonné,
- Une étape d'égalisation linéaire à suppression d'interférence dans le domaine fréquentiel suréchantillonné selon la sortie obtenue lors du calcul des paramètres de l'égaliseur dans le domaine fréquentiel suréchantillonné,
- Une étape de conversion du signal traité dans le domaine temporel, suivi d'un échantillonneur de facteur d'échantillonnage o égal au facteur de sur-échantillonnage du signal reçu.
- Une étape d'interpolation idéale de l'estimation souple du signal transmis fournie par le démodulateur souple par un facteur de suréchantillonnage o égal à celui du signal reçu (cela consiste en l'ajout de o - 1 zéros entre deux échantillons), suivi d'une conversion dans le domaine fréquentiel suréchantillonné.

Le procédé est utilisé pour supprimer des interférences au sein d'un signal reçu sur un récepteur de type SC-FDMA ou SS-SC-FDMA comprenant une étape de mise en trame utilisant respectivement une modulation SC-FDMA ou SS-SC-FDMA et une étape d'exécution du procédé selon l'invention.

Le procédé peut aussi être utilisé pour supprimer des interférences au sein d'un signal reçu sur un récepteur de type SC ou SS-SC comprenant une étape de mise en trame utilisant respectivement une modulation SC ou SS-SC et une étape d'exécution du procédé selon l'invention.

L'invention concerne aussi un procédé pour supprimer des interférences au sein d'un signal reçu sur un récepteur de type OFDM ou OFDMA comprenant une étape de mise en trame utilisant respectivement une modulation OFDM ou OFDMA et une étape d'exécution du procédé selon l'invention dans lequel, l'étape de traitement du signal reçu par un récepteur à suppression d'interférence et l'étape de calcul de ses paramètres comprennent:

- Une étape de conversion du signal reçu dans le domaine fréquentiel,
- Une étape de calcul des paramètres de l'égaliseur dans le domaine fréquentiel, qui réalise les fonctions du bloc,
- Une étape d'égalisation linéaire à suppression d'interférence dans le domaine fréquentiel, paramétrée selon les sorties obtenues lors du calcul des paramètres de l'égaliseur dans le domaine fréquentiel.

Selon une variante, le procédé de suppression d'interférence comprend en outre:

- Une étape de génération du signal à l'émetteur selon un code espace-temps par blocs de type Alamouti ou autre code espace-temps par bloc de type orthogonal,
- Une étape d'estimation des paramètres des canaux entre les antennes de l'émetteur et celles du récepteur,
- Une étape du calcul des paramètres du récepteur dans le domaine fréquentiel, qui prennent en compte la structure du code espace-temps par blocs utilisé,
- Une étape d'égalisation linéaire à suppression d'interférence dans le domaine fréquentiel en utilisant les filtres obtenus lors du calcul des paramètres des égaliseurs dans le domaine fréquentiel, et qui combine les signaux reçus en entrée selon la méthode associé au code espace-temps par blocs utilisé par l'émetteur.

L'invention concerne aussi un procédé pour supprimer des interférences au sein des signaux issus d'un émetteur reçus sur un récepteur, dans un réseau de type MIMO où l'émetteur est doté de plusieurs antennes de transmissions et d'un entrelaceur qui répartit les bits codés sur les antennes disponibles, comprenant une étape d'exécution du procédé selon l'invention comprenant en outre :

- Une étape de traitement des signaux reçus en provenance des antennes de l'émetteur par un récepteur à suppression d'interférence, qui en utilisant ses paramètres et une estimation préalable des signaux transmis $\bar{x}_t$ par les antennes d'émission $t = 1, ..., T_1$, de l'utilisateur génère une autre estimation des signaux émis $\hat{x}_t$,
- Une étape du calcul des paramètres du récepteur qui prend en compte la présence de plusieurs antennes d'émission et les estimations des paramètres des canaux entre les antennes de l'émetteur et du récepteur,
- Une étape de démodulation souple où l'estimation du signal de chaque antenne d'émission est traitée indépendamment.

L'invention concerne aussi un procédé pour supprimer des interférences au sein des signaux issus de plusieurs émetteurs reçus sur un récepteur, dans un réseau de type MU-MIMO où les émetteurs sont dotés d'une ou plusieurs antennes de transmissions et d'un entrelaceur qui répartit les bits codés sur les antennes disponibles, comprenant une étape d'exécution du procédé selon l'invention comprenant:

- Une étape de traitement des signaux reçus en provenance des émetteurs par un récepteur à suppression d'interférence, qui en utilisant ses paramètres et une estimation préalable des signaux transmis $\bar{x}_{t,u}$ par les antennes d'émission $t = 1, ..., T_u$ des utilisateurs= 1, ..., U, génère une autre estimation des signaux émis $\hat{x}_{t,u}$,
- Une étape du calcul des paramètres du récepteur qui prend en compte la présence de plusieurs utilisateurs, éventuellement avec plusieurs antennes d'émission, et d'éventuelles estimations des paramètres des canaux entre les antennes des émetteurs et du récepteur,
- Une étape de démodulation souple où l'estimation du signal de chaque antenne d'émission de chaque utilisateur est traitée indépendamment,
- Une étape d'ordonnancement des utilisateurs à décoder selon un critère basé sur la puissance des signaux reçus, ou selon une métrique dérivée de la puissance des signaux reçus et de la fiabilité de leurs constellations, ou encore selon une métrique basée sur les écarts de puissances et fiabilité entre couples d'utilisateurs.

L'invention concerne aussi un récepteur comportant au moins une antenne pour recevoir un signal émis par au moins un émetteur caractérisé en ce qu'il comporte au moins :

- Un processeur configuré pour exécuter le procédé d'amélioration de calcul des symboles et leurs fiabilités selon l'invention, lesdits symboles étant utilisés pour la modulation d'un signal,
- Un module de calcul des vraisemblances gaussiennes ayant une sortie reliée à un bloc de normalisation, dont la sortie est reliée à un deuxième module d'estimations souples,
- Un deuxième module d'estimations souples transmettant ses estimés $\mu_m^{(\tau,s)}$ directement à un module de division gaussienne et ses fiabilités $\gamma_m^{(\tau,s)}$ à un dispositif effectuant une moyenne dont la sortie $\overline{\gamma}^{(\tau,s)}$ est reliée au module de division gaussienne,
- Un module de lissage adaptatif relié au module de division gaussienne et fournissant les estimés souples lissées $\overline{x}^{(\tau,s+1)}$ ainsi que leurs variances $\overline{v}^{(\tau,s+1)}$.

Le récepteur peut comporter un démodulateur souple comprenant au moins les éléments suivants :

- Un module de calcul des distributions a priori, ayant en entrée des rapports de vraisemblance LLR a priori et ayant une sortie reliée à un module de calcul de distributions a posteriori et au module de calcul d'estimations souples,
- Un deuxième module de calcul d'estimations souples, fournissant des estimés souples a priori $\overline{x}^{(\tau,0)}$ caractérisées par une fiabilité moyenne $\overline{v}^{(\tau,0)}$.

Le récepteur peut aussi comporter :

- Un module de sélection configuré pour sélectionner les estimés souples a priori $\overline{x}^{(\tau,0)}$ et leur variance, ou les estimés souples lissées $\overline{x}^{(\tau,s+1)}$ et leur variance en fonction du fait s'il s'agit ou pas de la première exécution (exécution d'initialisation) du démodulateur souple ayant en entrée du démodulateur souple les valeurs des rapports de vraisemblance LLRs a priori correspondantes aux estimées souples a priori $\overline{x}^{(\tau,0)}$.

D'autres caractéristiques et avantages de la présente invention apparaîtront mieux à la lecture de la description d'exemples de réalisation donnés à titre illustratif et non limitatif annexée des figures qui représentent :

- Figure 1, une vue du système mono-utilisateur avec émetteur et récepteur utilisant une seule antenne, SISO,
- Figure 2, un schéma-bloc avec une vue fonctionnelle d'un émetteur mono-antennaire,
- Figure 3, un schéma de la structure d'un turbo DFE dans le cas SISO, pour un système SC-FDMA,
- Figure 4, une structure d'égaliseur linéaire à suppression d'interférence,
- Figure 5, une structure du démodulateur souple,
- Figure 6 et figure 7 des courbes de performances obtenues dans le cas SISO,
- Figure 8, un schéma généralisant le récepteur turbo DFE à des modulations quelconques,
- Figure 9, une vue du système multi-utilisateurs,
- Figure 10, une vue d'un système multi-utilisateurs MIMO,
- Figure 11, un schéma bloc fonctionnel pour un émetteur multi-antennaire,
- Figure 12, un schéma de structure d'un turbo DFE dans le cas MU-MIMO, pour un système SC-FDMA,
- Figure 13, un démodulateur souple pour le cas MU-MIMO,
- Figure 14, le filtrage et le procédé de suppression des interférences dans le cas MU-MIMO, et
- Figure 15, un détail d'un bloc pour le démodulateur souple.

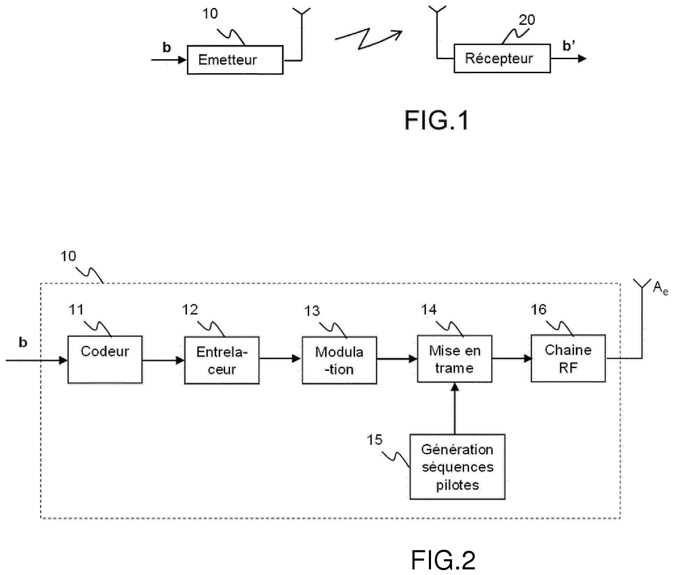

La technique de turbo égalisation consiste en l'itération entre la fonction d'égalisation, de démodulation souple (ici appelé aussi demapper ou demapping souple) et de décodage, généralement avec la finalité d'améliorer le taux d'erreur bit (Bit Error Rate - BER) ou le taux d'erreur paquet (Packet Error Rate - PER) tout en maitrisant la complexité du récepteur.
Afin de bien faire comprendre l'invention, la première variante de réalisation est donnée, à titre d'exemple non limitatif, dans le cas d'un système simple entrée simple sortie ou SISO (Single Input Single Output) illustré à la figure 1. Le système est constitué d'un émetteur 10 et d'un récepteur 20 tous les deux équipés d'une seule antenne à l'émission et à la réception.

L'émetteur mono-antennaire générique 10 pour l'application SISO est représenté en figure 2. L'émetteur 10 prend en entrée des bits d'information, **b,** les bits sont codés dans un codeur 11 avec un codeur correcteur d'erreur qui peut être un code convolutif, un turbo-code, ou un code à contrôle de parité à faible densité (Low-Density Parity-Check - LDPC) ou tout autre code pour lequel il existe un algorithme de décodage qui donne des informations souples. Les bits codés sont entrelacés avec un entrelaceur 12. Les bits entrelacés sont ensuite modulés par un modulateur 13. Le modulateur 13 fournit en sortie des symboles tirés d'une constellation $X$ Les symboles modulés sont transmis à un bloc de mise en trame 14 qui organise les données par blocs dans une trame et qui peut aussi insérer des séquences pilotes qui serviront, par exemple au récepteur, pour l'estimation du canal. Les séquences pilotes sont générées par un générateur de séquences pilotes 15. De plus, le bloc de mise en trame 14 implémente une méthode de périodisation partielle des blocs de données qui permet, à la réception, d'implémenter un égaliseur dans le domaine fréquentiel. Le signal mis en trame est transmis vers une chaîne radio fréquence RF, 16, pour émission par une antenne $A_e$.

Le bloc de mise en trame 14 peut utiliser une modulation à multiplexage par répartition orthogonale de la fréquence (Orthogonal Frequency Division Multiplexing -OFDM) avec un total de N sous-porteuses dont M sous-porteuses utilisées avec un préfixe cyclique (Cyclic Prefix - CP) et éventuellement un suffixe cyclique (Cyclic Suffix - CS). Le bloc de mise en trame peut aussi mettre en place une modulation OFDM à accès multiple, appelée dans la littérature OFDMA. Le bloc de mise en trame peut aussi mettre en place une modulation mono-porteuse à accès multiple par répartition en fréquence Single Carrier-Frequency Division Multiple Access (SC-FDMA), avec M le nombre de sous-porteuses utilisées pour le précodage avec une transformée de Fourier discrète (Discrete Fourier Transform - DFT). Ici aussi le CP et éventuellement le CS sont utilisés. Dans ce cadre, si $N = M$, l'émetteur implémente un signal mono-porteuse (Single Carrier - SC).

Les CP et CS peuvent être substitués par une séquence constante (par exemple des zéros, ou des séquences pilotes) ou évoluant d'une trame à l'autre (par exemple par un procédé pseudo-aléatoire connu des utilisateurs), ce qui permet d'obtenir encore un signal avec la bonne propriété de périodicité partielle sur les blocs de données étendus avec l'une de ces séquences. Il est aussi possible de considérer l'utilisation d'une modulation monoporteuse avec une mise-en-forme spectrale (Spectrally Shaped - Single Carrier - SS-SC) ou une modulation mono-porteuse avec une mise-en-forme spectrale à accès multiple par répartition en fréquence (Spectrally Shaped - Single Carrier - Frequency Division Multiple Access - SS-SC-FDMA), où le signal pourrait être filtré en temps, ou en fréquence, par un filtre de mise-en-forme, après l'ajout des CP/CS.

Sans sortir du cadre de l'invention, il est possible d'utiliser des constellations ayant une propriété de non-circularité (appelée aussi impropriété dans la littérature [1]. La non-circularité s'exprime formellement par le fait que si $x(n)$ est un symbole aléatoire de la constellation émis au temps n, alors l'espérance du symbole au carré est différente de zéro $E[x^2(n)] \neq 0$. La quantité $E[x^2(n)]$ est appelée aussi pseudo-covariance dans la littérature. Cette propriété s'étend aux signaux échantillonnés ou continus aussi. L'invention s'applique donc à des émetteurs utilisant des constellations complexes comme la modulation d'amplitude en quadrature (Quadrature Amplitude Modulation - QAM), la modulation par changement de phase ou Phase Shift Keying (PSK), la modulation par changement de phase et d'amplitude (Amplitude Phase Shift Keying - APSK) ; des constellations réelles, comme la modulation par changement de phase binaire ou « Binary Phase Shift Keying » (BPSK), ou les modulations en amplitude d'impulsion (Pulse Amplitude Modulation - PAM). La technique peut être appliquée aussi à des constellations tournées périodiquement comme la π/2-BPSK, où sur les symboles pairs on utilise une constellation BPSK classique {+1, -1} et sur les symboles impairs on utilise une constellation tournée de π/2 radians {+j, - j}, et plus généralement les constellations π/$M$-$M$PSK, où la rotation périodique est de π/$M$ radians. Il est aussi possible d'appliquer la technique décrite ici à des constellations appelées quasi-rectilignes, c'est-à-dire des constellations dont les symboles peuvent être obtenus par filtrage complexe d'un signal décrit par les symboles d'une constellation réelle. Des exemples sont la modulation par déplacement de fréquence minimum (Minimum Shift Keying - MSK), la modulation par déplacement de fréquence minimum gaussien (Gaussian Minimum Shift Keying - GMSK), les modulations de phase continues (Continuous Phase Modulation - CPM) avec alphabet binaire ou la modulation d'amplitude en quadrature décalée en quadrature (Offset Quadrature Amplitude Modulation - OQAM).

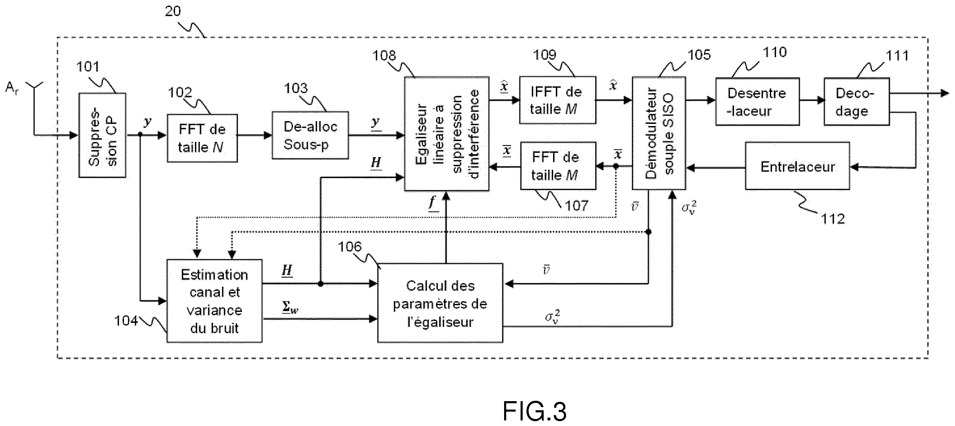

La figure 3 illustre un schéma fonctionnel du récepteur 20 dans le cas où le signal émis est obtenu avec une technique SC-FDMA avec préfixe CP. On suppose ici que le signal de l'émetteur est synchronisé au récepteur avec une précision adéquate (i.e. inférieure à la durée du CP, si ce dernier est présent) et qu'un algorithme de synchronisation a fourni l'instant de synchronisation au récepteur. Le signal fourni en entrée au bloc 101 est donc déjà synchronisé en temps et fréquence et à la bonne fréquence d'échantillonnage. Si dans la figure 3 on suppose qu'à l'émission un signal SS-SC-FDMA a été utilisé, et que le signal en entrée du bloc 101 a été aussi filtré par un filtre de mise en forme adapté à celui utilisé à l'émission (selon les méthodes connues par l'homme du métier), alors le récepteur peut être utilisé pour recevoir un signal de type SS-SC-FDMA. Dans la figure 3, si le bloc de dé-allocation des sous-porteuses 103 coïncide avec l'identité (c'est-à-dire s'il est transparent) et M = N, ce récepteur peut être utilisé dans un système SC avec CP. Dans ce même cas (bloc 103 supprimé et $M = N$), si le signal émis est un signal SS-SC et si le signal en entrée du bloc 101 a été aussi filtré par un filtre de mise en forme adapté à celui utilisé à l'émission (selon les méthodes connues par l'homme du métier), alors le récepteur peut être utilisé pour recevoir un signal de type SS-SC. Pour les deux derniers cas de signaux émis de type SC et SS-SC, si dans la figure 3 le bloc « suppression CP » est substitué par un bloc « Extraction du bloc de traitement » qui extrait les séquences connues (par exemple pour les utiliser pour estimer le canal) et les blocs de données à traiter, alors le récepteur peut recevoir des signaux SC et SS-SC avec des séquences pilotes connues à la place des CP et CS. De plus, si dans la figure 3 les blocs 109 et 107 sont supprimés (ou équivalemment s'ils implémentent la transformation identité), alors le récepteur est adapté à recevoir un signal de type OFDM ou OFDMA.

Le récepteur selon l'invention contient deux boucles de rétroaction. La première boucle est positionnée entre l'égaliseur DFE 108 et le démodulateur souple SISO 105. Dans la suite, le parcours de cette boucle est appelé « auto-itération » et un égaliseur qui utilise cette boucle est un « égaliseur auto-itéré ». La deuxième boucle se situe entre le démodulateur souple SISO 105 et le décodeur bloc « décodage » 111. Dans la suite, le parcours de cette boucle est désigné sous l'expression « turbo-itération » et un égaliseur qui utilise cette boucle est un « égaliseur turbo-itéré » ou un « turbo-égaliseur ».

Le récepteur 20 effectue un nombre

$$\mathcal{T} \geq 0$$

de turbo-itérations. Pour chaque turbo-itération donnée $\tau = 0, ..., \mathcal{T}$, le récepteur effectue un nombre

$$\mathcal{S}_\tau \geq 0$$

d'auto-itérations. Il est possible de configurer le récepteur avec la suite $\{\mathcal{T}, \mathcal{S}_0, ..., \mathcal{S}_{\mathcal{T}}\}$, soit au début de la réception du signal, soit dynamiquement pendant le traitement du signal ; les détails seront donnés plus loin dans la description. Par exemple prenons

$$\{\mathcal{T} = 3, \mathcal{S}_0 = 5, \mathcal{S}_1 =$$

$$3, \mathcal{S}_2 = 1, \mathcal{S}_3 = 1\},$$

cela veut dire que le récepteur effectue cinq auto-itérations lorsque $\tau = 0$ (sans avoir encore décodé le signal), trois auto-itérations quand $\tau = 1$ c'est-à-dire à la première turbo itération (après le premier passage dans le décodeur), et une auto-itération quand $\tau = 2$ ou 3, i.e., à la deuxième et troisième turbo itération. Un autre exemple d'intérêt pratique est obtenu avec

$$\{\mathcal{T} = 0, \mathcal{S}_0 > 0\}.$$

Dans ce cas l'invention réalise un égaliseur auto-itéré, de type DFE, qui est typiquement utilisé avec des informations a priori nulles au niveau du démodulateur souple. Les nombres d'auto-itérations ou de turbo-itérations règlent le compromis entre performances, complexité de calcul et mémoire nécessaire, au sein du récepteur.

Dans la suite de la description, les paramètres en entrée ou en sortie du turbo égaliseur, du calcul égaliseur et les paramètres du démodulateur souple, et du démodulateur souple, à l'exception des observations initiales et estimations initiales **y, H,** $\underline{\Sigma}_w$, dépendent de l'identifiant de la turbo-itération courante

$$\tau = 0, ..., \mathcal{T}$$

et éventuellement de l'identifiant de l'auto-itération courante

$$s = 0, ..., \mathcal{S}_\tau.$$

Par exemple, le filtre égaliseur $f^{(\tau, s)}$ indique le filtre utilisé à la turbo-itération $\tau$ et à l'auto-itération $s$. Ceci-dit, dans la suite, pour simplifier la notation, l'apex ne sera pas explicité, et nous nous référerons implicitement à la turbo-itération et auto-itération courante.

De plus, il convient d'initialiser les blocs au début du traitement de réception et au début de chaque turbo-itération, donc pour chaque

$$\tau =$$

$$0, \ldots, \mathcal{T}.$$

Dans cet exemple, la description est donnée pour un cas SC-FDMA, en sachant que les adaptations pour les autres cas cités précédemment peuvent être déduites par un homme du métier.

Après avoir extrait les blocs de données en provenance de l'antenne de réception $A_r$ du récepteur, à travers la suppression du CP dans le cas des systèmes SC avec CP ou du SC-FDMA, 101, les blocs de données passent à travers une transformation de Fourier rapide 102 (Fast Fourier Transform - FFT) de taille N (passage dans le domaine fréquentiel). Le signal en sortie de la FFT passe ensuite dans un bloc « De-alloc sous-p » 103 qui permet d'accéder aux M ressources fréquentielles (sous-porteuses) parmi N, à travers lesquelles le signal a été transmis. Ce bloc sélectionne seulement les sous-porteuses sur lesquelles le signal a été transmis (dé-allocation des sous-porteuses), et en sortie de ce dernier bloc de dé-allocation 103 le signal est représenté par un vecteur $\underline{y}$ de taille M, regroupant les sous-porteuses utilisés.

En parallèle, les séquences pilotes sont extraites des signaux provenant de l'antenne de réception $A_r$ et envoyées dans le bloc « Estimation des canaux et de la variance du bruit » 104. Elles sont utilisées pour calculer une estimation de la réponse fréquentielle du canal entre l'émetteur et le récepteur, sur les $M$ sous-porteuses d'intérêts (celles utilisées par l'utilisateur pour envoyer l'information). La réponse fréquentielle du canal entre l'émetteur et le récepteur est organisée dans un vecteur $\underline{h}$ de taille $M$, ou de façon équivalente, dans une matrice diagonale $\underline{H} = \text{diag}(\underline{h})$ de taille $M$ x M. Le bloc « Estimation des canaux et de la variance du bruit » 104 fournit aussi une estimation de la variance du bruit. Ce bruit contient la contribution du bruit thermique sur l'antenne de réception $A_r$ et d'éventuelles interférences dues à plusieurs effets parasites en provenance soit de traitements numériques, soit d'autres signaux extérieurs. Le bloc « Estimation des canaux et de la variance du bruit » fournit la matrice de covariance du bruit dans le domaine fréquentiel $\underline{\Sigma}_w$. Typiquement, on a une estimation de canal et de covariance du bruit par bloc de données.

Les traitements de la partie du récepteur où il y a la présence des deux boucles précitées sont alors activés.

Au tout premier passage ($\tau = 0$), ou à chaque début de turbo-itération (

$$\tau = 1, \ldots, \mathcal{T},$$

si

$$\mathcal{T} > 0,$$

), le bloc 105, démodulateur souple SISO, est activé pour une phase d'initialisation. Par convention cette phase est associée à l'indice d'auto-itération $s = -1$. Dans cette phase d'initialisation, le bloc 105 effectue plusieurs opérations : a) il vide ses registres internes ; b) il met à zéro les entrées du vecteur d'entrée $\hat{x}$ (signal égalisé) ; c) il pose $\sigma_v^2 = +\infty$ (ou autre valeur faisant office de l'infini). Puis le démodulateur souple SISO 105 regarde s'il y a une entrée d'information a priori en provenance du décodeur et plus précisément du bloc entrelaceur 112. Ensuite, il génère une l'estimation souple $\overline{x}$ et sa fiabilité correspondante $\overline{v}$. La sortie vers le bloc désentrelaceur 110, n'est pas calculée pendant la phase d'initialisation. A la toute première activation de la phase d'initialisation ($\tau = 0$) l'information a priori en provenance du bloc entrelaceur 112 correspond par convention à un vecteur de zéros. Ainsi, l'estimation souple $\overline{x}$ sera un vecteur nul et $\overline{v} = \sigma_x^2$, où $\sigma_x^2$ est l'énergie moyenne des symboles des constellations d'origine de l'utilisateur.

L'estimation du canal $\underline{H}$ et l'estimation de la matrice de covariance du bruit sont ensuite transmises au bloc « calcul des paramètres de l'égaliseur » 106. Ce bloc prend aussi en entrée la quantité $\overline{v}$ en provenance du demapping souple qui mesure la fiabilité moyenne des symboles envoyés par l'utilisateur à l'intérieur du bloc de données qui est en cours de traitement (la moyenne est donc sur la longueur de bloc $M$ dans le cas de l'exemple). Dans le cas plus général, avec $s > 0$, le bloc de « calcul des paramètres de l'égaliseur » 106 fournit en sortie à chaque auto-itération les coefficients de l'égaliseur $\underline{f}$ de taille $M$ dans le domaine fréquentiel, qui est en général un turbo-égaliseur linéaire MMSE auto-itéré avec retour EP. Dans tous les cas, le bloc de calcul 106 fournit en sortie aussi une estimation du bruit après égalisation $\sigma_v^2$, pour chaque bloc de données, calculée sous l'hypothèse de bruit gaussien et modèle additif $\hat{x} = x + v$. Ces deux sorties (filtre en domaine fréquentiel et variance du bruit résiduel) sont calculées de la façon suivante :

$$\bar{s} = \frac{1}{M} \sum_{m=0}^{M-1} \frac{\left|\underline{h}_m\right|^2}{\underline{\sigma}_{w_m}^2 + \bar{v}\left|\underline{h}_m\right|^2}, \qquad (1)$$

$$\underline{f}_m = \frac{1}{\bar{s}} \frac{\underline{h}_m}{\underline{\sigma}_{w_m}^2 + \bar{v}\left|\underline{h}_m\right|^2}, \quad m = 0, \dots, M-1, \qquad (2)$$

$$\sigma_v^2 = \frac{1}{\bar{s}} - \bar{v}, \qquad (3)$$

où $\bar{s}$ est le biais de l'égaliseur fréquentiel MMSE et $\sigma_{w_m}^2$ pour $m = 0, \dots, M-1$ sont les covariances sur la diagonale de la matrice $\underline{\Sigma}_w$ (il n'est donc pas nécessaire d'estimer les entrées de cette matrice hors de la diagonale principale). $\underline{f}_m$ sont les coefficients du filtre $\boldsymbol{f}$.

Le vecteur de signal reçu $\underline{y}$ de taille $M$ est passé dans le bloc « égaliseur linéaire à suppression d'interférence » 108 qui prend en entrée aussi les coefficients du filtre de l'égaliseur $\underline{f}$, la réponse fréquentielle du canal $\boldsymbol{H}$ et le vecteur de taille $M$ d'estimations souples des symboles émis dans le domaine fréquentiel $\overline{\underline{x}}$, qui est généré par le bloc de FFT normalisée de taille $M$ 107 à partir du vecteur de taille $M$ d'estimations souples dans le domaine temporel $\bar{x}$, en provenance du démodulateur souple SISO 105. La fiabilité globale de cette estimation est représentée par la valeur $\bar{v}$, plus elle est proche de zéro plus la fiabilité est grande ($\bar{v}$ est une variance). Le bloc égaliseur linéaire à suppression d'interférence 108 réalise la suppression d'interférence (Interference Cancellation - IC) pour l'ISI, dans ce cas SISO. Le bloc égaliseur linéaire à suppression d'interférence 108 produit un vecteur de taille $M$ $\hat{\underline{x}}$ qui représente une estimation des symboles dans le domaine fréquentiel.

Le vecteur $\hat{\underline{x}}$ est ensuite repassé dans le domaine temporel à travers une IFFT 109 normalisée de taille $M$, pour obtenir le vecteur $\hat{\bar{x}}$ du signal temporel égalisé, qui est envoyé au démodulateur souple SISO 105. A partir de $\hat{x}$, de la variance du bruit après égalisation $\sigma_v^2$ et des informations souples a priori, par exemple sous la forme de métriques en rapport de vraisemblance logarithmique (Log-Likelihood Ratio - LLRs) $L_a$ en provenance du décodeur, le démodulateur souple produit des informations souples pour chaque bit du signal d'entrée, par exemple sous la forme de LLR extrinsèques $L_e$. Ce démodulateur prend des formes différentes selon la statistique du signal après égalisation : si la constellation de départ est réelle on peut utiliser un démodulateur pour des statistiques gaussiennes complexes symétriques, autrement un démodulateur pour des statistiques gaussiennes avec pseudo-covariance non nulle est plus adapté.

Les métriques souples sont ensuite désentrelacées par le bloc désentrelaceur 110 qui est le bloc inverse du bloc entrelaceur 112. Ensuite, quand tous les bits du paquet sont récupérés, les métriques souples sont envoyées au décodeur 111 qui génère, produit des estimations de probabilités des bits d'information envoyés (par exemple des probabilités a posteriori). Ces estimations de probabilités peuvent être utilisées pour obtenir une estimation dur $\boldsymbol{b}$' des bits transmis $\boldsymbol{b}$ avec un détecteur à seuil.

Si le récepteur utilise des turbo-itérations, le décodeur produit aussi des estimations des bits codés envoyés, c'est-à-dire des probabilités extrinsèques (EXT), par exemple sous forme de LLRs, qui mesurent la probabilité que les bits codés envoyés soient 0 ou 1. Les EXT sont ensuite envoyées à l'entrelaceur 112 pour être entrelacées. L'entrelaceur 112 situé dans le récepteur 20 opère de la même manière que l'entrelaceur 12 se trouvant dans l'émetteur 10, avec la seule différence que ce dernier opère sur des données binaires, alors que l'entrelaceur 112 opère sur des LLRs. Les EXT entrelacées deviennent des informations a priori du point de vue du reste du récepteur, par exemple sous forme de LLRs a priori $L_a$ et entrent dans le démodulateur souple SISO 105.

En fonction de l'ordonnancement de l'activation du démodulateur souple SISO, de l'égaliseur et du décodeur, différentes boucles peuvent être réalisées.

Le bloc «égaliseur linéaire à suppression d'interférence » 108 réalise la suppression d'interférence et applique une égalisation linéaire en fréquence sur le signal d'entrée. Dans la littérature il est appelé aussi égaliseur linéaire à suppression d'interférence (Linear Equalizer - Interference Cancellation - LE-IC) puisqu'il régénère une estimation du signal interférant pour le soustraire. Cette structure est déjà bien connue dans la littérature [2]. La différence par rapport à l'état de l'art existant est dans la valeur de l'entrée $\overline{x}$ (estimation des symboles dans le domaine fréquentiel) fournie au bloc 108, ainsi que le filtre utilisé, ces deux quantités étant calculées de façon nouvelle. La sortie $\hat{\underline{x}}$ du bloc égaliseur linéaire à suppression d'interférences 108 sera donc différente que celle qui peut être trouvée dans [2] à égalité des autres hypothèses.

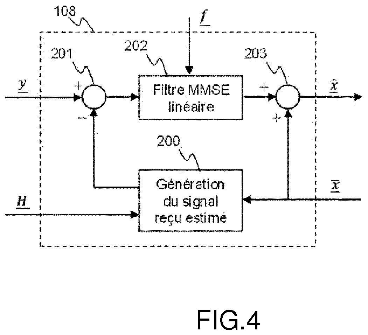

La figure 4 donne un exemple détaillé pour le filtrage et le procédé de suppression de l'interférence, qui est réalisé de façon efficace comme il suit. Le bloc «égaliseur linéaire à suppression d'interférence» 108 comprend un soustracteur 201 qui agit sur des vecteurs de taille M et qui retranche du signal réellement reçu y, une estimation de ce même signal reçu (signal utile avec interférences du canal de propagation). Cela permet d'obtenir un signal correctif introduit dans un filtre linéaire 202 de type MMSE de réponse fréquentielle **f**, calculée par le bloc de calcul des paramètres de l'égaliseur 106. Le filtre linéaire 202 est suivi lui-même d'un sommateur 203 de vecteurs de taille M, qui réintroduit dans le signal correctif filtré la contribution du signal utile déjà estimé. Le bloc de retranchement du signal reçu estimé 201 obtient l'estimation à retrancher par un module de génération du signal reçu estimé (signal utile avec interférences du canal de propagation) 200.

Le bloc 200 de génération du signal reçu estimé produit une estimation du signal reçu (signal utile avec interférences du canal de propagation) à partir de l'estimation des symboles dans le domaine fréquentiel $\overline{x}$, et l'estimation du canal **H**. Ceci est obtenu par simple multiplication terme à terme du vecteur $\overline{x}$ avec l'estimation de la réponse fréquentielle du canal **h**, tel que **h** = diag(**H**). Donc, le signal reçu estimé en fréquence est $\underline{h} \odot \overline{x}$ ou équivalemment $\underline{H\overline{x}}$ en notations matricielles. Quand $\tau = s = 0$, $\overline{x}$ est un vecteur de zéros (pas d'estimation disponible).

Le sommateur 201 implémente un retranchement dans le domaine fréquentiel du signal reçu estimé au signal reçu, $\underline{y} - \underline{h} \odot \overline{x}$. Le résultat est nommé signal correctif.

Le bloc 202 applique simplement le filtre **f**. Il s'agit là encore tout simplement d'une multiplication entrée par entrée du vecteur du filtre de taille $M$ et du vecteur d'entrée de même taille. Cette étape correspond à l'égalisation proprement dite qui réduit d'avantage l'ISI résiduel du signal correctif.

Enfin, le sommateur 203 génère une estimation fréquentielle des symboles égalisés en ajoutant au signal correctif filtré l'estimation du signal utile obtenue à partir de l'information souple en provenance du démodulateur souple SISO à l'auto-itération précédente et si s = 0, à la turbo-itération précédente. Ceci est implémenté de manière à améliorer progressivement (itération après itération) l'estimation du signal utile final. La sortie $\hat{\underline{x}}$ s'écrit

$$\hat{\underline{x}} = \overline{x} + \underline{f}^* \odot (\underline{y} - \underline{h} \odot \overline{x}) \tag{4}$$

De façon équivalente, cette relation aurait aussi pu s'exprimer par des produits matriciels avec $\hat{\underline{x}} = \overline{x} + diag(\underline{f}^*)(\underline{y} - \underline{H\overline{x}})$.

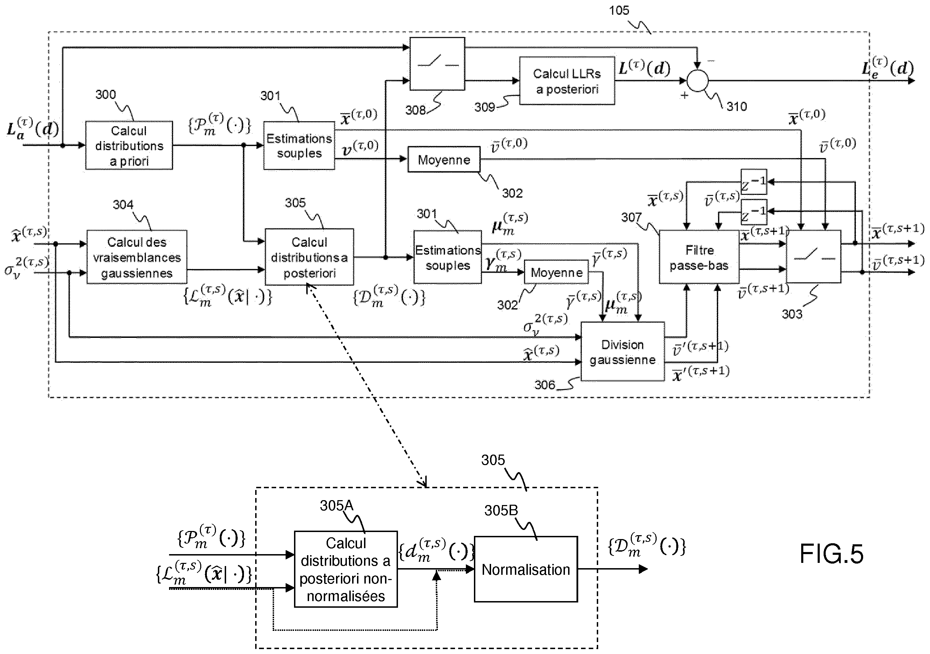

La structure du démodulateur souple SISO 105 est illustrée à la figure 5.

Tout d'abord, l'utilisateur choisit les symboles à envoyer parmi une constellation (potentiellement multidimensionnelle, ici l'invention est présentée avec une constellation avec une dimension complexe) $\mathcal{X} \subset \mathbb{C}$, où $\mathbb{C}$ est l'espace des nombre complexes, de cardinalité Q |X|, tel que $q = \log_2 Q$. Nous supposons que les symboles de la constellation ont une moyenne nulle et une puissance statistique égale à $\sigma_x^2$. Il est aussi possible de normaliser une constellation de façon que $\sigma_x^2 = 1$. Le modulateur dans l'émetteur 10, à partir de chaque vecteur de q bits codés et entrelacés en sortie du bloc entrelaceur 12, génère le symbole correspondant de la constellation selon une fonction $\mathcal{M}$, qui est aussi appelée fonction d'étiquetage ou simplement étiquetage, notion connue de l'homme du métier. En se focalisant sur un vecteur de données x d'émission de longueur M, ses entrées $x_m$, m = 0, ...,M - 1 sont obtenues ainsi :

$$x_m = \mathcal{M}(\boldsymbol{d}_m),$$

où $\boldsymbol{d}_m = [d_{mq}, ..., d_{(m+1)q-1}]$ est le m-ième groupe de $q$ éléments du vecteur $\boldsymbol{d}$ qui est le vecteur des bits codés et entrelacés de taille $qM$ correspondant au bloc de données. Le vecteur de bits $\boldsymbol{d}_m$ peut être interprété comme l'étiquette binaire du symbole $x_m$. On note traditionnellement aussi

$$d_{mq+j} = \mathcal{M}_j^{-1}(x_m)$$

le $j$-eme bit (de l'étiquette) du symbole $x_m$, avec $j = 0, ..., q - 1$. Pour terminer, on pose aussi

$$\mathcal{X}_j^b = \left\{\alpha \in \mathcal{X} | \mathcal{M}_j^{-1}(\alpha) = b\right\},$$

i.e. l'ensemble de tous les symboles de la constellation qui ont un bit de valeur $b$ (0 ou 1) dans la $j$-eme position de leur étiquette binaire. Ces notations sont nécessaires pour expliciter facilement les calculs des probabilités des bits et des symboles dans la suite.

La figure 5 décrit un exemple détaillé pour la structure du démodulateur souple. $\boldsymbol{L}_a^{(\tau)}(\boldsymbol{d})$ représente le vecteur des LLRs a priori sur les bits codés et entrelacés, en provenance du décodeur et qui sont associés au vecteur de signal estimé après égalisation $\hat{\boldsymbol{x}}^{(\tau,s)}$ en train d'être traité. A la turbo-itération $\tau = 0$ (i.e. le décodage n'a pas encore eu lieu), $\boldsymbol{L}_a(\boldsymbol{d})$ est un vecteur de zéros (aucune information a priori sur les bits $\boldsymbol{d}$ disponible).

A la toute première utilisation du récepteur ($\tau = 0$), ou à chaque début de turbo-itération (

$$\tau = 1, ..., \mathcal{T},$$

si

$$\mathcal{T} > 0$$

), après avoir activé le décodeur 111 et l'entrelaceur 112, le démodulateur souple SISO 105, est activé pour une phase d'initialisation, avec un indice d'auto-itération conventionnel de $s = -1$. Dans cette phase, le démodulateur souple SISO 105 exécute plusieurs étapes préparatoires : a) il vide ses registres internes en correspondance du bloc 307 ; b) il met à zéro les entrées du vecteur d'entrée $\hat{\boldsymbol{x}}$ (signal égalisé) ; c) il pose $\sigma_\nu^2 = +\infty$ (ou autre valeur faisant office de l'infini). Ensuite, la chaîne de calcul constituée par un bloc de calcul des distributions a priori 300, un bloc d'estimations souples 301, un estimateur de moyenne effectuant une moyenne 302 et un interrupteur 303 est activée. Cette chaîne de calcul n'est plus activée pour les autres indices $s \geq 0$, mais uniquement quand une nouvelle initialisation est instruite. Pendant la phase d'initialisation, en fonctionnement normal les autres blocs ne sont pas activés.

Lors de la phase d'initialisation, le bloc de calcul des distributions a priori 300 effectue le calcul des probabilités de masse (distributions de probabilité) a priori sur les symboles de la constellation $\mathcal{X}$ (ce bloc est connu de l'état de l'art) à partir des $\boldsymbol{L}_a(\boldsymbol{d})$. Pour chaque symbole $x_m$, m = 0, ...,$M$ - 1 de chaque bloc de données utilisé pour transmettre le mot de code, on calcule une distribution selon les formules suivantes :

$$\wp_m^{(\tau)}(\alpha) = \prod_{j=0}^{q-1} \exp\left(-\mathcal{M}_j^{-1}(\alpha)L_a^{(\tau)}(d_{qm+j})\right) \tag{5}$$

$$\mathcal{P}_m^{(\tau)}(\alpha) = n_{\wp,m}^{-1} \wp_m^{(\tau)}(\alpha), \quad \text{avec} \quad n_{\wp,m} = \sum_{\alpha \in \mathcal{X}} \wp_m^{(\tau)}(\alpha) \tag{6}$$

Il est possible d'implémenter ces calculs dans le domaine logarithmique (selon des méthodes existantes dans la littérature) pour des questions de réduction de complexité de calcul.

Le bloc d'estimations souples 301 calcule une estimation des symboles émis, ainsi qu'une estimation de leur fiabilité, en partant des distributions de probabilité en entrée. Puisque l'ensemble des distributions a priori

$$\left\{\mathcal{P}_m^{(\tau)}(\alpha)\right\}$$

(pour tous les symboles de tous les blocs de données composant un même mot de code) change seulement à chaque turbo-itération, le bloc 301 est appliqué aux

$$\left\{\mathcal{P}_m^{(\tau)}(\alpha)\right\}$$

une seule fois par turbo-itération et produit les estimations suivantes :

$$\bar{x}_m^{(\tau,0)} = E_{\mathcal{P}_m^{(\tau)}}[x_m]; \quad v_m^{(\tau,0)} = Var_{\mathcal{P}_m^{(\tau)}}[x_m] \tag{7}$$

avec les définitions standard d'espérance

$$E_{\mathcal{P}_m^{(\tau)}}[\cdot]$$

et de variance

$$Var_{\mathcal{P}_m^{(\tau)}}[\cdot].$$

Quand $\tau = 0$, i.e., il n'y a pas de turbo-itération et donc pas d'information a priori disponible en provenance du décodeur, $\bar{x}_m^{(0,0)} = 0$ et $v_m^{(0,0)} = \sigma_x^2$ pour tous les m. Autrement dit, les symboles envoyés ne peuvent pas être estimés et ils ont une variance égale à la puissance statistique de la constellation d'origine (c'est-à-dire, l'imprécision est maximale). Cette information pour $\tau = 0$, peut être exploitée pour éviter les calculs du bloc de calcul de distributions a priori 300 et le calcul de la moyenne des variances $v_m^{(\tau,0)}$, et réduire ainsi la complexité de la solution.

Le bloc de moyenne 302 calcule une simple moyenne des valeurs en entrée. Ainsi, quand le bloc moyenneur est appliqué aux $v_m^{(\tau,0)}$, m = 0, ..., $M$ - 1 d'un bloc donné, il calcule tout simplement $\bar{v}^{(\tau,0)} = M^{-1} \sum_{m=0}^{M-1} v_m^{(\tau,0)}$ et il génère des moyennes, bloc par bloc. Il est aussi possible, dans une autre implémentation, de considérer tous les symboles correspondants à un mot de code et d'effectuer la moyenne sur cette longueur. $\bar{v}^{(\tau,0)}$ est la variance moyenne a priori de l'estimation des symboles émis (soit sur un bloc de données, soit sur tout le mot de code). Elle permet à la fois d'obtenir un estimateur plus robuste que les variances instantanées $v_m^{(\tau,0)}$ de la fiabilité moyenne des symboles estimés et aussi de pouvoir implémenter une stratégie d'égalisation dans le domaine fréquentiel, en général moins coûteuse d'un point de vue calculs.

Les estimations a priori des symboles émis $\bar{x}_m^{(\tau,0)}$ ainsi que leur variance moyenne $\bar{v}^{(\tau,0)}$ sont acheminées vers l'interrupteur 303. Si l'auto-itération courante est s = -1 (i.e. phase d'initialisation), l'interrupteur 303 fournit en sortie $\bar{x}_m^{(\tau,s+1)} = \bar{x}_m^{(\tau,0)}$ pour tout m et $\bar{v}^{(\tau,s+1)} = \bar{v}^{(\tau,0)}$, c'est-à-dire les estimations a priori des symboles et leur variance moyenne a priori. Si $s \geq 0$, l'interrupteur 303 fournit en sortie les estimations des symboles $\bar{x}_m^{(\tau,s+1)}$ et leur variance moyenne $\overline{\nu^{(\tau,s+1)}}$ en provenance du bloc de lissage adaptatif 307. Lorsque $s = -1$, pour toute turbo-itération, la sortie de l'interrupteur 303 correspond donc à la sortie d'un mapping souple avec information souple en provenance du décodeur, tel que décrit dans la référence [2]. La sortie $L_e^{(\tau)}(d)$ n'est pas calculée en phase d'initialisation. Une fois que les sorties de l'interrupteur 303 sont calculées, on considère que l'indice $s$ d'entrée est incrémenté de 1.

Nous décrivons par la suite la chaîne de calcul quand le bloc 105 est activé avec un indice d'auto-itération

$$s = 0, \dots, \mathcal{S}_\tau - 1.$$

Dans ce cas, il n'est pas nécessaire de parcourir la chaîne de calcul constituée par les blocs 300, 301, 302. L'interrupteur 303 laissera passer les sorties du lissage adaptatif 307.

La figure 5 montre qu'il n'est pas nécessaire non plus de parcourir la chaîne comprenant le calcul LLRs a posteriori 309, le sommateur 310 pour calculer les LLRs extrinsèques de sortie. En effet, l'interrupteur 309 est fermé seulement lorsque

$$s = \mathcal{S}_\tau,$$

c'est-à-dire quand les auto-itérations sont terminées. Selon une variante, il est possible de calculer les LLRs a posteriori pour chaque indice d'auto-itération, pour pouvoir lancer le décodeur. Nous décrivons par la suite la chaîne de traitement constituée par les blocs 304, 305, 301, 302, 306, 307 et 303.

Le bloc de calcul des vraisemblances 304 calcule des vraisemblances à partir des estimations $\hat{x}_m^{(\tau,s)}$ (les M symboles égalisés du bloc courant) et de la variance du bruit résiduel après égalisation $\sigma_\nu^{2(\tau,s)}$, en utilisant un modèle gaussien non-biaisé pour les estimations $\hat{x}_m^{(\tau,s)}$. A noter qu'il est décrit dans l'état de l'art comment utiliser un modèle gaussien biaisé. Ce calcul donne :

$$\mathcal{L}_m^{(\tau,s)}\left(\hat{x}_m^{(\tau,s)}|\alpha\right) = \exp\left(-\left|\hat{x}_m^{(\tau,s)} - \alpha\right|^2 / \sigma_\nu^{2(\tau,s)}\right), \quad m = 0, \dots, M - 1, \quad\quad (8)$$

pour chaque $\alpha$ appartenant à la constellation $X$. Il est possible d'implémenter ce calcul dans le domaine logarithmique (selon des méthodes existantes dans la littérature) pour des questions de réduction de la complexité de calcul.

Le bloc de calcul de distributions de probabilité a posteriori 305 comprend un premier bloc 305A de calcul de distributions de probabilité a posteriori non-normalisées et un deuxième bloc 305B ayant pour fonction de normaliser les valeurs fournies à son entrée de façon telle que la sortie soit une veritable distribution de probabilité (voir Fig. 5).

Le bloc de calcul de distributions de probabilité a posteriori non-normalisées 305A calcule les distributions des symboles émis en connaissant l'observation (symboles égalisés), selon une méthode connue de l'homme du métier:

$$d_m^{(\tau,s)}(\alpha) = \mathcal{L}_m^{(\tau,s)}\left(\hat{x}_m^{(\tau,s)}|\alpha\right) \mathcal{P}_m^{(\tau)}(\alpha) \quad\quad (9)$$

où $\alpha$ est l'un des symboles possibles de la constellation $X$.

Le bloc de normalisation 305B normalise (séparément pour chaque index $m$) l'ensemble des valeurs $d_m^{(\tau,s)}(\alpha)$, $\alpha \in X$ de façon telle que la sortie soit une distribution de probabilité, selon la formule suivante :

$$\mathcal{D}_m^{(\tau,s)}(\alpha) = n_{d,m}^{-1} d_m^{(\tau,s)}(\alpha), \quad \text{avec} \quad n_{d,m} = \sum_{\alpha \in X} d_m^{(\tau,s)}(\alpha) \quad\quad (10)$$

Il est possible d'implémenter ces calculs dans le domaine logarithmique (selon des méthodes existantes dans la littérature) pour des questions de réduction de complexité computationnelle.

Dans le cas où les probabilités a priori en entrée du bloc de calcul de distribution de probabilité a posteriori 305 sont nulles (en domaine logarithmique, i.e., équiprobables dans le domaine linéaire), le calcul des distributions a posteriori ne fait qu'une normalisation correspondant à l'équation (10), bloc 305B (seulement le tracé en pointillé du bloc

$$d_m^{(\tau,s)}(\alpha) = \mathcal{L}_m^{(\tau,s)}\left(\hat{x}_m^{(\tau,s)}|\alpha\right).$$

305 dans la Fig. 5 est actif). Autrement dit, En effet, dans le cas de probabilités a priori constantes, la multiplication (9) implémente des opérations sans effet, puisque la constante liée à la probabilité a priori sera normalisée par le bloc de normalisation 305B, et n'apporte pas de gain. C'est pour cela que dans le cas d'a priori constant, le bloc 305A n'est pas exécuté. L'ensemble $\left\{\mathcal{D}_m^{(\tau,s)}(\alpha)\right\}_{\alpha\in\mathcal{X}_1}$ des distributions a posteriori pour les symboles du bloc de données courant est ensuite traité par le bloc d'estimations souples 301 pour générer des estimations a posteriori des symboles émis $\mu_m^{(\tau,s)} = E_{\mathcal{D}_m^{(\tau,s)}}[x_m]$ et leur correspondante variance a posteriori $\gamma_m^{(\tau,s)} = Var_{\mathcal{D}_m^{(\tau,s)}}[x_m]$.

Dans le cas particulier de probabilités a priori nulles (i.e. constantes en échelle linéaire) le bloc d'estimations souples 301 calcule les estimations $\mu_m^{(\tau,s)}$ et la variance moyenne $\overline{\gamma}^{(\tau,s)}$ des symboles en utilisant en entrée une distribution de probabilité obtenue en normalisant (305B, équation (10)) les vraisemblances gaussiennes obtenues par une technique de calcul exacte ou approximée (304). Les vraisemblances gaussiennes sont calculées en utilisant les symboles estimés $\hat{x} = [\hat{x}_0^{(\tau,s)} \cdots \hat{x}_m^{(\tau,s)} \cdots \hat{x}_{M-1}^{(\tau,s)}]$ du bloc de données courant, les symboles estimés du bloc étant caractérisés par une mesure de fiabilité moyenne $\sigma_v^{2(\tau,s)}$ (302).

Dans le cas de probabilités a priori non-constantes, la nouvelle estimation des symboles émis, générée en combinant l'information a priori disponible avec l'information contenue dans l'observation selon l'invention présente des caractéristiques supérieures à l'estimation a priori, ou à une estimation dérivée de la seule observation. Dans le cadre de la théorie d' « expectation propagation » (EP), cette opération permet aussi de projeter une description probabiliste mixte sur les symboles envoyés (des variables gaussiennes pour les observations, combinées avec des estimations a priori qui sont des variables catégoriques) sur une description probabiliste unique, selon un modèle gaussien tel que décrit dans la référence [3]. Plus dans le détail, nous utilisons ici un résultat de la théorie de l'information, connu sous le nom de « reverse I-projection », ou « M-projection », qui stipule que le fait de trouver une distribution de type exponentiel (dans notre cas, gaussienne) qui minimise la divergence de Kullback-Leibler (une mesure de distance probabiliste) par rapport à une distribution quelconque, revient à trouver la distribution exponentielle ayant les mêmes moments statistiques (« moment matching »).

Les variances a posteriori sont ensuite moyennées par le bloc moyenneur 302 pour obtenir une variance a posteriori moyenne $\overline{\gamma}^{(\tau,s)} = M^{-1}\sum_{m=0}^{M-1}\gamma_m^{(\tau,s)}$ sur le bloc de données en cours de traitement. Comme dans le cas des estimations a priori, la variance moyenne a posteriori permet à la fois d'obtenir un estimateur plus robuste de la fiabilité moyenne des symboles émis estimés du bloc de données et aussi de pouvoir implémenter une stratégie d'égalisation dans le domaine fréquentiel, en général moins coûteuse d'un point de vue des calculs.

Les estimations a posteriori $\mu_m^{(\tau,s)}$ des symboles émis et leurs variances moyennes a posteriori $\overline{\gamma}^{(\tau,s)}$ sont ensuite envoyées dans le bloc de « division gaussienne » 306 qui prend aussi en entrée les observations (symboles égalisé) $\hat{x}_m^{(\tau,s)}$ et la variance du bruit résiduel après égalisation $\sigma_v^{2(\tau,s)}$ qui donne une mesure de la fiabilité de ces observation. La « division gaussienne », en utilisant les estimations comme des moyennes et les fiabilités comme des variances, associe à chaque symbole deux fonctions de densité de probabilité gaussienne, l'une pour les estimations a posteriori et l'autre pour les observations, les divise entre elle et les normalise à fin d'obtenir une troisième fonction de distribution de probabilité gaussienne ayant comme moyenne une nouvelle estimation souple du signal transmis $\bar{x}'^{(\tau,s+1)}_m$, et comme variance la correspondante mesure de fiabilité par bloc de données $\bar{v}'^{(\tau,s+1)}$. En suivant le cadre de la théorie « expectation propagation », ce bloc va générer une information extrinsèque sur les symboles émis, en suivant un modèle gaussien. Les solutions de l'état de l'art utilisent soit une information a priori (catégorique, extrinsèque du décodeur), soit une information a posteriori (catégorique aussi, combinée de l'information extrinsèque du décodeur et de la vraisemblance du démodulateur souple). Cette opération permet donc de mieux respecter le principe turbo en retranchant à l'information a posteriori, l'information a priori disponible au démodulateur, au début du traitement (c'est l'extrinsèque de l'égaliseur) et en permettant ainsi d'améliorer la qualité du signal de retour et, in fine, les performances du récepteur. La division gaussienne 306 va calculer des estimations extrinsèques des symboles émis $\bar{x}'^{(\tau,s+1)}_m$ et une variance extrinsèque moyenne $\bar{v}'^{(\tau,s+1)}$ par exemple selon la procédure suivante :

$$\bar{x}'^{(\tau,s+1)}_m = \frac{\mu^{(\tau,s)}_m \sigma^{2(\tau,s)}_v - \hat{x}^{(\tau,s)}_m \bar{\gamma}^{(\tau,s)}}{\sigma^{2(\tau,s)}_v - \bar{\gamma}^{(\tau,s)}} \ , \quad m = 0, \dots, M-1 \tag{11}$$

$$\bar{v}'^{(\tau,s+1)} = \frac{\sigma^{2(\tau,s)}_v \bar{\gamma}^{(\tau,s)}}{\sigma^{2(\tau,s)}_v - \bar{\gamma}^{(\tau,s)}} \tag{12}$$

De plus, le cas $\sigma^{2(\tau,s)}_v \leq \bar{\gamma}^{(\tau,s)}$ signifie que les informations a posteriori calculées par le démodulateur souple SISO et les informations en provenance des observations sont en contradiction mutuelle. Dans ce cas, une solution pour rendre le bloc de division gaussienne 306 plus robuste est de retenir les informations a posteriori comme sortie pour les estimées ainsi que leur variance moyenne comme fiabilité, soit

$$\bar{x}'^{(\tau,s+1)}_m = \mu^{(\tau,s)}_m, \qquad \text{pour } \ \sigma^{2(\tau,s)}_v \leq \bar{\gamma}^{(\tau,s)} + \varepsilon \ , \quad m = 0, \dots, M-1 \tag{13}$$

$$\bar{v}'^{(\tau,s+1)} = \bar{\gamma}^{(\tau,s)}, \qquad \text{pour } \ \sigma^{2(\tau,s)}_v \leq \bar{\gamma}^{(\tau,s)} + \varepsilon, \tag{14}$$

avec $\varepsilon \geq 0$ étant une constante permettant de s'écarter de l'instabilité numérique. Des valeurs de l'ordre de $\varepsilon = 10^{-3}$ ou $10^{-4}$ permettent d'améliorer les performances, sur les rares occurrences de blocs reçus où $\bar{\gamma}^{(\tau,s)}$ est proche numériquement de $\sigma^{2(\tau,s)}_v$.

D'autres stratégies sont possibles dans ce cas particulier $\sigma^{2(\tau,s)}_v \leq \bar{\gamma}^{(\tau,s)} + \epsilon$. Par exemple, le bloc 306 peut fournir en sortie l'information a priori en provenance du décodeur, calculé à l'initialisation du démodulateur souple SISO (non représenté sur la figure 5), ainsi que la variance moyenne associée à l'a priori comme fiabilité. D'autres stratégies encore dans le même cas consistent à fixer la variance de sortie $\bar{v}'^{(\tau,s+1)}$ a une valeur arbitraire préfixée pour chaque $\tau$ et $s$.

Ces estimations extrinsèques sont passées au bloc de lissage adaptatif 307 dont la finalité est de lisser les estimations en entrée en prenant en compte les valeurs passées. Un algorithme possible implémenté par ce bloc est d'accumuler linéairement les estimations présentes et passées (auto-itération précédente) selon les formules suivantes qui peuvent être interprétées comme un filtrage :

$$\bar{x}^{(\tau,s+1)}_m = \left(1 - \beta_{\tau,s}\right)\bar{x}'^{(\tau,s+1)}_m + \beta_{\tau,s}\bar{x}^{(\tau,s)}_m \tag{15}$$

$$\bar{v}^{(\tau,s+1)} = \left(1 - \beta_{\tau,s}\right)\bar{v}'^{(\tau,s+1)} + \beta_{\tau,s}\bar{v}^{(\tau,s)} \qquad (16)$$

Les blocs $z^{-1}$ qui se trouvent sur la boucle, dans la figure 5, représentent l'opération de délai unitaire, vis-à-vis de l'indice $s$, en référence à la transformée Z. Les coefficients $\beta_{\tau,s}$ sont toujours compris entre 0 et 1. Quand ils sont proches de zéro, c'est l'estimation courante en sortie de la division gaussienne 306 qui a plus de poids, quand ils sont proches de un ce sont les estimations de l'auto-itération précédente qui ont plus de poids. Ce filtrage est utilisé pour augmenter la robustesse du procédé global d'itération dans le récepteur. Typiquement, des coefficients $\beta_{\tau,s} = 0$ donnent une vitesse de convergence rapide, mais aussi des instabilités possibles et au final la convergence à un point optimal peut ne pas être atteinte. Des coefficients $\beta_{\tau,s}$ proches de un donnent une vitesse de convergence lente, avec des possibles dégradations de la performance finale, mais avec plus de stabilité. Il est donc possible de régler le compromis entre performances et nombre d'itérations en choisissant les paramètres du filtre. Dans la pratique il y a plusieurs stratégies de choix pour ces paramètres : ils sont par exemple constants pour tout $s > 0$, $\tau$. Un exemple d'implémentation est de choisir une décroissance exponentielle $\beta_{\tau,s} = \alpha(\tau,s)e^{-\beta(\tau,s)}$, où $\beta(.)$ sera une fonction croissante avec $s$ et/ou $\tau$, et $\alpha(.)$ sert de pondération pour $s$ et $\tau$ petits. Dans cet exemple, au fur et à mesure des itérations, nous donnons plus de confiance aux estimations courantes. En gardant la même expression, on pourrait imaginer $\beta$ comme une fonction nulle, une fonction $\alpha(.)$ qui reste constante, proche de un, pendant les quelques itérations initiales, puis qui décroît linéairement après avoir décidé que les points fixes erronés ne seront pas pris en compte. Encore une autre méthode de lissage adaptatif possible et de pondérer les précisions, c'est-à-dire l'inverse des variances, à la place que les variances elles-mêmes. Par exemple, la formule (16) peut être substituée par :

$$\bar{v}^{(\tau,s+1)} = \frac{1}{(1-\beta_{\tau,s})\frac{1}{\bar{v}'^{(\tau,s+1)}} + \beta_{\tau,s}\frac{1}{\bar{v}^{(\tau,s)}}}. \qquad (17)$$

De plus, la formule (15) peut être substituée par :

$$\bar{x}_m^{(\tau,s+1)} = \gamma_{\tau,s}\bar{x}'^{(\tau,s+1)}_m + \beta_{\tau,s}\bar{x}_m^{(\tau,s)} \qquad (18)$$

où $\gamma_{\tau,s} + \beta_{\tau,s}$ n'est pas forcement 1. Par exemple on pourrait choisir $\beta_{\tau,s} = \epsilon\bar{v}^{(\tau,s+1)}/\bar{v}^{(\tau,s)}$ et $\gamma_{\tau,s} = (1 - \epsilon)\bar{v}^{(\tau,s+1)}/\bar{v}'^{(\tau,s+1)}$. Il est possible d'implémenter des filtres adaptatifs, par exemple de type Kalman. En général on peut envisager des formules de lissages aussi non-linéaires $\bar{v}^{(\tau,s+1)} = l_v^{(\tau,s)}(\bar{v}^{(\tau,s)}, \bar{v}'^{(\tau,s+1)})$ et $\bar{x}_m^{(\tau,s+1)} = l_x^{(\tau,s)}(\bar{x}_m^{(\tau,s)}, \bar{x}'^{(\tau,s+1)}_m, \bar{v}^{(\tau,s)}, \bar{v}^{(\tau,s+1)}, \bar{v}'^{(\tau,s+1)})$, où la fonction de lissage sur les fiabilités $l_v^{(\tau,s)}$ est fonction seulement des fiabilités courantes et passées pour réduire la complexité du calcul. Encore une autre méthode consiste dans lire dynamiquement les paramètres $\beta_{\tau,s}$ dans une table pré-remplie et sauvegardée dans la mémoire de l'équipement. En effet, des valeurs pré-remplies des paramètres $\beta_{\tau,s}$ pourront être indexés en fonction d'un ou plusieurs paramètres du récepteur (par exemple l'index de l'auto-itération courante ou de la turbo-itération courante) ou d'une ou plusieurs métriques que le récepteur peut mesurer, comme l'estimée du canal, l'estimée du bruit ou la fiabilité des retours du décodeur par exemple, et puis utiliser leur valeurs pour dynamiquement choisir les valeurs des $\beta_{\tau,s}$ correspondantes.

Au final, selon l'une des méthodes décrites précédemment ou évidentes pour l'homme de l'art, le bloc de lissage adaptatif 307 génère des estimations extrinsèques lissées $\bar{x}_m^{(\tau,s+1)}$ des symboles émis, ainsi que pour chaque vecteur leur variance moyenne extrinsèque lissée $\bar{v}^{(\tau,s+1)}$ qui est une mesure de la fiabilité du vecteur de ces estimations. Ces quantités sont transmises à l'interrupteur 303, elles sont considérées comme des sorties du bloc 105, si

$$s = 0, \dots, \mathcal{S}_\tau - 1.$$

Nous décrivons maintenant le fonctionnement du démodulateur souple SISO 105 quand

$$s = \mathcal{S}_\tau.$$

. Une valeur de

$$s = \mathcal{S}_\tau$$

indique la dernière auto-itération. Après avoir exécutée la démodulation souple SISO 105, le traitement de décodage sera enclenché. Dans ce cas, le démodulateur souple SISO 105 produit en sortie, pour chaque nouvelle turbo-itération avec le décodeur, des LLRs extrinsèques $\boldsymbol{L}_e^{(\tau)}(\boldsymbol{d})$ sur les bits codés du bloc de données traité. Dans cette phase, le bloc interrupteur 308 est fermé et seuls le bloc 309 et le sommateur 310 sont utilisés. Il n'est pas nécessaire de calculer les autres sorties du bloc 105.

Par un procédé appelé dans la littérature « marginalisation » [4], les $\boldsymbol{L}_e^{(\tau)}(\boldsymbol{d})$ sont générées à partir des LLRs a posteriori calculés par le bloc 309 et en soustrayant les LLRs a priori $\boldsymbol{L}_a^{(\tau)}(\boldsymbol{d})$ à travers le bloc somme 310. Le bloc de calcul des LLRs a posteriori 309 est un bloc connu de la littérature :

$$L^{(\tau)}(d_{mq+j}) = \ln \frac{\sum_{\alpha \in \mathcal{X}_j^0} \mathcal{D}_m^{(\tau,s)}(\alpha)}{\sum_{\alpha \in \mathcal{X}_j^1} \mathcal{D}_m^{(\tau,s)}(\alpha)}, \qquad m = 0, \dots, M-1, \ j = 0, \dots, q-1 \qquad (19)$$

D'autres bases de logarithme et des méthodes de simplification des calculs sont aussi applicables. Ensuite les LLRs extrinsèques sont calculés par le bloc somme 310 comme suit :

$$L_e^{(\tau)}\big(d_{mq+j}\big) = L^{(\tau)}\big(d_{mq+j}\big) - L_a^{(\tau)}\big(d_{mq+j}\big).$$

Dans des implémentations sur des programmes d'ordinateur ou sur du matériel ,il convient aussi de maitriser la dynamique des LLRs du demapping souple et du décodeur afin de stabiliser, rendre plus robuste le comportement de l'algorithme, et de réduire son occupation mémoire tout en gardant des performances acceptables. Différentes stratégies telles que décrites dans les références [5], [6], [7] sont possibles et peuvent être appliquées indépendamment du procédé décrit ci-dessus.

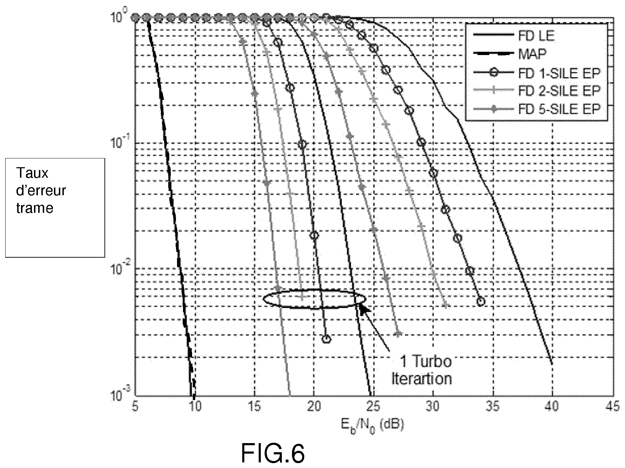

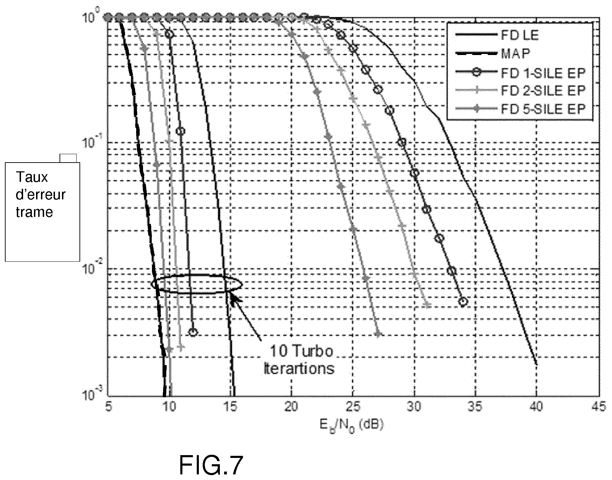

Les figures 6 et 7 illustrent un exemple de performance de l'invention dans un cas de système SC avec synchronisation et estimation de canal parfaites, dans le cadre SISO. La constellation utilisée par l'émetteur est une 8-PSK, le canal de propagation est le canal Proakis C (avec puissance moyenne normalisé à un) avec un profil de puissance de type triangulaire (1, 2, 3, 2, 1). La figure 6 montre comment différentes instanciations de l'invention, dénommées FD $\mathcal{S}$-SILE, avec

$$\mathcal{S}_\tau = \mathcal{S}$$

pour tout $\tau$, et avec

$$\mathcal{S} = 1, 2, 5$$

produisent des meilleures performances que l'égaliseur MMSE linéaire standard et l'égaliseur turbo linéaire MMSE fréquentiel avec IC de [1], dénommé dans les figures « FD ». La figure 6 en particulier montre les performances avec

$$\mathcal{T} = 0,$$

sans turbo-itération, et avec

$$\mathcal{T} = 1,$$

en turbo-itérant une fois avec de décodeur. Dans ces deux cas les gains sont considérables.

Dans les mêmes hypothèses, la figure 7 illustre les performances avec

$$\mathcal{T} = 10$$

turbo-itérations. Les propositions considérées arrivent à mieux approcher la borne du filtre adapté que le turbo-égaliseur MMSE linéaire fréquentiel avec IC.

Sans sortir du cadre de l'invention, le procédé peut s'appliquer dans différentes structures d'égaliseur, dont quelques exemples sont donnés ci-après à titre illustratif et nullement limitatif.

L'invention peut s'appliquer à un égaliseur turbo fractionnaire voir par exemple [8]. Dans ce contexte, l'unique différence est que le signal en provenance de l'antenne est sur-échantillonné avec un facteur avec un facteur *o* > 1, typiquement entier. En faisant référence à la figure 3, les blocs de données auront donc une taille *oN* dans la FFT 102, *oM* dans la transformée de fourrier inverse IFFT 109 et dans la FFT 107. De plus, le bloc IFFT 109 est suivi par un échantillonneur de débit *o* et le bloc FFT 107 est précédé par un interpolateur idéal de facteur *o* (qui introduit *o* - 1 zéro entre deux échantillons entrants). Le bloc d' « estimation de canal et variance du bruit » doit effectuer ses estimations dans le domaine interpolé en incluant les filtres éventuels d'émission et réception, et puis passer éventuellement les estimations en fréquence. Le calcul des paramètres de l'égaliseur va effectuer les calculs du filtre dans le domaine sur-échantillonné, en revanche il va estimer la variance du bruit résiduel d'égalisation au temps symbole (pour la passer au démodulateur souple). Le bloc turbo égalisation 108 va donc travailler dans le domaine sur-échantillonné. En revanche, le bloc de démodulation souple SISO 105 conserve la description précédente.

L'invention peut s'appliquer à un égaliseur de type Overlap FDE [9]. Dans ce type de récepteur, le bloc de données entre deux séquences pilotes est plus long du bloc de traitement, et pour des questions de complexité ou de nécessité (par exemple un canal variable dans le temps qui change dans l'horizon d'un bloc de données), le traitement d'égalisation fréquentiel est décomposé sur plusieurs segments (avec recouvrement) du bloc de données initial. Ces segments souffrent d'une interférence entre eux. Cela implique que la matrice de covariance du bruit en sortie du bloc d' « estimation de canal et de variance du bruit » 104 inclut aussi la variance due à l'interférence, ce qui modifie les valeurs du filtre d'égalisation.

L'invention peut être appliquée à la fois dans des stratégies de réjection d'interférence [10] et de suppression d'interférence [11]. Dans ce dernier cas, la variance $\overline{v}^{(\tau,s)}$ en sortie du démodulateur souple SISO 105 peut aussi être utilisée dans le bloc 104 (lien en pointillé dans la figure 3) pour fournir une meilleure estimation de la variance du bruit plus interférence résiduelle par exemple selon la formule suivante :

$$\underline{\Sigma}_{w} = \underline{\Sigma}_{w\prime} + 2\overline{v}^{(\tau,s)} \boldsymbol{F}_{N_p} \boldsymbol{G}_p \boldsymbol{G}_p^{H} \boldsymbol{F}_{N_p}^{H} \tag{20}$$

où $N_p$ est la taille du segment, $\boldsymbol{F}_{N_p}$ est la matrice de transformation de Fourier discrète de taille $N_p \times N_p$, $\Sigma_{w\prime}$ est la matrice de covariance du bruit avant ajout du terme relatif à l'interférence entre segments, $\boldsymbol{G}_p$ est une matrice $N_p \times N_p$ avec les *L* - 1 diagonales supérieures non-nulles et égales à celles d'une matrice circulante générée à partir de l'estimation de la réponse impulsionnelle du canal $\boldsymbol{h}_p = [h_{0,p}, ..., h_{L-1,p}]^T$ obtenue en correspondance du segment *p* de données. De plus, si l'estimation souple du signal envoyé et sa variance correspondante en sortie du démodulateur souple SISO 105 sont fournis au bloc d'estimation de canal et de variance de bruit 104 (liens en pointillé dans la figure 3), ce dernier bloc peut implémenter des procédés d'estimation de canal et de variance de bruit en exploitant ces informations additionnelles. Les nouvelles estimations de canal et de variance de bruit (possiblement à chaque itération) peuvent être exploitées par le reste du récepteur selon la description précédente.

La technique proposée peut s'appliquer aussi à des égaliseurs linéaires au sens large.

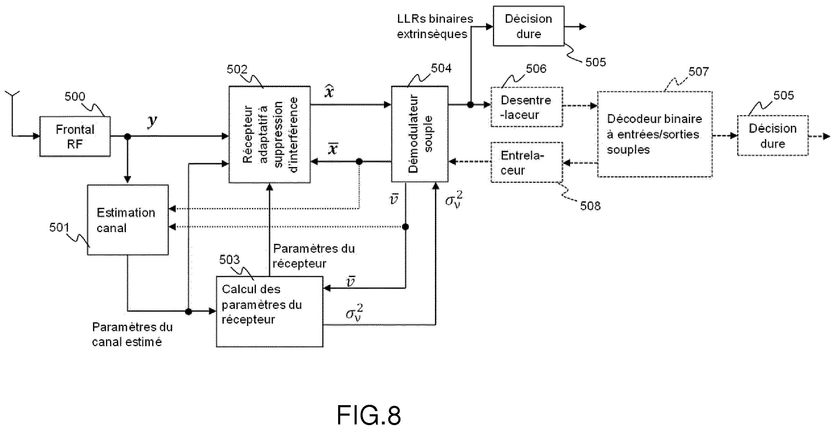

De manière générale, l'invention peut être utilisée au sein de tout type de récepteur itératif étant structuré comme illustré sur la Figure 8.

En effet, on considère disposer d'un émetteur 10 utilisant une modulation 13, une mise en trame 14 et une chaîne RF 15, quelconques, sur un bloc de données *x* pour le transmettre à travers un canal de propagation quelconque. On considère disposer d'un frontal RF 500 qui extrait l'observation *y* du signal, reçu à l'antenne, perturbé par le canal de communication, et qui le fournit au bloc d'estimation canal 501. Cet estimateur extrait du signal *y,* les séquences pilotes, afin d'utiliser une des techniques d'estimations, connues de l'homme de l'art, pour obtenir des paramètres caractérisant le canal. On suppose disposer d'un bloc « récepteur adaptatif à suppression d'interférence » 502, capable de fournir une estimation $\hat{x} = x + v$ modélisée selon un modèle statistique gaussien additif (*v* étant le bruit gaussien équivalent ajouté au signal utile). L'estimation $\hat{x}$ est obtenue grâce à un procédé de suppression d'interférence qui, en utilisant une estimation préalable $\overline{x}$ du signal transmis *x,* et une estimation des paramètres du canal, génère une estimation de l'interférence et la soustrait au signal reçu.

Par ailleurs, on dispose d'un bloc de calcul des paramètres du récepteur 503, qui utilise les estimations du canal et la fiabilité de l'estimation préalable $\bar{v}$, pour calculer les paramètres intrinsèques du récepteur 502, et pour calculer la variance $\sigma_v^2$ caractérisant la puissance d'interférence résiduelle v, en sortie du récepteur 502.

L'invention s'applique au niveau du démodulateur souple 504, où, pour un bloc de données avec des statistiques supposées blanches, la technique de propagation d'espérance est utilisée pour calculer les estimations souples $\bar{x}$ qui serviront comme retour de décision pour le récepteur, avec la variance $\bar{v}$ caractérisant la fiabilité des ces mêmes estimations. Suite à un nombre approprié d'itérations $S$, le démodulateur souple 504 calcule des LLRs binaires extrinsèques sur les bits déterminant les symboles qui peuvent servir à estimer les bits transmis à travers une décision dure 505, consistant à comparer chaque LLR binaire à zéro.

Si les bits transmis ont été traités au préalable par un encodeur canal (comme par exemple dans l'émetteur 10 détaillé à la figure 2), les modifications nécessaires au récepteur sont représentées en tirets sur la figure 8. Le bloc décodeur binaire à entrées/sorties souples 507 est utilisé conjointement avec le démodulateur souple 504, et le récepteur adaptatif 502, selon un ordonnancement choisi de manière appropriée, pour aider au décodage des bits d'information de l'émetteur. En particulier, on pourrait utiliser l'ordonnancement à deux boucles, décrite plus haut pour l'application SC-FDMA. Si les mots de code en sortie de l'encodeur canal ont été entrelacés par un entrelaceur binaire (voir par exemple émetteur 10 à la figure 2), alors les blocs desentrelaceur 506 et entrelaceur 508 sont inclus dans boucle d'itération entre le démodulateur souple 504 et le décodeur 507. Finalement, en considérant un récepteur itératif qui améliore aussi son estimation du canal au fur et à mesure des itérations, en plus du signal transmis, on peut considérer que les estimations $\bar{x}$ et la fiabilité $\bar{v}$ en sortie du démodulateur souple 504 sont dirigées aussi vers l'estimateur du canal 501 (flèches en pointillés sur la figure 8). Dans ce cas, l'estimateur 501 peut utiliser, à partir de la première auto-itération du récepteur, l'estimation $\bar{x}$ du signal transmise, conjointement avec l'observation du canal y, pour raffiner les paramètres du canal estimé, par exemple avec une méthode de type « moindres carrés » sur la totalité du bloc de données, au lieu d'utiliser seulement les pilotes.

En effet, l'invention porte, notamment, sur la technique de l'estimation du signal transmis, au niveau du démodulateur souple 504 qui travaille sur un modèle équivalent à un bruit additif gaussien. Elle peut être utilisée au sein de tout récepteur itératif qui passe par une telle étape de démodulation et se distingue des démodulateurs durs, utilisés entre autres dans les égaliseurs à retour de décision conventionnels, qui sont sujets à des problèmes de propagation de l'erreur. La technique considérée ici est différente aussi des techniques de démodulation souple utilisant une estimation a posteriori du signal, qui n'enlèvent pas de l'estimation du signal de retour l'information déjà connue par le récepteur, induisant ainsi le récepteur à l'erreur en le biaisant avec ses propres informations. Comparée à d'autres techniques d'estimation avec propagation d'espérance utilisées dans les récepteurs, le procédé selon l'invention fournit une fiabilité moyenne par bloc de données, ce qui permet de rendre le récepteur moins complexe et plus robuste face à des erreurs ponctuelles d'estimation. Par ailleurs, l'invention applique un lissage adaptatif sur le signal estimé, afin de fournir un degré de liberté additionnel qui permet de calibrer le rapport entre la robustesse des performances et la vitesse de convergence du récepteur vers les performances limites.

Par simplicité, les cas d'utilisations décrits ci-dessus, s'intéressent au traitement d'un signal mono-antennaire provenant d'un seul utilisateur. Nous allons montrer par un exemple d'usage que l'invention peut être utilisée au sein d'un récepteur multiutilisateur itératif.

L'invention s'applique aussi au cas mono-utilisateur single input multiple output (SIMO), c'est-à-dire à un système de communications avec un seul émetteur et un seul récepteur utilisant $R$ antennes à la réception.

L'invention s'applique aussi au cas mono-utilisateur multiple input multiple output (MIMO) où le seul émetteur est doté de plusieurs, $T_u$, antennes de transmission.

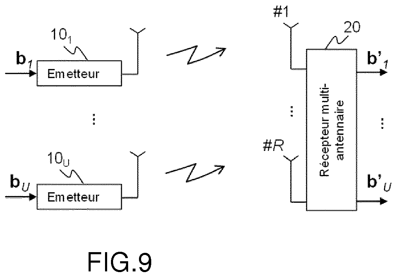

L'invention s'applique aussi à un système de transmission sans fil multi-utilisateurs, où les utilisateurs u $(10_1,..10_u)$ sont dotés d'une antenne $(T_u = 1)$ et le récepteur 20 est doté de $R$ antennes où $R$ peut être égal à un ou plus. Nous supposons que $U$ utilisateurs transmettent vers le récepteur et utilisent les mêmes ressources temporelles et fréquentielles. Le système est représenté en figure 9. Ce type de système est appelé aussi système Multiple Input Multiple Output (MIMO) distribué ou MIMO virtuel, ou simplement MIMO. Si ces utilisateurs utilisent des ressources temporelles et fréquentielles distinctes, permettant au récepteur d'apercevoir leurs signaux sans interférence (i.e. orthogonaux), le récepteur peut traiter chacun des utilisateurs comme un système SIMO/SISO mono-utilisateur indépendant.

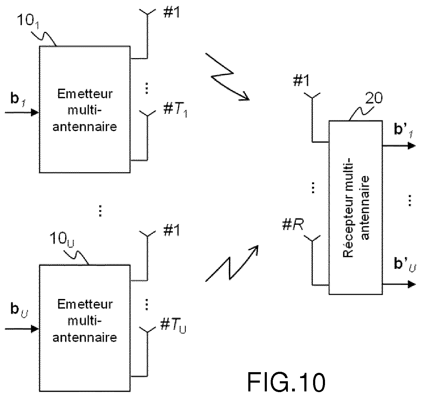

L'invention s'applique aussi à un système de transmission sans fil multiutilisateur, où les utilisateurs u $(10_1,..10_u)$ sont dotés d'une ou plusieurs antennes $(T_u \geq 1)$ et le récepteur 20 est doté de $R$ antennes ou $R \geq 1$. Nous supposons que $U$ utilisateurs transmettent vers le récepteur et utilisent les mêmes ressources temporelles et fréquentielles. Le système est représenté en figure 10. Ce type de système est appelé aussi système Multi-User MIMO (MU-MIMO). Si ces utilisateurs utilisent des ressources temporelles et fréquentielles distinctes, permettant au récepteur d'apercevoir leurs signaux sans interférence (i.e. orthogonaux), le récepteur peut traiter chacun des utilisateurs comme un système MIMO/MISO (Multiple Input Single Output) mono-utilisateur indépendant. Dans ce cas, seule l'interférence entre les signaux des antennes d'un même émetteur sera présente ou non-négligeable.

Nous décrivons l'invention d'abord dans le cas simple d'un récepteur multi-antennaire dans le cadre d'un système de type MU-MIMO. Nous notons que les autres scénarios ne sont que des cas particuliers de ce dernier et peuvent s'en déduire. Par exemple le cas MIMO avec un seul émetteur, s'obtient avec $U = 1$, l'émetteur est donc doté de $T_1$ antennes d'émission et le récepteur de $R$ antennes de réception. Nous notons que lorsque $T_1 = 1$, $R > 1$, nous obtenons un système SIMO mono utilisateur. Lorsque $U > 1$, $T_u = 1$, $R > 1$, le système MU-MIMO peut être vu aussi comme un système SIMO multi-utilisateur. Lorsque $U > 1$ et $R = 1$, nous sommes en présence d'un système MU-MISO.

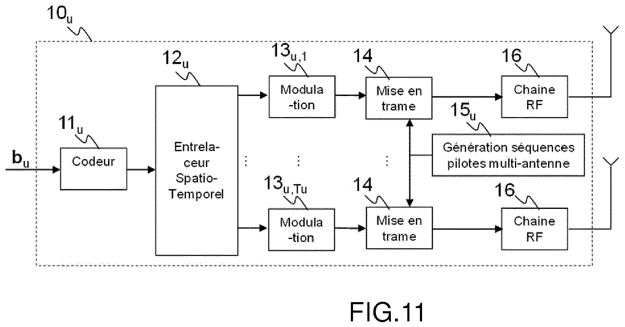

La figure 11 illustre le cas d'un émetteur multi-antenne générique $10_u$, et le schéma bloc fonctionnel associé. Le codeur correcteur d'erreur $11_u$ utilisé dans ce cas, n'est pas sujet à des contraintes différentes de celles d'un émetteur mono-antennaire, il prend en entrée des bits d'information, et fournit des bits encodées en sortie. L'entrelaceur spatio-temporel $12_u$ fournit $T_u$ flux de bits entrelacés indépendants en sortie. Chacun des flux de bits entrelacés, est ensuite modulé par un modulateur $13_{u,1}$, $13_{u,Tu}$ dédié à chaque antenne qui fournit en sortie des symboles tirés d'une constellation $X_{u,t}$, qui peut être différente d'une antenne à l'autre et d'un utilisateur à l'autre. Les remarques sur les constellations auxquelles l'invention reste applicable s'étend pour le cas de chacun de $T_u$ modulateurs d'un émetteur multi-antenne. Les blocs de mise en trame 14 organisent les symboles en utilisant la même stratégie pour chacun des antennes. Le bloc $15_u$ générateur de séquences pilotes est étendu au cas multi-antenne, avec une capacité de fournir des séquences pilotes distinctes pour les différentes antennes. Les exemples de modulations données, tel qu'OFDM, (SS)-SC-FDMA ou (SS)-SC, restent valables. Ensuite chacun des signaux préparés pour une antenne est passé par une chaîne radio fréquence (RF) 16, identique pour chaque antenne, et émis.

Le code correcteur, l'entrelaceur, le modulateur et la génération de séquences pilotes peuvent présenter des caractéristiques différentes choisies en fonction de l'utilisateur. De plus, le modulateur peut présenter des caractéristiques différentes choisies en fonction de l'antenne d'émission pour un utilisateur donné.

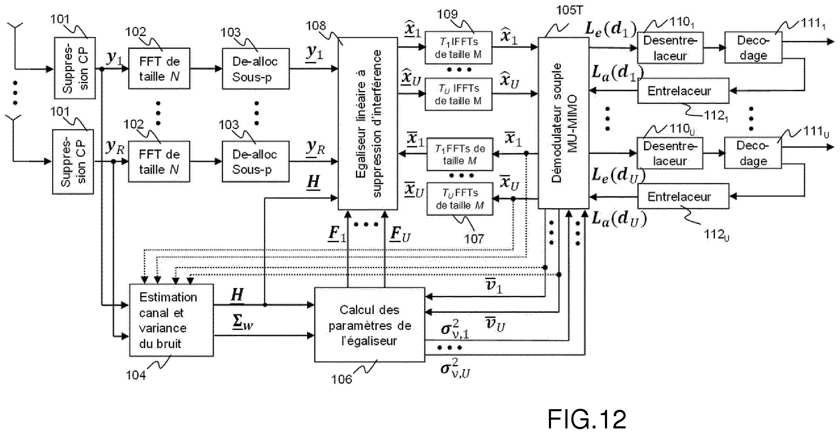

La figure 12 représente un schéma-bloc fonctionnel pour le récepteur dans le cas où le signal émis est obtenu avec une technique SC-FDMA avec CP. Cependant, comme pour le cas SISO, si le bloc de de-allocation des sous-porteuses coïncide avec l'identité (c'est-à-dire s'il est transparent), ce récepteur peut être utilisé dans un système SC ou SS-SC ou SS-SC-FDMA avec CP. En plus de cela, si à la place du bloc « suppression CP » on met un bloc d' « Extraction du bloc de traitement », le récepteur est adapté aux différents types de systèmes SC avec des séquences pilotes ou constantes à la place des CP. On suppose ici que le signal de l'émetteur est synchronisé au récepteur avec une fiabilité adéquate (i.e. inférieure à la durée du CP, si présent) et qu'un algorithme de synchronisation a fourni l'instant de synchronisation au récepteur.

Comme pour le cas SISO (figure 3), le récepteur MU-MIMO de la figure 12 contient deux boucles de rétroaction : une boucle d'auto-itération (itération demappeur souple / égaliseur) et une boucle de turbo-itération (itération demappeur souple / décodeur). En plus de cette structure, en présence de plusieurs utilisateurs, le récepteur doit décider, pour chaque boucle, les utilisateurs dont les signaux seront décodés / traités et quels signaux ne seront pas décodés/traités. Ici nous utilisons un procédé de traitement en parallèle de tous les signaux de tous les utilisateurs dans la boucle d'auto-itération, et une procédé de décodage en série par utilisateur (typiquement à partir de l'utilisateur reçu avec le rapport signal sur interférence plus bruit le plus fort) pour la boucle de turbo-itération. D'autres ordonnancements des traitements des utilisateurs et de leurs antennes sont cependant envisageables. En général, soit $\mathcal{U} = \{1, \ldots, U\}$ l'ensemble des identifiants des utilisateurs et soit

$$P_{\mathcal{U}} = \{u_i | u_i \cap u_j = \emptyset, i \neq j; \bigcup_i u_i = \mathcal{U}\}$$

une partition de $\mathcal{U}$. Par exemple, si $\mathcal{U} = \{1,2,3\}$ une partition pourrait être $u_1 = \{1,3\}$, $u_2 = \{2\}$. Un autre exemple d'ordonnancement est, pour chaque turbo-itération, de décoder d'abord les utilisateurs appartenant à $u_1$ puis faire des auto-itérations et puis décoder les utilisateurs appartenant à $u_2$ (sans ré-decoder ceux dans $u_1$). La composition de la partition des utilisateurs et l'ordre de ses sous-ensembles définissent l'ordonnancement en ce qui concerne le décodage des utilisateurs dans la boucle turbo. Les regroupements d'utilisateurs dans la partition peuvent se faire selon plusieurs métriques possibles, par exemple des utilisateurs ordonnancés selon la puissance de réception de leurs signaux, ou selon une métrique dérivée de la puissance de réception de leurs signaux et de la fiabilité/variance de leurs constellations, ou encore des métriques basées sur les écarts de puissance de réception et fiabilité entre couple d'utilisateurs, etc.

Comme pour le cas SISO, dans la suite, les paramètres en entrée ou en sortie des blocs 106, 108, 105T, à l'exception des observations initiales $y_1, \ldots, y_R$ sur les différentes antennes, et des estimations initiales H, $\underline{\Sigma}_w$, dépendent

de l'identifiant de la turbo-itération courante

$$\tau = 0, \dots, \mathcal{T},$$

de l'ensemble d'utilisateurs $u_i$ à décoder et éventuellement de l'identifiant de l'auto-itération courante

$$s = 0, \dots, \mathcal{S}_\tau.$$

La lettre « $T$ » est utilisée pour désigner que l'on considère $T$ antennes, c'est-à-dire tous les utilisateurs confondus, ou en formule $T = \sum_{u=1}^{U} T_u.$ Ce bloc a tous les $T$ signaux estimés en entrée. Pour présenter la stratégie d'ordonnancement plus clairement, supposons que nous avons une partition

$$P_{\mathcal{U}} = \{u_1, \dots, u_I\}$$

de $\mathcal{U}$ et une fonction d'ordre $\sigma(i)$ qui ordonne la partition de façon séquentielle $u_{\sigma(i)}$ du plus petit au plus grand selon un critère à déterminer (des exemples ont été donnés précédemment). Dans la suite, nous supposons que cette fonction d'ordre a été appliquée à la partition pour chaque turbo-itération et nous dénommons la suite ordonnée de la partition $(u_1, \dots, u_I)$ par simplicité et sans perte de généralité. A chaque turbo-itération, le récepteur essaye de décoder l'ensemble des utilisateurs $u_1$, puis il fait des auto-itérations éventuelles, puis (au sein de la même turbo-itération) il essaie de décoder les utilisateurs dans $u_2$ tout en sachant que des informations souples du décodage des utilisateurs dans $u_1$ existent et ainsi de suite. A une turbo-itération donnée, le récepteur essaie donc de décoder $u_i$ en ayant les informations souples de décodage déjà pour tout $u_j$ avec $j < i$. Une stratégie de décodage des utilisateurs purement séquentielle est obtenue en posant $u_i = \{i\}$. Une stratégie de décodage des utilisateurs purement parallèle est obtenue en posant

$$u_i = \mathcal{U}.$$

Ici, nous restons sur une explication avec un codeur par utilisateur comme en figure 11. Dans une autre variante où il y aurait un codeur par antenne d'émission au sein du même émetteur, si un utilisateur virtuel est attribué à chaque antenne, le même mécanisme peut être utilisé pour ordonnancer le décodage des signaux par antenne de tous les utilisateurs confondus.

Les quantités échangées par le récepteur itératif de la figure 12 dépendent en général de l'indice d'auto-itération, de turbo-itération et de l'ordonnancement des utilisateurs à décoder au sein d'une turbo-itération donnée (en particulier des utilisateurs déjà décodés au sein de la même turbo itération). L'indice de turbo-itération est incrémenté quand tous les utilisateurs ont été décodés (toute la partition de l'ensemble des utilisateurs a été parcourue selon la fonction d'ordre établie). Par exemple, le filtre égaliseur

$$\boldsymbol{f}_{t,u}^{(\tau, u_i, s)}$$

indique le filtre à appliquer pour égaliser le signal de l'antenne $t$ de l'utilisateur $u$, filtre qui est utilisé à la turbo-itération $\tau$ et à l'auto-itération $s$, en sachant que pendant la turbo-itération on veut décoder les utilisateurs de l'ensemble $u_i$ et sachant que les utilisateurs appartenant à tout $u_j$ avec $j < i$ ont déjà été décodés. Notez que l'indice de l'utilisateur u (en bas du symbole) peut appartenir ou pas à $u_i$, puisqu'il fait référence au filtre utilisé dans la boucle d'auto-itération (pas de turbo-itération), qui d'ailleurs suit un procédé de traitement parallèle décrit plus bas. Ceci-dit, dans la suite, pour simplifier la notation, l'indice $(\tau, u_i, s)$ ne sera pas forcement explicité, et nous nous référerons implicitement à la turbo-itération, aux utilisateurs en train d'être décodés couramment et à l'auto-itération courante.

Comme dans le cas SISO, il convient d'initialiser les blocs au début du traitement de réception et au début de chaque turbo-itération, donc pour chaque

$$\tau = 0, ..., \mathcal{T}.$$

Dans le cas MIMO-MU, il faut relancer cette phase d'initialisation, qui est importante en particulier pour le bloc demapping souple 105T, à chaque nouveau cycle d'auto-itérations, ce qui arrive pour chaque turbo-itération $\tau$ et, dans son sein, après chaque décodage des utilisateurs appartenant à $u_i$. Cette phase d'initialisation sera dénotée par convention avec un indice $s = -1$.

La description qui suit est donnée pour un cas SC-FDMA. Après avoir extrait les blocs de données en provenance des antennes du récepteur (à travers la suppression du CP dans le cas des systèmes SC avec CP ou du SC-FDMA, 101), les blocs sont soumis à une transformation de Fourier rapide 102 (Fast Fourier Transform - FFT) de taille $N$ (passage dans le domaine fréquentiel). Ensuite, les signaux en sortie des FFTs passent dans des blocs « De-alloc sous-p » 103 qui sélectionnent uniquement les éléments des vecteurs correspondants aux sous-porteuses où les signaux ont été envoyés (dé-allocation des sous-porteuses). En sortie de ces derniers blocs, les signaux sont représentés par $R$ vecteurs $\underline{y}_r$ de taille $M$. Pour faciliter et simplifier la lecture du document par la suite, ces vecteurs peuvent être concaténés l'un à la suite de l'autre dans un vecteur $\underline{y}$ de taille $MR$.

En parallèle, les séquences pilotes sont extraites des signaux en provenance de l'antenne de réception et envoyées dans le bloc « Estimation des canaux et de la variance du bruit » 104 et utilisées pour calculer une estimation de la réponse fréquentielle des canaux MIMO entre les émetteurs et le récepteur, sur les $M$ sous-porteuses d'intérêts (celles utilisées par les utilisateurs pour envoyer l'information). La réponse fréquentielle du canal entre l'antenne $t$ de l'utilisateur $u$ et l'antenne $r$ du récepteur est organisée dans un vecteur $\underline{h}_{r,t,u}$ de taille $M$, ou de façon équivalente, dans une matrice diagonale $\underline{H}_{r,t,u} = \mathrm{diag}(\underline{h}_{r,t,u})$ de taille $M$ x $M$. Pour faciliter la lisibilité du document, les matrices correspondantes à une antenne de transmission $t$ d'un utilisateur $u$ peuvent être concaténées dans une matrice bloc-diagonale $\underline{H}_{t,u}$ de taille $MR$ x $M$. Ces dernières peuvent être concaténées séquentiellement dans une matrice bloc-diagonale $\underline{H}$ de taille $MR$ x $MT$, les canaux des antennes des émetteurs sont concaténés sur la même ligne, pour la même antenne de réception. La quantité $T = \sum_{u=1}^{U} T_u$ est le nombre total de toutes les antennes d'émission, tous les émetteurs confondus. Le bloc « Estimation des canaux et de la variance du bruit » 104 fournit aussi une estimation de la variance du bruit. Ce bruit contient la contribution du bruit thermique sur les antennes de réception et d'éventuelles interférences dues à la plusieurs effets en provenance soit de traitement numérique, soit d'autres signaux extérieurs. On suppose que le bloc « Estimation des canaux et de la variance du bruit » fournit la matrice de covariance du bruit dans le domaine fréquentiel $\underline{\Sigma}_{\mathbf{w}}$ de taille $MR$ x $MR$. Typiquement, on a une estimation de canal et de covariance du bruit par bloc de données.

Une fois que les observations et les estimations du canal MU-MIMO global $\mathbf{H}$ et de la covariance du bruit sont disponibles, la première boucle de traitement (auto-itération) est activée. Au tout premier passage ($\tau = 0$), ou à chaque début de turbo-itération (

$$\tau = 1, ..., \mathcal{T},$$

, si

$$\mathcal{T} > 0$$

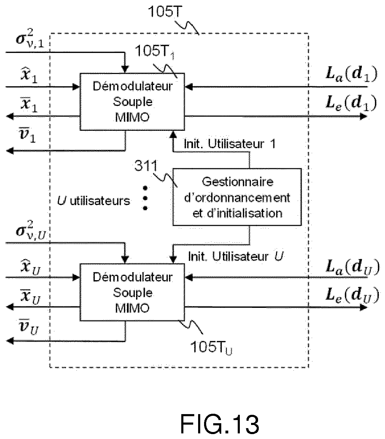

) et également après chaque décodage d'un ensemble d'utilisateurs, le bloc 105T, démodulateur souple, est activé pour une phase d'initialisation. Par convention nous associons cette phase à l'indice d'auto-itération $s = -1$. Au tout début d'une turbo-itération, si aucun paquet d'aucun utilisateur n'a pas encore été décodé, une commande d'initialisation ($s = -1$) est générée avec le bloc « Gestionnaire d'ordonnancement et d'initialisation » pour tous les utilisateurs, ce qui fait que le bloc 105T (l'explication est donnée en relation aux figures 12 et 13) :

   a) vide ses registres internes ;
   b) met à zéro les entrées des $U$ vecteurs (signaux égalisés) $\hat{x}_u$ de longueur $T_u M$ formés par la concaténation des vecteurs $\hat{x}_{t,u}$ de taille $M$ (signal égalisé de l'antenne $t$ de l'utilisateur u) ;

   c) pose les entrées des vecteurs $\boldsymbol{\sigma}_{v,u}^2 = [\sigma_{v,1,u}^2, ..., \sigma_{v,t,u}^2, ..., \sigma_{v,T_u,u}^2]$ à l'infini ou toute autre valeur faisant office de l'infini ;
   d) à la toute première activation de la phase d'initialisation ($\tau = 0$) les informations a priori en provenance des blocs

$112_u$ sont mises par convention égales à des vecteurs de zéros ;

e) les blocs $105T_u$ de la figure 13 s'exécutent avec un indice d'auto-itération $s = -1$, notamment en utilisant d'éventuelles entrées non-nulles d'information a priori en provenance des décodeurs $111_u$ et plus précisément des blocs $112_u$ (pour tous les $u = 1, ..., U$). La notation $T_u$ est une convention indiquant à la fois que c'est le démodulateur de l'utilisateur u (en indice) et que l'entrée est égale aux signaux égalisés des $T_u$ antennes de l'utilisateur u. Ainsi, pour tout $u$, le bloc $105T_u$ génère une estimation souple $\overline{x}_u$ de longueur $T_u M$ formée par la concaténation des vecteurs $\overline{x}_{t,u}$ de taille $M$ (estimation souple du signal de l'antenne $t$ de l'utilisateur $u$) et le vecteur de leurs fiabilités correspondantes $\overline{v}_u = [\overline{v}_{1,u}, ..., \overline{v}_{t,u}, ..., \overline{v}_{T_u,u}]$, qui collecte une fiabilité par antenne de l'utilisateur $u$.

Nous notons qu'à la toute première activation de la phase d'initialisation ($\tau = 0$) les estimations souples $\overline{x}_u$ seront des vecteurs nuls et $\overline{v}_{t,u} = \sigma_x^2$, pour tout $t$ et $u$, où $\sigma_x^2$ est l'énergie moyenne des symboles des constellations d'origine de l'utilisateur (on suppose ici que toutes les constellations ont la même énergie moyenne, ce qui n'est pas restrictif).

f) Les sorties vers les blocs $110_u$, désentrelaceurs, ne sont pas calculées parce qu'inutiles.

Pendant une turbo-itération donnée, quand les paquets de l'ensemble des utilisateurs $u_i$ ont été décodés, en ayant ainsi généré des informations souples, plusieurs stratégies d'initialisation sont possibles. La première est que le bloc « Gestionnaire d'ordonnancement et d'initialisation » figure 13 génère une commande d'initialisation ($s = -1$) pour tous les utilisateurs, ce qui produit une procédure d'initialisation comme celle décrite pour le cas « aucun paquet d'aucun utilisateur n'a pas encore été décodé » précédemment décrit. Une autre stratégie d'initialisation est que le bloc « Gestionnaire d'ordonnancement et d'initialisation » génère une commande d'initialisation ($s = -1$) pour tous les utilisateurs

$$u \in \bigcup_{j \geq i} u_j,$$

c'est-à-dire que le démodulateur souple MU-MIMO 105T utilise l'information a priori en provenance des décodeurs des utilisateurs qui viennent d'être décodés et des utilisateurs qui n'ont pas encore été décodés, alors que pour les autres utilisateurs

$$u \in \bigcup_{j < i} u_j$$

le demappeur souple va utiliser les estimations souples $\overline{x}_u$ et leurs fiabilités correspondantes $\overline{v}_u$ déjà disponibles au terme du cycle précédant d'auto-itérations. Cela permet de profiter d'améliorations éventuelles dans la fiabilité des estimations déjà calculées. Bien sûr ce ne sont pas les uniques stratégies possibles (il suffit de changer l'ensemble des utilisateurs pour lesquels l'initialisation est effectuée) et les stratégies peuvent aussi changer selon l'indice $\tau$ de turbo-itérations.

L'estimation du canal global MU-MIMO $H$ et de la matrice de covariance du bruit sont passées au bloc « calcul des paramètres de l'égaliseur» 106. Ce bloc prend aussi en entrée les $\overline{v}_u$, $u = 1, ..., U$ en provenance du démodulateur souple MU-MIMO 105T qui mesure la fiabilité moyenne des symboles envoyés par antenne de chaque utilisateur dans le bloc de données qui est en train d'être traité (la moyenne est donc sur la longueur de bloc $M$ dans le cas de l'exemple). Sans turbo-itération $\tau = 0$ et auto-itération $s = 0$, quand il n'y a pas d'information souple en provenance du décodeur ni de l'égaliseur, après la phase d'initialisation du bloc 105T $\overline{v}_{t,u} = \sigma_x^2$, pour tout $t$ et $u$, où $\sigma_x^2$ est l'énergie moyenne des symboles des constellations d'origine de l'utilisateur, comme décrit ci-dessus. Dans ce cas, l'égaliseur calculé par le calcul des paramètres de l'égaliseur 106 coïncide avec un égaliseur MU-MIMO MMSE linéaire traditionnel implémenté dans le domaine fréquentiel. Au cours des turbo-itérations successives, ou pendant une turbo itération, lorsque de l'information souple en provenance des décodeurs des certains utilisateurs $u$ est disponible (par exemple parce qu'ils ont déjà été décodés une fois), après la phase d'initialisation, pour toutes les antennes $t$ d'émission de ces utilisateurs $u$, le démodulateur souple MU-MIMO renvoie le vecteur d'estimations souples non nul,

$$\overline{x}_{t,u} = E_{\mathcal{P}_{t,u}}[x_{t,u}],$$

et

$$\bar{v}_{t,u} = \frac{1}{M} \sum_{m=0}^{M-1} Var_{\mathcal{P}_{t,u}}[x_{m,t,u}],$$

i.e. la moyenne des variances des symboles envoyés sur l'antenne $t$ de l'utilisateur $u$, calculée sur l'information a priori en provenance du décodeur. Dans ce cas, l'égaliseur obtenu par le calcul égaliseur 106 coïncide avec un turbo-égaliseur MMSE linéaire à effacement d'interférence traditionnel implémenté dans le domaine fréquentiel (soit selon une stratégie série, soit parallèle en fonction de l'ordonnancement des utilisateurs $u$ décodés pendant la turbo-itération). Dans le cas plus général, avec $s > 0$, le bloc de calcul égaliseur 106 fournit en sortie à chaque auto-itération les coefficients des égaliseurs $\underline{f}_{t,u}$ de taille $MR$ dans le domaine fréquentiel, pour l'égalisation du signal en provenance de l'antenne $t$ de l'utilisateur $u$. Ce filtre agit sur les observations concaténées $\boldsymbol{y}$ dans le domaine fréquentiel. Ceci est en général un turbo-égaliseur linéaire MMSE auto-itéré avec retour (feedback) EP. Les filtres d'un même utilisateur peuvent être regroupés par commodité dans une matrice $\underline{F}_u = [\underline{f}_{1,u}, \dots, \underline{f}_{T_u,u}]$ de taille $MR \times T_u$.

Le bloc de calcul des paramètres de l'égaliseur fournit aussi en sortie les vecteurs $\boldsymbol{\sigma}_{v,u}^2 = [\sigma_{v,1,u}^2, \dots, \sigma_{v,t,u}^2, \dots, \sigma_{v,T_u,u}^2]$, $u = 1, \dots, U$ qui collectent des estimations du bruit après égalisation pour chaque bloc de données de l'antenne $t$ de l'utilisateur $u$, calculées sous l'hypothèse de bruit gaussien et modèle additif $\hat{\boldsymbol{x}}_{t,u} = \boldsymbol{x}_{t,u} + \boldsymbol{v}_{t,u}$. Appelons $\underline{\boldsymbol{\sigma}}_w^2 = \text{diag}(\underline{\boldsymbol{\Sigma}}_w)$ le vecteur des covariances sur la diagonale de la matrice de covariance du bruit. On calcule d'abord la matrice suivante (représentant la covariance du signal reçu en intégrant l'information souple en provenance du démodulateur souple MU-MIMO souple) :

$$\boldsymbol{\Sigma}_d = \text{diag}(\underline{\boldsymbol{\sigma}}_w^2) + \sum_{u=1}^{U} \sum_{t=1}^{T_u} \bar{v}_{t,u} \underline{\boldsymbol{H}}_{t,u} \underline{\boldsymbol{H}}_{t,u}^H \qquad (21)$$

Cette matrice est diagonale par blocs. Le récepteur doit calculer son inverse et il existe des méthodes efficaces en termes de calculs ou de mémoire pour implémenter ce calcul. La matrice inverse est de taille $MR \times MR$ et elle est aussi diagonale par blocs qui ont une taille de $M \times M$ correspondante à la longueur du bloc de données :

$$\boldsymbol{\Sigma}_d^{-1} = \begin{pmatrix} diag(\lambda_{1,1}) & \cdots & diag(\lambda_{1,R}) \\ \vdots & \ddots & \vdots \\ diag(\lambda_{R,1}) & \cdots & diag(\lambda_{R,R}) \end{pmatrix} \qquad (22)$$

où la matrice $diag(\lambda_{r,r'})$ capture l'inverse de la cross-covariance du signal reçu entre deux antennes $r$ et $r'$ du récepteur. Les sorties sont calculées de la façon suivante, pour tout $u = 1, \dots, U$ et $t = 1, \dots, T_u$ :

$$\bar{s}_{t,u} = \frac{1}{M} \sum_{r=1}^{R} \underline{\boldsymbol{h}}_{r',t,u}^H \sum_{r'=1}^{R} \lambda_{r,r'} \odot \underline{\boldsymbol{h}}_{r',t,u} \qquad (23)$$

$$\underline{\boldsymbol{f}}_{r,t,u} = \frac{1}{\bar{s}_{t,u}} \sum_{r'=1}^{R} \lambda_{r,r'} \odot \boldsymbol{h}_{r',t,u}, \qquad (24)$$

$$\sigma_{v,t,u}^2 = \frac{1}{\bar{s}_{t,u}} - \bar{v}_{t,u} \qquad (25)$$

Le vecteur total $\underline{f}_{t,u}$ résulte de la concaténation des vecteurs des filtres $\underline{f}_{r,t,u}$ pour $r = 1, \dots, R$.

Les vecteurs de signaux reçus sur des antennes et transformés en fréquence $\underline{\boldsymbol{y}}_r$ de taille $M$ sont passés au bloc « égaliseur linéaire à suppression d'interférence » 108 qui reçoit aussi en entrée les coefficients des égaliseurs $\underline{\boldsymbol{F}}_u$,

pour tous les utilisateurs $u$ (qui sont traités parallèlement), la réponse fréquentielle globale du canal MU-MIMO $\underline{H}$ et les vecteurs de taille $M$ d'estimations souples des symboles émis dans le domaine fréquentiel $\overline{\underline{x}}_u$, pour tous les utilisateurs $u$, qui sont générés à partir des vecteurs de taille $M$ d'estimations souples dans le domaine temporel $\overline{x}_u$, en provenance du démodulateur souple MU-MIMO 105T. La fiabilité globale de ces estimations par antenne de l'utilisateur $u$ est représentée par les valeurs de $\overline{v}_u = [\overline{v}_{1,u}, \ldots, \overline{v}_{t,u}, \ldots \overline{v}_{T_u,u}]$, plus elle est proche de 0 plus la fiabilité est grande (ces valeurs représentent des variances). L'égaliseur LE-IC 108 réalise la suppression d'interférence (IC) pour l'ISI, le MAI et le MUI dans le cas général MU-MIMO. L'égaliseur 108 produit des vecteurs $\hat{\underline{x}}_{t,u}$ de taille $M$ qui représentent des estimations des symboles de chaque antenne de chaque utilisateur dans le domaine fréquentiel.

Les vecteurs $\hat{\underline{x}}_{t,u}$ sont ensuite passés à nouveau dans le domaine temporel à travers $T_u$ IFFT normalisées de taille $M$ (109), pour obtenir des vecteurs $\hat{x}_{t,u}$ représentant les signaux temporels égalisés, qui sont envoyés au démodulateur souple MU-MIMO 105T. Ce dernier, à partir des $\hat{x}_{t,u}$, des correspondantes variances du bruit après égalisation $\sigma_{v,t,u}^2$ et des informations souples a priori, par exemple sous la forme de métriques Log-Likelihood Ratios (LLRs) $L_a(d_u)$ en provenance des décodeurs, produit les estimations souples des symboles émis dans le domaine temporel $\overline{x}_u$, pour tous les utilisateurs $u$, ainsi que leurs fiabilités correspondantes $\overline{v}_u$. Si la boucle de turbo-itération est activée après, le demappeur souple produit aussi des informations souples pour chaque bit des signaux des utilisateurs appartenant à $\mathcal{u}_i$, par exemple sous la forme de LLR extrinsèques $L_e(d_u)$,

$$u \in \mathcal{u}_i.$$

A ce moment, si l'ordonnancement commande d'exécuter une boucle d'auto-itération, les traitements poursuivent avec une réactivation des blocs 107, 106, 108, 109, 105T.

Autrement, si l'ordonnancement commande d'exécuter une nouvelle boucle d'auto-itération ou de continuer la boucle de turbo-itération courante, les métriques souples $L_e(d_u)$,

$$u \in \mathcal{u}_i$$

sont ensuite désentrelacées par les blocs $110_u$ pour les utilisateurs

$$u \in \mathcal{u}_i.$$

Ensuite, les métriques souples sont envoyées aux décodeurs $111_u$ des utilisateurs

$$u \in \mathcal{u}_i$$

qui produisent des estimations des probabilités des bits d'informations envoyés (par exemple des probabilités a posteriori), si la dernière turbo-itération est atteinte, i.e.

$$\tau = \mathcal{T}.$$

Elles sont utilisées pour décider les bits envoyés avec des détecteurs à seuil. Autrement, les décodeurs $111_u$ des utilisateurs

$$u \in \mathcal{u}_i$$

produisent aussi des estimations des bits codés envoyés c'est-à-dire des probabilités extrinsèques (EXT), par exemple sous forme de LLRs, qui mesurent la probabilité que les bits codés envoyés soient 0 et 1. Les EXT sont ensuite envoyées aux entrelaceurs $112_u$ des utilisateurs

$$u \in \mathcal{u}_{\text{i}}.$$

Les EXT entrelacées des utilisateurs

$$u \in \mathcal{u}_{i}{}'$$

deviennent des informations a priori $L_a(d_u)$ et entrent dans le démodulateur souple MU-MIMO 105T. Avant de repasser par le démodulateur souple MU-MIMO, l'indice qui parcourt la partition des utilisateurs $P_u$ est incrémenté à $i$ + 1, sauf si $i = I$. Dans ce dernier cas, on vient de décoder les derniers utilisateurs de la partition, donc l'indice pour parcourir la partition est réaffecté à $i = 1$ et l'indice de turbo-itération est incrémenté à $\tau$ + 1 (nouvelle turbo-itération qui commence).

Le démodulateur souple MU-MIMO 105T traite ses entrées et la procédure continue en fonction de l'activation d'une auto-itération ou d'une turbo-itération.

Le bloc «égaliseur linéaire à suppression d'interférence » 108 réalise la suppression d'interférence (IC) pour l'ISI, le MAI et le MUI et égalise les signaux reçus dans le domaine fréquentiel et spatial. Comme pour le cas SISO, la différence par rapport à l'état de l'art existant réside dans les entrées $\overline{\boldsymbol{x}}_u$ (estimations des symboles dans le domaine fréquentiel pour tous les utilisateurs), ainsi que les filtres utilisés, ces quantités étant calculées selon le procédé de l'invention.

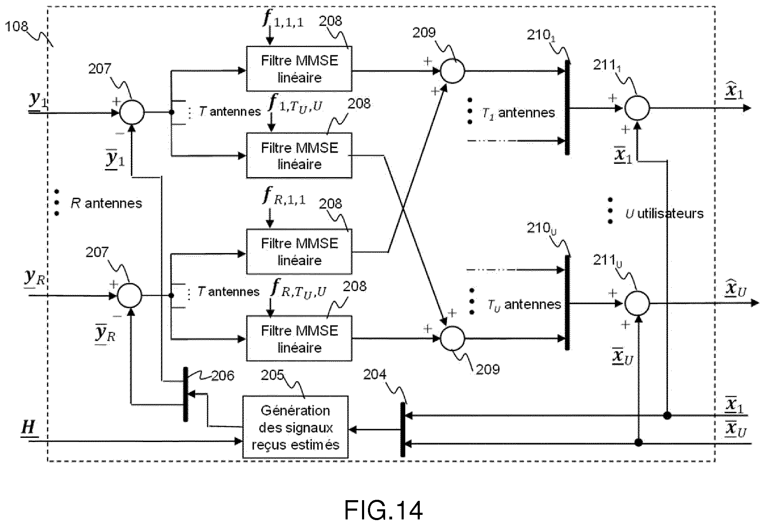

La figure 14 décrit en détail le filtrage et le procédé de suppression de l'interférence. Le bloc de concaténation 204 sert simplement à concaténer les vecteurs des estimations souples $\overline{\boldsymbol{x}}_u$ de taille $MT_u$ dans un unique vecteur $\overline{\boldsymbol{x}}$ de taille $MT$. Le bloc « Génération des signaux reçus estimés » 205 génère une estimation des $R$ signaux reçus (partie utile plus interférences de tout type) au récepteur, concaténés dans le vecteur de sortie $\underline{\boldsymbol{H}\overline{\boldsymbol{x}}}$ Nous notons que pour $\tau = s = 0$, $\overline{\boldsymbol{x}}$ est un vecteur de zéros (pas d'estimation disponible). Le séparateur 206 sépare le vecteur $\underline{\boldsymbol{H}\overline{\boldsymbol{x}}}$ en $R$ vecteurs de taille $M$, un pour chaque voie du récepteur. Ces derniers sont soustraits par les sommes vectorielles 207 aux symboles reçus dans le domaine fréquentiel $\underline{\boldsymbol{y}}_r$. On voit bien que le procédé est ici en parallèle, dans le sens que toutes les estimations disponibles dans la boucle d'auto-itération des signaux des utilisateurs sont utilisées pour générer les signaux reçus. Ceci permet de prendre en compte (à travers l'estimation de canal global) l'influence que les utilisateurs ont les uns sur les autres, et que les antennes ont les unes sur les autres. Les signaux correctifs en sortie des sommes 207, sont envoyés à un banc de filtres MMSE linéaire 208 qui appliquent singulièrement le même traitement du cas SISO mais en utilisant les filtres $\underline{\boldsymbol{f}}_{r,t,u}$ calculés par le bloc 106, pour tout $u$ et $t$. Cela est fait pour toutes les antennes de réception. Les signaux correctifs égalisés (de taille $M$) en sortie des filtres (égaliseurs) 208 et qui correspondent au même utilisateur $u$ et à la même antenne $t$, sont sommés ensemble par les sommes vectorielles 209. Cela revient à combiner ensemble des estimations des mêmes signaux égalisés en provenance d'antennes de réception différentes pour améliorer la fiabilité des estimations. Les blocs de concaténation $210_u$ concatènent ensemble les signaux des $T_u$ antennes d'un même utilisateur $u$. Enfin, les sommes vectorielles $211_u$ génèrent les estimations fréquentielles (de taille $T_u M$) des symboles égalisés en ajoutant les estimations des signaux utiles aux signaux correctifs filtrés en provenance des bancs de filtres 208, comme une généralisation des sommes issues du bloc 201 au cas SISO.

## Structure du démodulateur souple MU-MIMO

Nous détaillons par la suite la structure du démodulateur souple MU-MIMO 105T. Comme il a été écrit pour la phase d'initialisation, le démodulateur souple MU-MIMO 105T représenté en figure 13, se compose de $U$ démodulateurs souples MIMO séparés $105T_u$, qui traitent séparément les signaux égalisés correspondant aux antennes d'émission d'un même utilisateur. Le gestionnaire d'ordonnancement et d'initialisation 311 (figure 13) active tous les démodulateurs souples MIMO pendant les auto-itérations en générant ainsi toutes les estimations souples $\overline{\boldsymbol{x}}_u$ et leurs fiabilités moyennes correspondantes $\overline{v}_u$ afin que les blocs implémentant les fonctions liées à l'égalisation à suppression d'interférence puissent avoir des estimations des signaux de tous les utilisateurs. En revanche, quand un cycle d'auto-itérations prend fin parce que $s = S_\tau$ le gestionnaire d'ordonnancement configure seulement les démodulateurs souples MIMO des utilisateurs

$$u \in \mathcal{U}_i$$

qui doivent être décodés selon l'ordonnancement courant pour que ces démodulateurs calculent les LLRs extrinsèques $L_e(d_u)$ à envoyer aux décodeurs des utilisateurs intéressés. Quand les nouvelles informations a priori $L_a(d_u)$,

$$u \in \mathcal{U}_i$$

sont disponibles à l'entrée du démodulateur souple MU-MIMO 105T, le gestionnaire 311 va déclencher l'initialisation des démodulateurs souples MIMO 105T$_u$ selon la stratégie choisie (voir description plus haut pour le turbo-récepteur MU-MIMO de figure 12). Si $i = I$ et

$$\tau = \mathcal{T},$$

la boucle turbo est terminée et la dernière turbo-itération est achevée. Dans ce cas il faut réinitialiser $\tau = 0$, $s = -1$, $i = 1$ pour le prochain paquet. Si $i = I$ mais

$$\tau < \mathcal{T},$$

la boucle turbo courante est terminée mais il y a encore des boucles turbo programmées, donc $\tau$ est mis à jour avec une valeur $\tau + 1$ et le gestionnaire active les démodulateurs souples 105T$_u$ en phase d'initialisation selon la stratégie définie en posant $s = -1$, $i = 1$. Si $i < I$, la boucle turbo n'est pas finie et le gestionnaire 311 va mettre à jour l'index $i$ de la partition à $i + 1$ et redémarrer une séquence de $\mathcal{S}_\tau$ auto-itérations en démarrant par une phase d'initialisation ($s = -1$). Le nombre total d'auto-itérations pendant la boucle turbo $\tau$ sera de $\mathcal{S}_\tau I$. Pour une stratégie de décodage en série, ce nombre sera donc de $\mathcal{S}_\tau U$, alors qu'il sera de $\mathcal{S}_\tau$ pour une stratégie de décodage en parallèle.

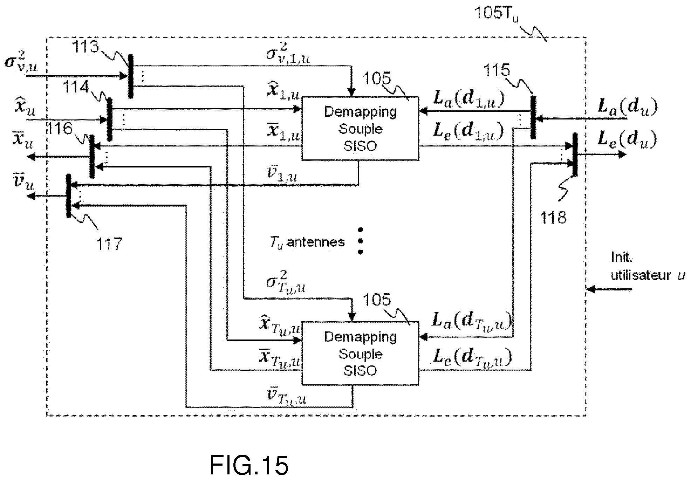

Nous allons détailler le bloc de démodulateur souple MIMO 105T$_u$, qui s'applique à un émetteur MIMO comme celui illustré à la figure 11. Ce bloc est illustré à la figure 15. Le démodulateur souple MIMO 105T$_u$ est composé de $T_u$ démodulateurs souple SISO 105 déjà décrits (voir figure 5) qui sont tous activés au même temps par la commande en provenance du gestionnaire d'ordonnancement et d'initialisation 311 (figure 13). Chaque démodulateur souple SISO 105 traite les vecteurs de données qui correspondent à une des antennes d'émission de l'utilisateur $u$, en utilisant sa constellation correspondante $X_{t,u}$. A ce fin, le bloc de séparation 113 déconcatène le vecteur $\sigma^2_{v,u}$ de taille $T_u$ des variances du bruit residuel, en $T_u$ valeurs $\sigma^2_{v,t,u}$ à envoyer aux démodulateurs. Le bloc de séparation 114 déconcatène le vecteur $\hat{x}_u$ représentant signaux après égalisation et suppression d'interférence de taille $MT_u$, en $T_u$ vecteurs $\hat{x}_{t,u}$ à envoyer aux démodulateurs. Le bloc de séparation 115 déconcatène le vecteur $L_a(d_u)$ représentant les LLR a priori en provenance du décodeur de l'utilisateur $u$ et de taille égale à la somme de la longueur des paquets codés sur les $T_u$ antennes de l'utilisateur, en $T_u$ vecteurs $L_a(d_{t,u})$, représentant les LLRs a priori du paquet envoyé sur l'antenne $t$ de l'utilisateur $u$, à envoyer aux démodulateurs. Après traitement, les dispositifs de concaténation 116, 117, 118 opèrent de façon inverse aux blocs 113, 114, 105, respectivement sur les fiabilités $\bar{v}_{t,u}$, les estimations souples des symboles émis $\bar{x}_{t,u}$ et les LLR extrinsèques $L_e(d_{t,u})$ pour former les vecteurs $\bar{v}_u$, $\bar{x}_u$ et $L_e(d_u)$.

Dans le cas particulier d'un système mono-utilisateur (MIMO, autrement dit le cas où $U = 1$ avec $T_1$ antennes d'émission, un seul bloc de démodulateur souple MIMO 105T$_u$ est utilisé au récepteur MIMO, et les symboles émis sont dénotés $x_{t,1}$, avec le mot de code correspondant $d_1$.

L'invention s'applique aussi trivialement pour l'homme de l'art aux schémas avec des codes espace-temps par blocs de type orthogonal, comme celui d'Alamouti et décrit pour le cas SC-FDMA dans l'article [12], par exemple. Ces schémas ne sont pas représentés. Dans le cas des codes espace-temps par blocs de type orthogonal, il existe des méthodes de détection connues de l'homme de l'art [12] à maximum de vraisemblance ou à maximum de probabilité a posteriori avec complexité réduite. L'invention décrite ici peut s'appliquer après avoir adapté les calculs du bloc d'égalisation linéaire à suppression d'interférence 502 et le bloc de calcul des paramètres du récepteur 503, par exemple comme décrit dans [12] de façon à prendre en compte la structure du code espace-temps par blocs de type orthogonal utilisé à l'émetteur.

**Références citées**

[1] P. Chevalier, F. Pipon, "New Insigths into Optimal Widely Linear Array Receivers for the Demodulation of BPSK, MSK, and GMSK Signais corrupted by Noncircular Interferences - Application to SAIC", IEEE Trans. on Signal Processing, v. 54, n. 3, pp: 870-883, March 2006.

[2] M. Tüchler, A. C. Singer, "Turbo Equalization: An Overview," IEEE Trans. Information Theory, vol. 57, no. 2, pp. 920-952, fevrier 2011.

[3] Thomas Minka, « Divergence measures and message passing », Microsoft Research, MSR-TR-2005-173, décembre 2005.

[4] S. ten Brink, J. Speidel, R.-H. Yan, "Iterative Demapping and Decoding for Multilevel Modulation", IEEE GLOBECOM 1998.

[5] Q. Wang, Q. Xie, Z. Wang, S. Chen, L. Hanzo, "A Universal Low-Complexity Symbol-to-Bit Soft Demapper", IEEE Trans. On Vehicular Technology, 2014.

[6] D. Auras, R. Leupers, G. Ascheid, "A Novel Class of Linear MIMO Detectors with Boosted Communications Performance: Algorithm and VLSI Architecture", IEEE ISVLSI 2014.

[7] I. Collings, M. Butler and M. McKay, "Low Complexity receiver design for MIMO bit-interleaved coded modulation", IEEE ISSSTA 2004.

[8] N. Benvenuto, S. Ciccotosto, and S. Tomasin, "Iterative Block Fractionally Spaced Nonlinear Equalization for Wideband Channels", IEEE Wireless Communications Letters, vol. 4, no. 5, pp. 489-492, October 2015.

[9] L. Martoyo, T. Weiss, F. Capar, F.K. Jondral, "Low Complexity CDMA Downlink Receiver based on Frequency Domain Equalization", IEEE VTC'03 Fall, 2003.

[10] T. Obara, F. Adachi, "MMSE Weight for Single Carrier Overlap FDE", Proc. IEEE Asia Pacific Conférence on Communications, 2011.

[11] S. Tomasin, "Overlap and save frequency domain DFE for throughput efficient single carrier transmission", IEEE PIMRC 2005.

**[12]** S.-R. Lee, F.-B. Ueng, H.-F. Wang, and Y.-K. Chang, "Iterative multiuser détection for LDPC MIMO SC-FDMA communication systems", Wiley Trans Emerging Tel Tech. doi: 10.1002/ett.2773, 15 janvier 2014.

[13] N. Benvenuto, S. Tomasin, « Iterative Design and Détection of a DFE in the Frequency Domain », IEEE Trans. on Commun., v. 53, n. 11, pp: 1867-1875, Nov. 2005.

[14] M. Witzke, S. Bäro, F. Schreckenbach, and J. Hagenauer, "Iterative détection of MIMO signais with linear detectors," in Proc. Asilomar Conférence on Signais, Systems and Computers (ACSSC), Pacific Grove, CA, USA. IEEE, Nov. 2002.

[15] I. Santos, J. J. Murillo-Fuentes, R. Boloix-Tortosa, E. A. de Reyna, and P. M. Olmos, "Expectation propagation as turbo equalizer in ISI channels," IEEE Trans. Commun., vol. 65, no. 1, pp. 360-370, Jan. 2017.

[16] K. Wu, G. Ren, X. Meng, J. Wu, Q. Wang, "Spectral-Efficient Band Allocation Scheme for Frequency-Domain Pulse Shaping-Based SC-FDMA Systems", IEEE Transactions on Vehicular Technology, Vol.: 66, n: 9, pp: 8249 - 8262, Sept. 2017.

[17] I. Santos, J. J. Murillo-Fuentes, P. M. Olmos, "Block expectation propagation equalization for ISI channels", 23rd European signal processingconference (EUSIPCO 2015), pp 379-383, 31 août 2015.

**Revendications**

1. Procédé pour améliorer l'estimation des symboles d'un signal modulé et de la fiabilité de l'estimée, le signal comprenant un ou plusieurs blocs de données, comportant au moins les étapes suivantes exécutées au niveau d'un processeur :

• Une étape de calcul d'estimations souples (301) du signal qui calcule les symboles estimés $\mu_m^{(\tau,s)}$ et leurs fiabilités $\gamma_m^{(\tau,s)}$ en utilisant en entrée des distributions de probabilité obtenues en normalisant (305B) les vraisemblances gaussiennes calculées (304) en utilisant les symboles estimés $\hat{x}^{(\tau,s)} = [\hat{x}_0^{(\tau,s)} \cdots \hat{x}_m^{(\tau,s)} \cdots \hat{x}_{M-1}^{(\tau,s)}]$ du bloc de données courant ainsi que leur fiabilité $\sigma_v^{2(\tau,s)}$, les sym-

boles estimés $\mu_m^{(\tau,s)}$ du bloc étant **caractérisés par** une mesure de fiabilité moyenne $\overline{\gamma}^{(\tau,s)}$ (302),

• Une étape de division gaussienne (306) du signal estimé $\mu^{(\tau,s)} = [\mu_0^{(\tau,s)} \cdots \mu_m^{(\tau,s)} \cdots \mu_{M-1}^{(\tau,s)}]$ par le signal estimé $\hat{x}^{(\tau,s)}$ pour générer une estimation souple du signal transmis $\overline{x}'^{(\tau,s+1)}_m$ et une variance extrinsèque (fiabilité) moyenne $\overline{v}'^{(\tau,s+1)}$ avec:

$$\overline{x}'^{(\tau,s+1)}_m = \frac{\mu_m^{(\tau,s)} \sigma_v^{2(\tau,s)} - \hat{x}_m^{(\tau,s)} \overline{\gamma}^{(\tau,s)}}{\sigma_v^{2(\tau,s)} - \overline{\gamma}^{(\tau,s)}}, \quad m = 0, \dots, M-1$$

$$\overline{v}'^{(\tau,s+1)} = \frac{\sigma_v^{2(\tau,s)} \overline{\gamma}^{(\tau,s)}}{\sigma_v^{2(\tau,s)} - \overline{\gamma}^{(\tau,s)}},$$

• Une étape de lissage adaptatif (307) sur le signal estimé par la division gaussienne et sur les mesures de fiabilités, pour fournir une estimation $\overline{x}^{(\tau,s+1)}$ du signal transmis et une mesure de fiabilité $\overline{v}^{(\tau,s+1)}$ associée.

**2.** Procédé selon la revendication 1 **caractérisé en ce que** l'on calcule une estimation souple du signal transmis $\overline{x}'^{(\tau,s+1)}_m$ et une variance extrinsèque $\overline{v}'^{(\tau,s+1)}$:

$$\overline{x}'^{(\tau,s+1)}_m = \mu_m^{(\tau,s)} \text{ pour } \sigma_v^{2(\tau,s)} \leq \overline{\gamma}^{(\tau,s)} + \varepsilon, \quad m = 0, \dots, M-1$$

$$\overline{v}'^{(\tau,s+1)} = \overline{\gamma}^{(\tau,s)} \text{ pour } \sigma_v^{2(\tau,s)} \leq \overline{\gamma}^{(\tau,s)} + \varepsilon,$$

avec $\varepsilon \geq 0$.

**3.** Procédé selon l'une des revendications 1 à 2 comprenant en outre :

• Une étape de calcul de distributions a priori du signal transmis (300) à partir d'entrées/sorties souples binaires,
• Une étape de calcul d'estimations souples (301) du signal transmis en utilisant en entrée des distributions de probabilité a posteriori (305A), calculées à partir des vraisemblances gaussienne du signal estimé $\hat{x}^{(\tau,s)}$ (304) et les distributions a priori calculées à l'étape précédente (300), ladite estimation est **caractérisée par** une mesure de fiabilité moyenne $\overline{\gamma}^{(\tau,s)}$ (302).

**4.** Procédé selon l'une des revendications 1 à 3 **caractérisé en ce qu'**il comporte en outre :

• Une étape de décodage par un décodeur binaire à entrées/sorties souples (111),
• Une étape d'initialisation du démodulateur souple (105), en calculant une estimation a priori $\overline{x}^{(\tau,0)}$ du signal transmis (300, 301), ladite estimation étant **caractérisée par** une fiabilité moyenne $\overline{v}^{(\tau,0)}$ (302),
• Lesdites valeurs d'estimation a priori et de fiabilité moyenne calculée représentant des valeurs de sortie et/ou étant utilisées pour initialiser l'étape de lissage adaptatif.

**5.** Procédé selon la revendication 4 comprenant en outre une étape de désentrelacement (110, 506) et d'entrelacement (112, 508) des informations souples sur le signal transmis lors de l'échange itératif entre un démodulateur souple (105, 504) et un décodeur binaire à entrées/sorties souples (111, 507).

**6.** Procédé selon l'une des revendications 1 à 5 pour la suppression d'interférence au sein d'un signal issu d'au moins un émetteur reçu sur un récepteur comprenant une ou plusieurs antennes, ledit signal comprenant un ou plusieurs blocs de données **caractérisé en ce qu'**il comporte en outre les étapes suivantes :

• Une étape de calcul des paramètres du récepteur (503), en utilisant la connaissance du canal,

• Une étape de traitement du signal reçu par un récepteur à suppression d'interférence (502) qui génère une autre estimation $\bar{x}^{(\tau,s)}$ du signal transmis en utilisant une estimation préalable $\bar{x}^{(\tau,s+1)}$ du signal transmis $x$ et la connaissance du canal, l'estimation du signal étant effectuée par le récepteur à suppression d'interférence,

• Le calcul de la fiabilité $\sigma_v^{2(\tau,s)}$ de l'estimation du signal transmis $\hat{x}$ obtenue par le récepteur à suppression d'interférence (502), en utilisant les paramètres du récepteur,

• Une étape d'échange itératif des estimations du signal transmis, entre le récepteur à suppression d'interférence (502) et le démodulateur souple (504,105),

• Une étape de calcul d'information souple sur les bits du signal transmis, faite à partir du signal démodulé (309-310).

7. Procédé de suppression d'interférence d'un signal reçu selon la revendication 6 comprenant en outre:

• Une étape de calcul des paramètres du récepteur adaptatif (503), en utilisant la connaissance du canal et la fiabilité des retours souples du démodulateur (504),

• Une étape d'échange itératif des fiabilités des estimations du signal transmis entre le bloc qui calcule les paramètres du récepteur adaptatif (503) et le démodulateur souple (504,105).

8. Procédé de suppression d'interférence d'un signal reçu selon la revendication 6 comportant:

• Une étape d'estimation des paramètres du canal entre l'émetteur et le récepteur (501) en utilisant le signal reçu,

• Une étape de calcul des paramètres du récepteur adaptatif ou non (503), en utilisant l'estimation des paramètres du canal et la fiabilité des retours souples du démodulateur (504),

• Une étape d'échange itératif des fiabilités des estimations du signal transmis entre le bloc qui calcule les paramètres du récepteur adaptatif (503) et le démodulateur souple (504,105).

9. Procédé de suppression d'interférence d'un signal reçu selon la revendication 8, comprenant en outre une étape itérative d'estimation des paramètres du canal (501) en utilisant l'estimation souple du signal transmis et sa fiabilité en provenance du démodulateur souple (504,105) conjointement avec le signal reçu.

10. Procédé de suppression d'interférence d'un signal reçu selon l'une des revendications 6 à 9 dans lequel, l'étape de traitement du signal reçu par un récepteur à suppression d'interférence (502) et l'étape de calcul de ses paramètres (503) comprennent:

• Une étape de conversion du signal reçu dans le domaine fréquentiel (102),

• Une étape de calcul des paramètres de l'égaliseur dans le domaine fréquentiel (106), qui réalise les fonctions du bloc (503).

• Une étape d'égalisation linéaire à suppression d'interférence (108) dans le domaine fréquentiel, paramétrée selon les sorties obtenues lors du calcul des paramètres de l'égaliseur dans le domaine fréquentiel (106),

• Une étape de conversion du signal traité dans le domaine temporel (109),

• Une étape de conversion dans le domaine fréquentiel (107) de l'estimation souple du signal transmis fournie par le démodulateur souple.

11. Procédé selon l'une des revendications 6 à 9 dans lequel, l'étape de traitement du signal reçu par un récepteur à suppression d'interférence (502) et l'étape de calcul de ses paramètres (503) comprennent:

• Une étape de séparation du signal reçu $y$ en $P$ segments $y_p$ de $N_p$ symboles chacun, avec recouvrement, $p = 1, ..., P$.

• Une étape de conversion de chacun des segments du signal reçu dans le domaine fréquentiel (102),

• Une étape du calcul des paramètres des $P$ égaliseurs dans le domaine fréquentiel, qui réalise les fonctions du bloc (503),

• Une étape d'égalisation linéaire à suppression d'interférence (108) dans le domaine fréquentiel de chacun des segments, paramétrée selon les sorties obtenues lors du calcul des paramètres des $P$ égaliseurs dans le domaine fréquentiel (503),

• Une étape de conversion de chacun des signaux traités dans le domaine temporel (109), et d'extraction des symboles non recouverts pour obtenir une estimation $\hat{x}^{(\tau,s)}$,

• Une étape de conversion dans le domaine fréquentiel (107) de l'estimation souple du signal transmis fournie par le démodulateur souple.

12. Procédé selon la revendication 11 où le calcul des paramètres des $P$ égaliseurs dans le domaine fréquentiel utilise la connaissance de la statistique de l'interférence entre segments, estimée à partir de la fiabilité des retours du démodulateur souple (504).

13. Procédé selon l'une des revendications 11 ou 12 où l'interférence résiduelle entre segments est régénérée en utilisant les retours du démodulateur souple (504), et soustraite de chacun des $P$ segments $\mathbf{y}_p$, avant l'étape de conversion dans le domaine fréquentiel.

14. Procédé selon l'une des revendications 6 à 9, dans lequel, l'étape de traitement du signal reçu par un récepteur à suppression d'interférence (502) et l'étape de calcul de ses paramètres (503) comprennent:

   • Un sur-échantillonnage du signal reçu avec un facteur de sur-échantillonnage $o$,
   • Une étape de conversion en fréquence (102) du signal reçu suréchantillonné,
   • Une étape de calcul du filtre de l'égaliseur dans le domaine fréquentiel suréchantillonné,
   • Une étape d'égalisation linéaire à suppression d'interférence (108) dans le domaine fréquentiel suréchantillonné selon la sortie obtenue lors du calcul des paramètres de l'égaliseur dans le domaine fréquentiel suréchantillonné (503),
   • Une étape de conversion du signal traité dans le domaine temporel (109), suivi d'un échantillonneur de facteur d'échantillonnage $o$ égal au facteur de sur-échantillonnage du signal reçu.
   • Une étape d'interpolation idéale de l'estimation souple du signal transmis fournie par le démodulateur souple par un facteur de suréchantillonnage $o$ égal à celui du signal reçu (cela consiste en l'ajout de $o$ - 1 zéros entre deux échantillons), suivi d'une conversion dans le domaine fréquentiel suréchantillonné (107).

15. Procédé pour supprimer des interférences au sein d'un signal reçu sur un récepteur de type SC-FDMA ou SS-SC-FDMA comprenant une étape de mise en trame utilisant respectivement une modulation SC-FDMA ou SS-SC-FDMA et une étape d'exécution du procédé selon l'une des revendications 10 à 14.

16. Procédé pour supprimer des interférences au sein d'un signal reçu sur un récepteur de type SC ou SS-SC comprenant une étape de mise en trame utilisant respectivement une modulation SC ou SS-SC et une étape d'exécution du procédé selon l'une des revendications 10 à 14.

17. Procédé pour supprimer des interférences au sein d'un signal reçu sur un récepteur de type OFDM ou OFDMA comprenant une étape de mise en trame utilisant respectivement une modulation OFDM ou OFDMA et une étape d'exécution du procédé selon l'une des revendications 6 à 9 dans lequel, l'étape de traitement du signal reçu par un récepteur à suppression d'interférence (502) et l'étape de calcul de ses paramètres (503) comprennent:

   • Une étape de conversion du signal reçu dans le domaine fréquentiel (102),
   • Une étape de calcul des paramètres de l'égaliseur dans le domaine fréquentiel (106), qui réalise les fonctions du bloc (503),
   • Une étape d'égalisation linéaire à suppression d'interférence (108) dans le domaine fréquentiel, paramétrée selon les sorties obtenues lors du calcul des paramètres de l'égaliseur dans le domaine fréquentiel (106).

18. Procédé de suppression d'interférence d'un signal reçu selon l'une des revendications 10 à 17, comprenant en outre:

   • Une étape de génération du signal à l'émetteur selon un code espace-temps par blocs de type Alamouti ou autre code espace-temps par bloc de type orthogonal,
   • Une étape d'estimation des paramètres des canaux entre les antennes de l'émetteur et celles du récepteur,
   • Une étape du calcul des paramètres du récepteur dans le domaine fréquentiel, qui prennent en compte la structure du code espace-temps par blocs utilisé,
   • Une étape d'égalisation linéaire à suppression d'interférence dans le domaine fréquentiel en utilisant les filtres obtenus lors du calcul des paramètres des égaliseurs dans le domaine fréquentiel, et qui combine les signaux reçus en entrée selon la méthode associé au code espace-temps par blocs utilisé par l'émetteur.

19. Procédé pour supprimer des interférences au sein des signaux issus d'un émetteur reçus sur un récepteur, dans un réseau de type MIMO où l'émetteur est doté de plusieurs antennes de transmissions et d'un entrelaceur qui répartit les bits codés sur les antennes disponibles, comprenant une étape d'exécution du procédé selon l'une des revendications 6 à 17 comprenant en outre :

    • Une étape de traitement des signaux reçus en provenance des antennes de l'émetteur par un récepteur à suppression d'interférence (502), qui en utilisant ses paramètres et une estimation préalable des signaux transmis $\bar{x}_{t,1}$ par les antennes d'émission $t$ = 1, ...,$T_1$ de l'utilisateur génère une autre estimation des signaux émis $\hat{x}_{t,1}$ (207-211, 205),
    • Une étape du calcul des paramètres du récepteur (503) qui prend en compte la présence de plusieurs antennes d'émission et les estimations des paramètres des canaux entre les antennes de l'émetteur et du récepteur,
    • Une étape de démodulation souple ($105T_u$) où l'estimation du signal de chaque antenne d'émission est traitée indépendamment.

20. Procédé pour supprimer des interférences au sein des signaux issus de plusieurs émetteurs reçus sur un récepteur, dans un réseau de type MU-MIMO où les émetteurs sont dotés d'une ou plusieurs antennes de transmissions et d'un entrelaceur qui répartit les bits codés sur les antennes disponibles, comprenant une étape d'exécution du procédé selon l'une des revendications 6 à 17 comprenant :

    • Une étape de traitement des signaux reçus en provenance des émetteurs par un récepteur à suppression d'interférence (502), qui en utilisant ses paramètres et une estimation préalable des signaux transmis $\bar{x}_{t,u}$ par les antennes d'émission $t$ = 1, ... , $T_u$ des utilisateurs 1,..., $U$, génère une autre estimation des signaux émis $\hat{x}_{t,u}$ (204-211),
    • Une étape du calcul des paramètres du récepteur qui prend en compte la présence de plusieurs utilisateurs, éventuellement avec plusieurs antennes d'émission, et d'éventuelles estimations des paramètres des canaux entre les antennes des émetteurs et du récepteur,
    • Une étape de démodulation souple (105T) où l'estimation du signal de chaque antenne d'émission de chaque utilisateur est traitée indépendamment,
    • Une étape d'ordonnancement (311) des utilisateurs à décoder selon un critère basé sur la puissance des signaux reçus, ou selon une métrique dérivée de la puissance des signaux reçus et de la fiabilité de leurs constellations, ou encore selon une métrique basée sur les écarts de puissances et fiabilité entre couples d'utilisateurs.

21. Récepteur comportant au moins une antenne pour recevoir un signal émis par au moins un émetteur **caractérisé en ce qu'**il comporte au moins :

    • Un processeur configuré pour exécuter le procédé d'amélioration de calcul des symboles et leurs fiabilités selon l'une des revendications 1 à 20, lesdits symboles étant utilisés pour la modulation d'un signal,
    • Un module de calcul des vraisemblances gaussiennes (304) ayant une sortie reliée à un bloc de normalisation (305B), dont la sortie est reliée à un deuxième module d'estimations souples (301),
    • Un deuxième module d'estimations souples (301) transmettant ses estimés $\mu_m^{(\tau,s)}$ directement à un module de division gaussienne (306) et ses fiabilités $\gamma_m^{(\tau,s)}$ à un dispositif effectuant une moyenne (302) dont la sortie $\bar{\gamma}^{(\tau,s)}$ est reliée au module de division gaussienne,
    • Un module de lissage adaptatif (307) relié au module de division gaussienne et fournissant les estimés souples lissées $\bar{x}^{(\tau,s+1)}$ ainsi que leurs variances $\bar{v}^{(\tau,s+1)}$.

22. Récepteur selon la revendication 21 **caractérisé en ce qu'**il comporte un démodulateur souple comprenant au moins les éléments suivants :

    • Un module (300) de calcul des distributions a priori, ayant en entrée des rapports de vraisemblance LLR a priori et ayant une sortie reliée à un module de calcul de distributions a posteriori (305A) et au module de calcul d'estimations souples (301).
    • Un deuxième module (301) de calcul d'estimations souples, fournissant des estimés souples a priori $\bar{x}^{(\tau,0)}$ **caractérisées par** une fiabilité moyenne $\bar{v}^{(\tau,0)}$ (302).

23. Récepteur selon l'une des revendications 21 ou 22 **caractérisé en ce qu'**il comporte :
Un module de sélection (303) configuré pour sélectionner les estimés souples a priori $\bar{x}^{(\tau,0)}$ et leur variance, ou les estimés souples lissées $\bar{x}^{(\tau,s+1)}$ et leur variance en fonction du fait s'il s'agit ou pas de la première exécution (exécution d'initialisation) du démodulateur souple ayant en entrée du démodulateur souple les valeurs des rapports de vraisemblance LLRs a priori correspondantes aux estimées souples a priori $\overline{x}^{(\tau,0)}$.

**Patentansprüche**

1. Verfahren zum Verbessern der Schätzung von Symbolen eines modulierten Signals und der Zuverlässigkeit der Schätzung, wobei das Signal einen oder mehrere Datenblöcke umfasst, das wenigstens die folgenden an einem Prozessor durchgeführten Schritte beinhaltet:

   • einen Schritt des Berechnens von flexiblen Schätzungen (301) des Signals, bei dem die geschätzten Symbole $\mu_m^{(\tau,s)}$ und deren Zuverlässigkeiten $\gamma_m^{(\tau,s)}$ anhand eines Eintrags von Wahrscheinlichkeitsverteilungen berechnet werden, erhalten durch Normalisieren (305B) der berechneten Gaußschen Likelihoods (304) mittels der geschätzten Symbole $\hat{x}^{(\tau,s)} = [\hat{x}_0^{(\tau,s)} \cdots \hat{x}_m^{(\tau,s)} \cdots \hat{x}_{M-1}^{(\tau,s)}]$ des aktuellen Datenblocks sowie deren Zuverlässigkeit $\sigma_v^{2(\tau,s)}$, wobei die geschätzten Symbole $\mu_m^{(\tau,s)}$ des Blocks durch ein mittleres Zuverlässigkeitsmaß $\overline{\gamma}^{(\tau,s)}$ (302) gekennzeichnet sind,

   • einen Schritt des Gaußschen Dividierens (306) des geschätzten Signals $\boldsymbol{\mu}^{(\tau,s)} = [\mu_0^{(\tau,s)} \cdots \mu_m^{(\tau,s)} \cdots \mu_{M-1}^{(\tau,s)}]$ durch das geschätzte Signal $\hat{x}^{(\tau,s)}$ zum Erzeugen einer flexiblen Schätzung des übertragenen Signals $\overline{x}'^{(\tau,s+1)}_m$ und einer mittleren extrinsischen Varianz (Zuverlässigkeit) $\overline{v}'^{(\tau,s+1)}$ mit:

$$\bar{x}'^{(\tau,s+1)}_m = \frac{\mu_m^{(\tau,s)}\sigma_v^{2(\tau,s)} - \hat{x}_m^{(\tau,s)}\bar{\gamma}^{(\tau,s)}}{\sigma_v^{2(\tau,s)} - \bar{\gamma}^{(\tau,s)}}, \quad m = 0, \dots, M-1$$

$$\bar{v}'^{(\tau,s+1)} = \frac{\sigma_v^{2(\tau,s)}\bar{\gamma}^{(\tau,s)}}{\sigma_v^{2(\tau,s)} - \bar{\gamma}^{(\tau,s)}},$$

   • einen Schritt des adaptiven Glättens (307) auf dem geschätzten Signal durch die Gaußsche Division und auf den Zuverlässigkeitsmaßen, zum Liefern einer Schätzung $\overline{x}^{(\tau,s+1)}$ des übertragenen Signals und eines assoziierten Zuverlässigkeitsmaßes $\overline{v}^{(\tau,s+1)}$.

2. Verfahren nach Anspruch 1, **dadurch gekennzeichnet, dass** eine flexible Schätzung des übertragenen Signals $\bar{x}'^{(\tau,s+1)}_m$ und eine extrinsische Varianz $\overline{v}'^{(\tau,s+1)}$ berechnet werden:

$$\bar{x}'^{(\tau,s+1)}_m = \mu_m^{(\tau,s)} \, f\ddot{u}r \, \sigma_v^{2(\tau,s)} \le \bar{\gamma}^{(\tau,s)} + \varepsilon, \quad m = 0, \dots, M-1$$

$$\bar{v}'^{(\tau,s+1)} = \bar{\gamma}^{(\tau,s)} \, f\ddot{u}r \, \sigma_v^{2(\tau,s)} \le \bar{\gamma}^{(\tau,s)} + \varepsilon,$$

wobei $\varepsilon \ge 0$ ist.

3. Verfahren nach einem der Ansprüche 1 bis 2, das ferner Folgendes beinhaltet:

   • einen Schritt des Berechnens von A-priori-Verteilungen des übertragenen Signals (300) auf der Basis von binären flexiblen Eingängen/Ausgängen,
   • einen Schritt des Berechnens von flexiblen Schätzungen (301) des übertragenen Signals anhand der A-posteriori-Wahrscheinlichkeitsverteilungen (305A) am Eingang, berechnet auf der Basis der Gaußschen Likelihoods des geschätzten Signals $\hat{x}^{(\tau,s)}$ (304) und der im vorherigen Schritt (300) berechneten A-priori-Verteilungen, wobei die Schätzung durch ein mittleres Zuverlässigkeitsmaß $\overline{\gamma}^{(\tau,s)}$ (302) gekennzeichnet ist.

4. Verfahren nach einem der Ansprüche 1 bis 3, **dadurch gekennzeichnet, dass** es ferner Folgendes beinhaltet:

- einen Schritt des Decodierens durch einen Decoder mit flexiblen Eingängen/Ausgängen (111),
- einen Schritt des Initialisierens des flexiblen Demodulators (105) durch Berechnen einer A-priori-Schätzung $\overline{x}^{(\tau,0)}$ des übertragenen Signals (300, 301), wobei die Schätzung durch eine mittlere Zuverlässigkeit $\overline{v}^{(\tau,0)}$ (302) gekennzeichnet ist,
- wobei die Werte der A-priori-Schätzung und der berechneten mittleren Zuverlässigkeit Ausgangswerte repräsentieren und/oder zum Initialisieren des Schrittes des adaptiven Glättens benutzt werden.

5. Verfahren nach Anspruch 4, das ferner einen Schritt des Entschachtelns (110, 506) und Verschachtelns (112, 508) flexibler Informationen an dem übertragenen Signal während des iterativen Austauschs zwischen einem flexiblen Demodulator (105, 504) und einem binären Decoder mit flexiblen Eingängen/Ausgängen (111, 507) beinhaltet.

6. Verfahren nach einem der Ansprüche 1 bis 5 zum Unterdrücken von Störungen im Inneren eines Signals von wenigstens einem Sender, empfangen an einem Empfänger mit einer oder mehreren Antennen, wobei das Signal einen oder mehrere Datenblöcke umfasst, **dadurch gekennzeichnet, dass** es ferner die folgenden Schritte beinhaltet:

- einen Schritt des Berechnens von Parametern des Empfängers (503) unter Nutzung der Kenntnis des Kanals,
- einen Schritt des Verarbeitens des empfangenen Signals durch einen Empfänger mit Störunterdrückung (502), der eine andere Schätzung $\hat{x}^{(\tau,s)}$ des übertragenen Signals unter Nutzung einer Vorabschätzung $\overline{x}^{(\tau,s+1)}$ des übertragenen Signals $x$ und der Kenntnis des Kanals erzeugt, wobei die Schätzung des Signals durch den Empfänger mit Störunterdrückung erfolgt,
- Berechnen der Zuverlässigkeit $\sigma_v^{2(\tau,s)}$ der Schätzung des übertragenen Signals $\hat{x}$, erhalten von dem Empfänger mit Störunterdrückung (502), anhand der Parameter des Empfängers,
- einen Schritt des iterativen Austauschens von Schätzungen des übertragenen Signals zwischen dem Empfänger mit Störunterdrückung (502) und dem flexiblen Demodulator (504, 105),
- einen Schritt des Berechnens flexibler Informationen an den Bits des übertragenen Signals, durchgeführt auf der Basis des demodulierten Signals (309, 310).

7. Verfahren zur Störunterdrückung eines empfangenen Signals nach Anspruch 6, das ferner Folgendes beinhaltet:

- einen Schritt des Berechnens von Parametern des adaptiven Empfängers (503) unter Nutzung der Kenntnis des Kanals und der Zuverlässigkeit der flexiblen Rückläufe des Demodulators (504),
- einen Schritt des iterativen Austauschens der Zuverlässigkeiten der Schätzungen des übertragenen Signals zwischen dem Block, der die Parameter des adaptiven Empfängers (503) berechnet, und dem flexiblen Demodulator (504, 105).

8. Verfahren zur Störunterdrückung eines empfangenen Signals nach Anspruch 6, das Folgendes beinhaltet:

- einen Schritt des Schätzens der Parameter des Kanals zwischen dem Sender und dem Empfänger (501) mittels des empfangenen Signals,
- einen Schritt des Berechnens der Parameter des adaptiven Empfängers oder nicht (503) mittels der Schätzung der Parameter des Kanals und der Zuverlässigkeit der flexiblen Rückläufe des Demodulators (504),
- einen iterativen Schritt des Austauschens der Zuverlässigkeiten der Schätzungen des übertragenen Signals zwischen dem Block, der die Parameter des adaptiven Empfängers (503) berechnet, und dem flexiblen Demodulator (504, 105).

9. Verfahren zum Unterdrücken von Störungen eines empfangenen Signals nach Anspruch 8, das ferner einen iterativen Schritt des Schätzens der Parameter des Kanals (501) unter Nutzung der flexiblen Schätzung des übertragenen Signals und seiner Zuverlässigkeit vom flexiblen Demodulator (504, 105) gemeinsam mit dem empfangenen Signal beinhaltet.

10. Verfahren zum Unterdrücken von Störungen eines empfangenen Signals nach einem der Ansprüche 6 bis 9, bei dem der Schritt des Verarbeitens des empfangenen Signals durch einen Empfänger mit Störunterdrückung (502) und der Schritt des Berechnens seiner Parameter (503) Folgendes beinhalten:

- einen Schritt des Umwandelns des empfangenen Signals in die Frequenzdomäne (102),
- einen Schritt des Berechnens der Parameter des Entzerrers in der Frequenzdomäne (106), der die Funktionen des Blocks (503) realisiert,
- einen Schritt des linearen Entzerrens mit Störunterdrückung (108) in der Frequenzdomäne, parametrisiert gemäß den beim Berechnen der Parameter des Entzerrers in der Frequenzdomäne (106) erhaltenen Ausgänge,
- einen Schritt des Umwandelns des verarbeiteten Signals in die Zeitdomäne (109),
- einen Schritt des Umwandelns, in der Frequenzdomäne (107), der flexiblen Schätzung des von dem flexiblen Demodulators gelieferten übertragenen Signals.

11. Verfahren nach einem der Ansprüche 6 bis 9, bei dem der Schritt des Verarbeitens des empfangenen Signals durch einen Empfänger mit Störunterdrückung (502) und der Schritt des Berechnens seiner Parameter (503) Folgendes beinhalten:

- einen Schritt des Trennens des empfangenen Signals $y$ in $P$ Segmente $y_p$ von $N_p$ Symbolen, mit Überlappung, $p = 1, ..., P$,
- einen Schritt des Umwandelns jedes der Segmente des empfangenen Signals in die Frequenzdomäne (102),
- einen Schritt des Berechnens der Parameter von $P$ Entzerrern in der Frequenzdomäne, der die Funktionen des Blocks (503) realisiert,
- einen Schritt des linearen Entzerrens mit Störunterdrückung (108) in der Frequenzdomäne von jedem der Segmente, parametrisiert gemäß den bei der Berechnung der Parameter von $P$ Entzerrern in der Frequenzdomäne (503) erhaltenen Ausgänge,
- einen Schritt des Umwandelns jedes der verarbeiteten Signale in die Zeitdomäne (109), und des Extrahierens der nicht überlappten Symbole zum Erhalten einer Schätzung $\hat{x}^{(\tau,s)}$,
- einen Schritt des Umwandelns der flexiblen Schätzung des vom flexiblen Demodulator gelieferten übertragenen Signals in die Frequenzdomäne (107).

12. Verfahren nach Anspruch 11, bei dem das Berechnen der Parameter der $P$ Entzerrer in der Frequenzdomäne die Kenntnis der Statistik der Störung zwischen Segmenten nutzt, geschätzt auf der Basis der Zuverlässigkeit der Rückläufe des flexiblen Demodulators (504).

13. Verfahren nach Anspruch 11 oder 12, bei dem die Reststörung zwischen Segmenten unter Nutzung der Rückläufe des flexiblen Demodulators (504) regeneriert und von jedem der $P$ Segmente $y_p$ subtrahiert wird, vor dem Schritt des Umwandelns in die Frequenzdomäne.

14. Verfahren nach einem der Ansprüche 6 bis 9, bei dem der Schritt des Verarbeitens des empfangenen Signals durch einen Empfänger mit Rauschunterdrückung (502) und der Schritt des Berechnens seiner Parameter (503) Folgendes beinhalten:

- eine Überabtastung des empfangenen Signals mit einem Überabtastfaktor $o$,
- einen Schritt des Frequenzumwandelns (102) des überabgetasteten empfangenen Signals,
- einen Schritt des Berechnens des Filters des Entzerrers in der überabgetasteten Frequenzdomäne,
- einen Schritt des linearen Entzerrens mit Störunterdrückung (108) in der überabgetasteten Frequenzdomäne gemäß dem beim Berechnen der Parameter des Entzerrers in der überabgetasteten Frequenzdomäne (503) erhaltenen Ausgang,
- einen Schritt des Umwandelns des verarbeiteten Signals in die Zeitdomäne (109), gefolgt von einem Abtaster mit einem Abtastfaktor o gleich dem Überabtastfaktor des empfangenen Signals,
- einen Schritt des idealen Interpolierens der flexiblen Schätzung des von dem flexiblen Demodulator gelieferten übertragenen Signals mit einem Überabtastfaktor $o$ gleich dem des empfangenen Signals (das im Hinzufügen von o - 1 Nullen zwischen zwei Abtastungen besteht), gefolgt von einer Umwandlung in die überabgetastete Frequenzdomäne (107).

15. Verfahren zum Unterdrücken von Störungen im Inneren eines auf einem SC-FDMA- oder SS-SC-FDMA-Empfänger empfangenen Signals, das einen Schritt des Rasterns jeweils mittels einer SC-FDMA- oder SS-SC-FDMA-Modulation und einen Schritt des Ausführens des Verfahrens nach einem der Ansprüche 10 bis 14 beinhaltet.

16. Verfahren zum Unterdrücken von Störungen im Inneren eines empfangenen Signals auf einem SC- oder SS-SC-Empfänger, das einen Schritt des Rasterns jeweils unter Nutzung einer SC- oder SS-SC-Modulation und einen Schritt des Ausführens des Verfahrens nach einem der Ansprüche 10 bis 14 beinhaltet.

17. Verfahren zum Unterdrücken von Störungen im Inneren eines auf einem OFDM- oder OFDMA-Empfänger empfangenen Signals, das einen Schritt des Rasterns jeweils unter Nutzung einer OFDM- oder OFDMA-Modulation und einen Schritt des Ausführens des Verfahrens nach einem der Ansprüche 6 bis 9 beinhaltet, wobei der Schritt des Verarbeitens des durch einen Empfänger mit Störunterdrückung (502) empfangenen Signals und der Schritt des Berechnens seiner Parameter (503) Folgendes beinhalten:

> • einen Schritt des Umwandelns des empfangenen Signals in die Frequenzdomäne (102),
> • einen Schritt des Berechnens der Parameter des Entzerrers in der Frequenzdomäne (106), der die Funktionen des Blocks (503) realisiert,
> • einen Schritt des linearen Entzerrens mit Störunterdrückung (108) in der Frequenzdomäne, parametrisiert gemäß den beim Berechnen der Parameter des Entzerrers in der Frequenzdomäne (106) erhaltenen Ausgängen.

18. Verfahren zum Unterdrücken von Störungen eines empfangenen Signals nach einem der Ansprüche 10 bis 17, das ferner Folgendes beinhaltet:

> • einen Schritt des Erzeugens des Signals am Sender gemäß einem Raum-Zeit-Blockcode des Alamouti-Typs oder einem anderen Raum-Zeit-Blockcode des orthogonalen Typs,
> • einen Schritt des Schätzens der Parameter der Kanäle zwischen den Antennen des Senders und denen des Empfängers,
> • einen Schritt des Berechnens der Parameter des Empfängers in der Frequenzdomäne, der die Struktur des benutzten Raum-Zeit-Blockcodes berücksichtigt,
> • einen Schritt des linearen Entzerrens mit Störunterdrückung in der Frequenzdomäne mittels der beim Berechnen der Parameter der Entzerrer in der Frequenzdomäne erhaltenen Filter, und der die am Eingang empfangenen Signale mit einem Verfahren kombiniert, das mit dem vom Sender benutzten Raum-Zeit-Blockcode assoziiert ist.

19. Verfahren zum Unterdrücken von Störungen im Inneren von an einem Empfänger empfangenen Signale eines Senders in einem Netzwerk des MIMO-Typs, in dem der Sender mit mehreren Sendeantennen und einem Verschachteler ausgestattet ist, der die codierten Bits auf die verfügbaren Antennen verteilt, das einen Schritt des Ausführens des Verfahrens nach einem der Ansprüche 6 bis 17 beinhaltet, der ferner Folgendes beinhaltet:

> • einen Schritt des Verarbeitens der empfangenen Signale von Antennen des Senders durch einen Empfänger mit Störunterdrückung (502), der unter Nutzung seiner Parameter und einer Vorabschätzung der übertragenen Signale $\bar{x}_{t,1}$ durch die Sendeantennen $t$ = 1, ..., $T_1$ des Benutzers eine andere Schätzung der gesendeten Signale $\hat{x}_{t,1}$ (207-211, 205) erzeugt,
> • einen Schritt des Berechnens der Parameter des Empfängers (503), der die Anwesenheit mehrerer Sendeantennen und der Schätzungen der Parameter der Kanäle zwischen den Antennen des Senders und des Empfängers berücksichtigt,
> • einen Schritt des flexiblen Demodulierens (105T$_u$), in dem die Schätzung des Signals jeder Sendeantenne unabhängig verarbeitet wird.

20. Verfahren zum Unterdrücken von Störungen im Inneren von an einem Empfänger empfangenen Signalen von mehreren Sendern in einem Netzwerk des MU-MIMO-Typs, in dem die Sender mit mehreren Sendeantennen und einem Verschachteler ausgestattet sind, der die codierten Bits auf die verfügbaren Antennen verteilt, das einen Schritt des Ausführens des Verfahrens nach einem der Ansprüche 6 bis 17 beinhaltet, der Folgendes beinhaltet:

> • einen Schritt des Verarbeitens von empfangenen Signalen von Sendern durch einen Empfänger mit Störunterdrückung (502), der anhand seiner Parameter und einer Vorabschätzung der übertragenen Signale $\bar{x}_{t,u}$ durch die Sendeantennen $t$ = 1, ..., $T_u$ der Benutzer 1, ..., $U$ eine andere Schätzung der gesendeten Signale $\hat{x}_{t,u}$ (204-211) erzeugt,
> • einen Schritt des Berechnens der Parameter des Empfängers, der die Anwesenheit mehrerer Benutzer berücksichtigt, eventuell mit mehreren Sendeantennen, und von mehreren Schätzungen der Parameter der Kanäle zwischen den Antennen der Sender und des Empfängers,
> • einen Schritt des flexiblen Demodulierens (105T), bei dem die Schätzung des Signals jeder Sendeantenne jedes Benutzers unabhängig verarbeitet wird,
> • einen Schritt des Planens (311) der zu decodierenden Benutzer gemäß einem Kriterium auf der Basis der Leistung der empfangenen Signale oder gemäß einer Metrik, die von der Leistung der empfangenen Signale und der Zuverlässigkeit ihrer Konstellationen abgeleitet wird, oder auch gemäß einer Metrik auf der Basis der Leistungs- Zuverlässigkeitsabweichungen zwischen Benutzerpaaren.

**21.** Empfänger, der wenigstens eine Antenne zum Empfangen eines von wenigstens einem Sender gesendeten Signals umfasst, **dadurch gekennzeichnet, dass** er wenigstens Folgendes umfasst:

• einen Prozessor, konfiguriert zum Ausführen des Verfahrens zum Verbessern der Berechnung der Symbole und ihrer Zuverlässigkeiten nach einem der Ansprüche 1 bis 20, wobei die Symbole für die Modulation eines Signals benutzt werden,
• ein Modul zum Berechnen von Gaußschen Likelihoods (304) mit einem Ausgang, der mit einem Normalisierungsblock (305B) verbunden ist, dessen Ausgang mit einem zweiten Modul von flexiblen Schätzungen (301) verbunden ist,

• ein zweites Modul von flexiblen Schätzungen (301), das seine Schätzungen $\mu_m^{(\tau,s)}$ direkt zu einem Gaußschen Divisionsmodul (306) überträgt und seine Zuverlässigkeiten $\gamma_m^{(\tau,s)}$ zu einem Gerät überträgt, das eine Mittelung (302) durchführt, deren Ausgang $\overline{\gamma}^{(\tau,s)}$ mit dem Gaußschen Divisionsmodul verbunden ist,
• ein adaptives Glättungsmodul (307), das mit dem Gaußschen Divisionsmodul verbunden ist und die geglätteten flexiblen Schätzungen $\overline{x}^{(\tau,s+1)}$ sowie deren Varianzen $\overline{v}^{(\tau,s+1)}$ liefert.

**22.** Empfänger nach Anspruch 21, **dadurch gekennzeichnet, dass** er einen flexiblen Demodulator umfasst, der wenigstens die folgenden Elemente umfasst:

• ein Modul (300) zum Berechnen von A-priori-Verteilungen mit einem Eingang von A-priori-Likelihood-Verhältnissen LLR und mit einem Ausgang, der mit einem Modul zum Berechnen von A-posteriori-Verteilungen (305A) und einem Modul zum Berechnen von flexiblen Schätzungen (301) verbunden ist,
• ein zweites Modul (301) zum Berechnen von flexiblen Schätzungen, das flexible A-priori-Schätzungen $\overline{x}^{(\tau,0)}$ liefert, **gekennzeichnet durch** eine mittlere Zuverlässigkeit $\overline{v}^{(\tau,0)}$ (302).

**23.** Empfänger nach Anspruch 21 oder 22, **dadurch gekennzeichnet, dass** er Folgendes umfasst:
ein Auswahlmodul (303), konfiguriert zum Auswählen der flexiblen A-priori-Schätzungen $\overline{x}^{(\tau,0)}$ und deren Varianz, oder der geglätteten flexiblen Schätzungen $\overline{x}^{(\tau,s+1)}$ und deren Varianz je nachdem, ob es sich um die erste Ausführung (Initialisierungsausführung) des flexiblen Demodulators handelt oder nicht, die am Eingang des flexiblen Demodulators die Werte der A-priori-Likelihood-Verhältnisse LLR entsprechend den flexiblen A-priori-Schätzungen $\overline{x}^{(\tau,0)}$ hat.

**Claims**

**1.** Method for improving the estimation of symbols of a modulated signal and the reliability of the estimate, the signal comprising one or more data blocks, comprising at least the following steps which are carried out in a processor:

• a step (301) of calculating flexible estimates of the signal which calculates the estimated symbols $\mu_m^{(\tau,s)}$ and their reliabilities $\gamma_m^{(\tau,s)}$ using at the input probability distributions which are obtained by standardising (305B) the calculated Gaussian likelihoods (304) using the estimated symbols $\hat{x}^{(\tau,s)} = [\hat{x}_0^{(\tau,s)} \cdots \hat{x}_m^{(\tau,s)} \cdots \hat{x}_{M-1}^{(\tau,s)}]$ of the current data block and their reliability $\sigma_v^{2(\tau,s)}$, the estimated symbols $\mu_m^{(\tau,s)}$ of the block being **characterised by** a measurement of mean reliability $\overline{\gamma}^{(\tau,s)}$ (302),

• a step of Gaussian division (306) of the estimated signal $\boldsymbol{\mu}^{(\tau,s)} = [\mu_0^{(\tau,s)} \cdots \mu_m^{(\tau,s)} \cdots \mu_{M-1}^{(\tau,s)}]$ by the estimated signal $\hat{\boldsymbol{x}}^{(\tau,s)}$ in order to generate a flexible estimate of the signal transmitted $\overline{x}'^{(\tau,s+1)}_m$ and a mean extrinsic variance (reliability) $\overline{v}^{(\tau,s+1)}$ with:

$$\bar{x}'^{(\tau,s+1)}_m = \frac{\mu_m^{(\tau,s)} \sigma_v^{2(\tau,s)} - \hat{x}_m^{(\tau,s)} \bar{\gamma}^{(\tau,s)}}{\sigma_v^{2(\tau,s)} - \bar{\gamma}^{(\tau,s)}}, \quad m = 0, \dots, M-1$$

$$\bar{v}'^{(\tau,s+1)} = \frac{\sigma_v^{2(\tau,s)} \bar{\gamma}^{(\tau,s)}}{\sigma_v^{2(\tau,s)} - \bar{\gamma}^{(\tau,s)}},$$

- an adaptive smoothing step (307) on the signal estimated by the Gaussian division and on the measurements of reliabilities in order to provide an estimate $\bar{x}^{(\tau,s+1)}$ of the signal transmitted and an associated reliability measurement $\bar{v}^{(\tau,s+1)}$.

2. Method according to claim 1, **characterised in that** a flexible estimate of the signal transmitted $\bar{x}'^{(\tau,s+1)}_m$ and an extrinsic variance $\bar{v}'^{(\tau,s+1)}$ are calculated:

$$\bar{x}'^{(\tau,s+1)}_m = \mu_m^{(\tau,s)} \; for \; \sigma_v^{2(\tau,s)} \leq \bar{\gamma}^{(\tau,s)} + \varepsilon, \quad m = 0, \dots, M-1$$

$$\bar{v}'^{(\tau,s+1)} = \bar{\gamma}^{(\tau,s)} \; for \; \sigma_v^{2(\tau,s)} \leq \bar{\gamma}^{(\tau,s)} + \varepsilon,$$

with $\varepsilon \geq 0$.

3. Method according to either claim 1 or claim 2, further comprising:

- a step of calculating distributions a priori of the signal transmitted (300) based on binary flexible inputs/outputs,
- a step of calculating flexible estimates (301) of the signal transmitted using at the input probability distributions a posteriori (305A) calculated from the Gaussian likelihoods (304) of the estimated signal $\hat{x}^{(\tau,s)}$ and the distributions calculated a priori at the preceding step (300), the estimate is **characterised by** a measurement of mean reliability $\bar{\gamma}^{(\tau,s)}$ (302).

4. Method according to any one of claims 1 to 3, **characterised in that** it further comprises:

- a step of decoding using a binary decoder with flexible inputs/outputs (111),
- a step of initialisation of the flexible demodulator (105), by calculating an estimate a priori $\bar{x}^{(\tau,0)}$ of the signal transmitted (300, 301), the estimate being **characterised by** a mean reliability $\bar{v}^{(\tau,0)}$ (302),
- the estimate values a priori and mean reliability values calculated representing output values and/or being used to initialise the adaptive smoothing step.

5. Method according to claim 4, further comprising a step of deinterlacing (110, 506) and interlacing (112, 508) flexible information relating to the signal transmitted during the iterative exchange between a flexible demodulator (105, 504) and a binary decoder with flexible inputs/outputs (111, 507).

6. Method according to any one of claims 1 to 5 for the suppression of interference within a signal which originates from at least one transmitter and which is received in a receiver which comprises one or more antenna/ae, the signal comprising one or more data blocks, **characterised in that** it further comprises the following steps:

- a step of calculating the parameters of the receiver (503), using the knowledge of the channel,
- a step of processing the signal received by an interference suppression receiver (502) which generates another estimate $\hat{x}^{(\tau,s)}$ of the signal transmitted using a previous estimate $\bar{x}^{(\tau,s+1)}$ of the signal transmitted $x$ and the knowledge of the channel, the estimate of the signal being carried out by the interference suppression receiver,
- the calculation of the reliability $\sigma_v^{2(\tau,s)}$ of the estimate of the transmitted signal $\hat{x}$ obtained by the interference suppression receiver (502) using the parameters of the receiver,
- a step of iterative exchange of the estimates of the signal transmitted between the interference suppression receiver (502) and the flexible demodulator (504, 105),
• a step of calculating flexible information relating to the bits of the signal transmitted, carried out based on the demodulated signal (309-310).

7. Method for the suppression of interference of a signal received according to claim 6, further comprising:

• a step of calculating the parameters (503) of the adaptive receiver using the knowledge of the channel and the reliability of the flexible returns of the demodulator (504).
• a step of iterative exchange of the reliabilities of the estimates of the signal transmitted between the block which calculates the parameters (503) of the adaptive receiver and the flexible demodulator (504, 105).

8. Method for the suppression of interference of a signal received according to claim 6, comprising:

• a step of estimating the parameters of the channel between the transmitter and the receiver (501) using the signal received,
• a step of calculating the parameters (503) of the receiver which may or may not be adaptive, using the estimate of the parameters of the channel and the reliability of the flexible returns of the demodulator (504),
• a step of iterative exchange of the reliabilities of the estimates of the signal transmitted between the block which calculates the parameters (503) of the adaptive receiver and the flexible demodulator (504, 105).

9. Method for the suppression of interference of a signal received according to claim 8, further comprising an iterative step of estimating the parameters of the channel (501) using the flexible estimate of the signal transmitted and the reliability thereof originating from the flexible demodulator (504, 105), together with the signal received.

10. Method for the suppression of interference of a signal received according to any one of claims 6 to 9, wherein the step of processing the signal received by an interference suppression receiver (502) and the step of calculating the parameters thereof comprise:

• a step of converting the signal received in the frequency range (102),
• a step of calculating the parameters of the equaliser in the frequency range (106) which carries out the functions of the block (503),
• a step of linear equalisation with interference suppression (108) in the frequency range, parameterised in accordance with the outputs obtained during the calculation of the parameters of the equaliser in the frequency range (106),
• a step of converting the processed signal in the time domain (109),
• a step of converting in the frequency range (107) the flexible estimate of the transmitted signal provided by the flexible demodulator.

11. Method according to any one of claims 6 to 9, wherein the step of processing the signal received by an interference suppression receiver (502) and the step of calculating the parameters (503) thereof comprise:

• a step of separating the signal received $\boldsymbol{y}$ into $P$ segments $\boldsymbol{y}_p$, each of $N_p$ symbols, with coverage, $p = 1,...P,$
• a step (102) of converting each of the segments of the signal received in the frequency range,
• a step (503) of calculating the parameters of the $P$ equalisers in the frequency range, which carries out the functions of the block,
• a step (108) of linear equalisation with interference suppression in the frequency range of each of the segments, parameterised in accordance with the outputs obtained during the calculation of the parameters (503) of the $P$ equalisers in the frequency range,
• a step (109) of converting each of the signals processed in the time domain and extracting the symbols not covered in order to obtain an estimate $\hat{\boldsymbol{x}}^{(\tau,s)},$
• a step (107) of conversion in the frequency range of the flexible estimate of the signal transmitted provided by the flexible demodulator.

12. Method according to claim 11, wherein the calculation of the parameters of the $P$ equalisers in the frequency range makes use of the knowledge of the statistics of the interference between segments, estimated from the reliability of the returns of the flexible demodulator (504).

13. Method according to either claim 11 or claim 12, wherein the residual interference between segments is regenerated

43

using the returns of the flexible demodulator (504) and subtracted from each of the $P$ segments $\mathbf{y}_p$ before the step of conversion in the frequency range.

14. Method according to any one of claims 6 to 9, wherein the step of processing the signal received via an interference suppression receiver (502) and the step of calculating the parameters (503) thereof comprise:

- an oversampling of the signal received with an oversampling factor $o$,
- a step (102) of converting the frequency of the oversampled signal received,
- a step of calculating the filter of the equaliser in the oversampled frequency range,
- a step (108) of linear equalisation with interference suppression in the oversampled frequency range in accordance with the output obtained during the calculation of the parameters (503) of the equaliser in the oversampled frequency range,
- a step of converting the processed signal in the time domain (109), followed by a sampler having a sampling factor o equal to the oversampling factor of the signal received,
- a step of ideal interpolation of the flexible estimate of the transmitted signal provided by the flexible demodulator by an oversampling factor $o$ equal to that of the signal received (this involves the addition of $o$ - 1 zeros between two samples), followed by a conversion in the oversampled frequency range (107).

15. Method for suppressing interferences within a signal received in a receiver of the SC-FDMA or SS-SC-FDMA type comprising a framing step which uses an SC-FDMA or SS-SC-FDMA modulation, respectively, and a step of implementing the method according to any one of claims 10 to 14.

16. Method for suppressing interferences within a signal received in a receiver of the SC or SS-SC type, comprising a framing step which uses an SC or SS-SC modulation, respectively, and a step of implementing the method according to any one of claims 10 to 14.

17. Method for suppressing interferences within a signal received in a receiver of the OFDM or OFDMA type comprising a framing step which uses an OFDM or OFDMA modulation, respectively, and a step of implementing the method according to any one of claims 6 to 9, in which the step of processing the signal received by an interference suppression receiver (502) and the step of calculating the parameters (503) thereof comprise:

- a step of converting the signal received in the frequency range (102),
- a step of calculating the parameters of the equaliser in the frequency range (106), which carries out the functions of the block (503),
- a step (108) of linear equalisation with interference suppression in the frequency range, parameterised in accordance with the outputs obtained during the calculation of the parameters of the equaliser in the frequency range (106).

18. Method for interference suppression of a signal received according to any one of claims 10 to 17, further comprising:

- a step of generating the signal at the transmitter in accordance with a space/time code using blocks of the Alamouti type or other space/time code by means of a block of the orthogonal type,
- a step of estimating the parameters of the channels between the antennae of the transmitter and those of the receiver,
- a step of calculating the parameters of the receiver in the frequency range, which take into account the structure of the space/time code per block used,
- a step of linear equalisation with interference suppression in the frequency range using the filters obtained during the calculation of the parameters of the equalisers in the frequency range, and which combines the signals received at the input in accordance with the method associated with the space/time code per block used by the transmitter.

19. Method for suppressing the interferences within the signals from a transmitter received in a receiver, in a network of the MIMO type in which the transmitter is provided with several transmission antennae and an interlacer which distributes the encoded bits over the available antennae, comprising a step of implementing the method according to any one of claims 6 to 17, further comprising:

- a step of processing the signals received from the antennae of the transmitter via a receiver with interference suppression (502) which by using its parameters and a previous estimate of the signals transmitted $\bar{x}_{t,1}$ by the transmission antennae $t = 1, ..., T_1$ of the user generates another estimate of the signals transmitted $\hat{x}_{t,1}$ (207-211, 205),
• a step of calculating the parameters of the receiver (503) which takes into account the presence of a plurality of transmission antennae and the estimates of the parameters of the channels between the antennae of the transmitter and the receiver,
• a flexible demodulation step (105$T_u$) in which the estimate of the signal of each transmission antenna is processed independently.

20. Method for suppressing interference within signals from several transmitters received in a receiver, in a network of the MU-MIMO type in which the transmitters are provided with one or more transmission antenna/ae and an interlacer which distributes the encoded bits over the available antennae, comprising a step of implementing the method according to any one of claims 6 to 17, comprising:

• a step of processing the signals received from the transmitters via a receiver with interference suppression (502), which by using the parameters thereof and a previous estimate of the signals transmitted $\bar{x}_{t,u}$ via the transmission antennae $t = 1..., T_u$ of the users $1, ..., U$ generates another estimate of the signals transmitted $\hat{x}_{t,u}$ (204-211),
• a step of calculating the parameters of the receiver which takes into account the presence of several users, where applicable with several transmission antennae, and optional estimates of the parameters of the channels between the antennae of the transmitters and the receiver,
• a step of flexible demodulation (105T) in which the estimation of the signal of each transmission antenna of each user is processed independently,
• a step of sequencing (311) the users to be decoded in accordance with a criterion based on the power of the signals received, or in accordance with a metric derived from the power of the signals received and the reliability of the configurations thereof, or in accordance with a metric based on the deviations of power and reliability between pairs of users.

21. Receiver comprising at least one antenna for receiving a signal transmitted by at least one transmitter, **characterised in that** it comprises at least:

• one processor which is configured to implement the method for improving the calculation of the symbols and their reliabilities according to any one of claims 1 to 20, the symbols being used for the modulation of a signal,
• a module for calculating the Gaussian likelihoods (304) having an outlet which is connected to a standardisation block (305B), whose output is connected to a second flexible estimation module (301),
• a second flexible estimation module (301) which transmits the estimates $\mu_m^{(\tau,s)}$ thereof directly to a Gaussian division module (306) and the reliabilities $\gamma_m^{(\tau,s)}$ thereof to a device which carries out an averaging (302) and whose output $\bar{\gamma}^{(\tau,s)}$ is connected to the Gaussian division module,
• an adaptive smoothing module (307) which is connected to the Gaussian division module and which provides the smoothed flexible estimates $\bar{x}^{(\tau,s+1)}$ and their variances $\bar{v}^{(\tau,s+1)}$.

22. Receiver according to claim 21, **characterised in that** it comprises a flexible demodulator which comprises at least the following elements:

• a module (300) for calculating the distributions a priori, having at the input likelihood ratios LLR a priori and having an output which is connected to a module (305A) for calculating distributions a posteriori and to the module (301) for calculating the flexible estimates,
• a second module (301) for calculation of flexible estimates, providing flexible estimates a priori $\bar{x}^{(\tau,0)}$, **characterised by** a mean reliability $\bar{x}^{(\tau,0)}$ (302).

23. Receiver according to either claim 21 or claim 22, **characterised in that** it comprises:
a selection module (303) which is configured to select the flexible estimates a priori $\bar{x}^{(\tau,0)}$ and their variance, or the smoothed flexible estimates $\bar{x}^{(\tau,s+1)}$ and their variance as a function of whether or not this is the first implementation (initialisation implementation) of the flexible demodulator which has at the input of the flexible demodulator the values of the likelihood ratios LLRs a priori corresponding to the flexible estimates a priori $\overline{x}^{(\tau,0)}$.

FIG.1

FIG.2

FIG.3

FIG.4

EP 3 528 443 B1

FIG.5

FIG.6

FIG.7

FIG.8

FIG.9

FIG.10

FIG.11

FIG.12

FIG.13

FIG.14

FIG.15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. CHEVALIER ; F. PIPON.** New Insigths into Optimal Widely Linear Array Receivers for the Demodulation of BPSK, MSK, and GMSK Signais corrupted by Noncircular Interferences - Application to SAIC. *IEEE Trans. on Signal Processing,* Mars 2006, vol. 54 (3), 870-883
- **M. TÜCHLER ; A. C. SINGER.** Turbo Equalization: An Overview. *IEEE Trans. Information Theory,* Février 2011, vol. 57 (2), 920-952
- **THOMAS MINKA.** Divergence measures and message passing. *Microsoft Research, MSR-TR-2005-173,* Décembre 2005
- **S. TEN BRINK ; J. SPEIDEL ; R.-H. YAN.** Iterative Demapping and Decoding for Multilevel Modulation. *IEEE GLOBECOM,* 1998
- **Q. WANG ; Q. XIE ; Z. WANG ; S. CHEN ; L. HAN-ZO.** A Universal Low-Complexity Symbol-to-Bit Soft Demapper. *IEEE Trans. On Vehicular Technology,* 2014
- **D. AURAS ; R. LEUPERS ; G. ASCHEID.** A Novel Class of Linear MIMO Detectors with Boosted Communications Performance: Algorithm and VLSI Architecture. *IEEE ISVLSI,* 2014
- **I. COLLINGS ; M. BUTLER ; M. MCKAY.** Low Complexity receiver design for MIMO bit-interleaved coded modulation. *IEEE ISSSTA,* 2004
- **N. BENVENUTO ; S. CICCOTOSTO ; S. TOMASIN.** Iterative Block Fractionally Spaced Nonlinear Equalization for Wideband Channels. *IEEE Wireless Communications Letters,* Octobre 2015, vol. 4 (5), 489-492
- **L. MARTOYO ; T. WEISS ; F. CAPAR ; F.K. JONDRAL.** Low Complexity CDMA Downlink Receiver based on Frequency Domain Equalization. *IEEE VTC'03 Fall,* 2003
- **T. OBARA ; F. ADACHI.** MMSE Weight for Single Carrier Overlap FDE. *Proc. IEEE Asia Pacific Conférence on Communications,* 2011
- **S. TOMASIN.** Overlap and save frequency domain DFE for throughput efficient single carrier transmission. *IEEE PIMRC,* 2005
- **S.-R. LEE ; F.-B. UENG ; H.-F. WANG ; Y.-K. CHANG.** Iterative multiuser détection for LDPC MIMO SC-FDMA communication systems. *Wiley Trans Emerging Tel Tech.,* 15 Janvier 2014
- **N. BENVENUTO ; S. TOMASIN.** Iterative Design and Détection of a DFE in the Frequency Domain. *IEEE Trans. on Commun.,* Novembre 2005, vol. 53 (11), 1867-1875
- Iterative détection of MIMO signais with linear detectors. **M. WITZKE ; S. BÄRO ; F. SCHRECKENBACH ; J. HAGENAUER.** Proc. Asilomar Conférence on Signais, Systems and Computers (ACSSC). IEEE, Novembre 2002
- **I. SANTOS ; J. J. MURILLO-FUENTES ; R. BOLOIX-TORTOSA ; E. A. DE REYNA ; P. M. OLMOS.** Expectation propagation as turbo equalizer in ISI channels. *IEEE Trans. Commun.,* Janvier 2017, vol. 65 (1), 360-370
- **K. WU ; G. REN ; X. MENG ; J. WU ; Q. WANG.** Spectral-Efficient Band Allocation Scheme for Frequency-Domain Pulse Shaping-Based SC-FDMA Systems. *IEEE Transactions on Vehicular Technology,* Septembre 2017, vol. 66 (9), 8249-8262
- **I. SANTOS ; J. J. MURILLO-FUENTES ; P. M. OLMOS.** Block expectation propagation equalization for ISI channels. *23rd European signal processingconference (EUSIPCO 2015),* 31 Août 2015, 379-383